(19) Europäisches Patentamt
European Patent Office
Office européen des brevets

(11) **EP 4 231 041 A2**

(12) **EUROPEAN PATENT APPLICATION**

(43) Date of publication:
**23.08.2023 Bulletin 2023/34**

(21) Application number: **23157299.1**

(22) Date of filing: **17.02.2023**

(51) International Patent Classification (IPC):
**G01S 5/02** (2010.01)

(52) Cooperative Patent Classification (CPC):
**G01S 5/0278**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.02.2022 US 202263311325 P**
**18.02.2022 US 202263311728 P**

(71) Applicant: **Intel Corporation**
**Santa Clara, CA 95054 (US)**

(72) Inventors:
• **HAN, Seung Hee**
**San Jose, CA 95120 (US)**

• **KHORYAEV, Alexey**
**NIZ 603105 Nizhny Novgorod (RU)**
• **LOMAYEV, Artyom**
**NIZ 603024 Nizhny Novgorod (RU)**
• **SOSNIN, Sergey D.**
**NIZ 606520 Zavolzhie (RU)**
• **MONDAL, Bishwarup**
**San Ramon, CA 94583 (US)**

(74) Representative: **Viering, Jentschura & Partner mbB**
**Patent- und Rechtsanwälte**
**Am Brauhaus 8**
**01099 Dresden (DE)**

(54) **HIGH PERFORMANCE POSITIONING FOR WIRELESS COMMUNICATION USING ARTIFICIAL NEURAL NETWORKS**

(57) An apparatus for a wireless communication device includes a radio frequency (RF) circuitry; one or more processors coupled the RF circuitry and configured to obtain an input vector and implement a feature extraction network to extract a plurality of wireless network parameters using the input vector; and provide the plurality of extracted wireless network parameter to a coordinate inference network determine coordinates for a user equipment device.

FIG. 2

EP 4 231 041 A2

**Description**

Related Applications

This application claims priority to US Patent Application 63/311,325, filed on February 17, 2022 and to US Patent Application 63/311728, filed on February 18, 2022, the contents of the above applications are incorporated by reference herein.

Technical Field

Various embodiments generally may relate to the field of wireless communications.

Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:

FIG. **1** shows an example of a NR positioning architecture according to various aspects of the present disclosure.
FIG. **2** shows examples of network-based positioning methods including measurement and reporting according to various aspects of the present disclosure.
FIG. **3** shows an example of Multi-RTT positioning measurements according to various aspects of the present disclosure.
FIG. **4** shows an example of a UE-based positioning method including measurements and reporting according to various aspects of the present disclosure.
FIG. **5** show an example of a $1^{th}$ TRP subnet architecture for DL positioning method according to various aspects of the present disclosure.
FIG. **6** shows an example of an artificial neural network architecture for DL positioning method for a single gNB case according to various aspects of the present disclosure.
FIG. **7** shows an example of $1^{th}$ TRP subset architecture for UL positioning method according to various aspects of the present disclosure.
FIG. **8** shows an example of an artificial neural network architecture for UL positioning method for a single gNB case according to various aspects of the present disclosure.
FIG. **9** shows an example of $1^{th}$ TRP subnet architecture for DL and UL (Multi-RTT) positioning method according to various aspects of the present disclosure.
FIG. **10** shows an example of an artificial neural network architecture for DL and UL (Multi-RTT) positioning method for a single gNB case according to various aspects of the present disclosure.
FIG. **11** shows an example of a generalized artificial neural network architecture for positioning for multiple gNBs according to various aspects of the present disclosure an exemplary software and hardware layer diagram according to some aspects.
FIG. **12** shows an example of a distributed artificial neural architecture for positioning according to various aspects of the present disclosure.
FIG. **13** an example of a network-based centralized artificial neural network architecture for positioning according to various aspects of the present disclosure.
FIG. **14** shows an example of a network-based federated artificial neural network architecture for positioning according to various aspects of the present disclosure.
FIG. **15** shows an example of a network-based distributed artificial neural network architecture for positioning according to various aspects of the present disclosure.
FIG. **16** shows an example of a LTE-based federated artificial neural network architecture for positioning according to various aspects of the present disclosure.
FIG. **17** shows an example of coordinate estimation using azimuth and zenith angle of arrival or departure according to various aspects of the present disclosure.
FIG. **18** shows an example of a coordinate inference network with feedforward inference and its connection to feature extraction network according to various aspects of the present disclosure.
FIG. **19** shows an example of a m*th* of a distance-based coordinate inference network according to various aspects of the present disclosure.
FIG. **20** shows an example of a recursive distance-based coordinate inference network according to various aspects of the present disclosure.

FIG. **21** shows an example of an unrolled distance-based coordinate inference architecture with skip connection link according to various aspects of the present disclosure.

FIG. **22** shows a *mth* of a distance difference-based coordinate inference network according to various aspects of the present disclosure.

FIG. **23** shows a recursive distance difference-based coordinate inference network according to various aspects of the present disclosure.

FIG. **24** shows an unrolled distance difference-based coordinate inference architecture with skip connection link according to various aspects of the present disclosure.

FIG. **25** shows an example of an angle-based coordinate inference network according to various aspects of the present disclosure.

FIG. **26** shows an example of a recursive angle-based coordinate inference network according to various aspects of the present disclosure.

FIG. **27** shows an example of an unrolled angle-based coordinate inference network with skip connection link according to various aspects of the present disclosure.

FIG. **28** shows an example of a coordinate inference network with backward inference and its connection to feature extraction network according to various aspects of the present disclosure.

FIGS. **29a** and **29b** respectively show an example of a distance-based coordinate inference unit and an example of a distance-based coordinate inference network according to various aspects of the present disclosure.

FIGS. **30a** and **30b** respectively show an example of a distance difference-based coordinate inference unit and an example of a distance difference-based coordinate inference network according to various aspects of the present disclosure.

FIG. **31** shows an example a distance difference-based coordinate inference network with alternative architecture according to various aspects of the present disclosure.

FIGS. **32a** and **32b** respectively show an example of an angle-based coordinate inference unit and an example of an angle-based coordinate inference network according to various aspects of the present disclosure.

FIG. **33** show an example of a network according to various aspects of the present disclosure.

FIG. **34** show a schematic illustration of a wireless network according to various aspects of the present disclosure.

FIG. **35** shows a block diagram illustrating components according to various aspects of the present disclosure.

FIGS. **36-37** shows flow diagrams according to various aspects of the present disclosure.

Description

The following description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A or B" and "A/B" mean (A), (B), or (A and B).

The following description may make refer to following references:

- [1] Discussion on RAN Rel-18 Package
- [2] 3GPP TS 38.455 "NR Positioning Protocol A (NRPPa)," Release 16, v16.1.0, Sep 2020
- [3] 3GPP TS 37.355 "LTE Positioning Protocol (LPP)," Release 16, v16.1.0, Jul 2020
- [4] 3GPP TS 38.331 "Radio Resource Control (RRC) protocol specification," Release 16, v16.4.1, Mar 2021
- [5] RP-21399 New SI: Study on Artificial Intelligence (AI)/Machine Learning (ML) for NR Air Interface

The Study Item (SI) on the Artificial Intelligence (AI) air interface has been included into the scope of the third generation partnership project (3GPP) Release-18 (Rel.18) specifications, [1]. The beam management, Channel State Information (CSI) feedback compression, and positioning use cases are considered among the others as the directions for future 3GPP study.

Embodiments herein relate to an Artificial Neural Network (ANN) architecture for the downlink (DL), uplink (UL), and DL+UL (Multi-RTT) positioning methods in cellular networks/wireless communication systems. The ANN for positioning may include Feature Extraction (FE) and Coordinate Inference (CI) networks using the flatten layer as an interface between the FE and CI networks.

Embodiments herein relate to different types of ANN architectures including the distributed, network (NW)-based, and user equipment (LTE)-based architectures for user positioning in cellular systems. Embodiments may define how the ANN components are mapped into the entities of the positioning architecture of cellular networks.

Embodiments may improve positioning accuracy and performance of NR (5G-Advanced) communication systems. Embodiments may further enable flexible AI based positioning procedures for new radio (NR) (fifth generation (5G)-Advanced)/sixth generation (6G) communication systems. The following methods and devices use in-vehicle passenger monitoring data which is captured with a one or more in-vehicle data acquisition devices (e.g. a camera providing RGB, depth, and/or infrared data) and apply a spatio-temporal analysis modeling scheme to trigger vehicular actions. These methods and devices provide accurate and quick mechanisms to recognize a driver's state, for example, in order to take precautionary measures, such as providing an appropriate distance from a vehicle located in front or providing a notification to the driver of the vehicle. Each recognized state may be associated with a corresponding time value which reflects the driver's reaction time. Based on this time value, a theoretical safe distance to any externally detected objects (e.g. other vehicles) may be calculated and the appropriate vehicular action may be triggered.

**Legacy NR Positioning Architecture**

In this section we provide a brief review of the legacy NR positioning architecture, positioning methods, and general approach for the coordinates inference.

A. NR Positioning Architecture

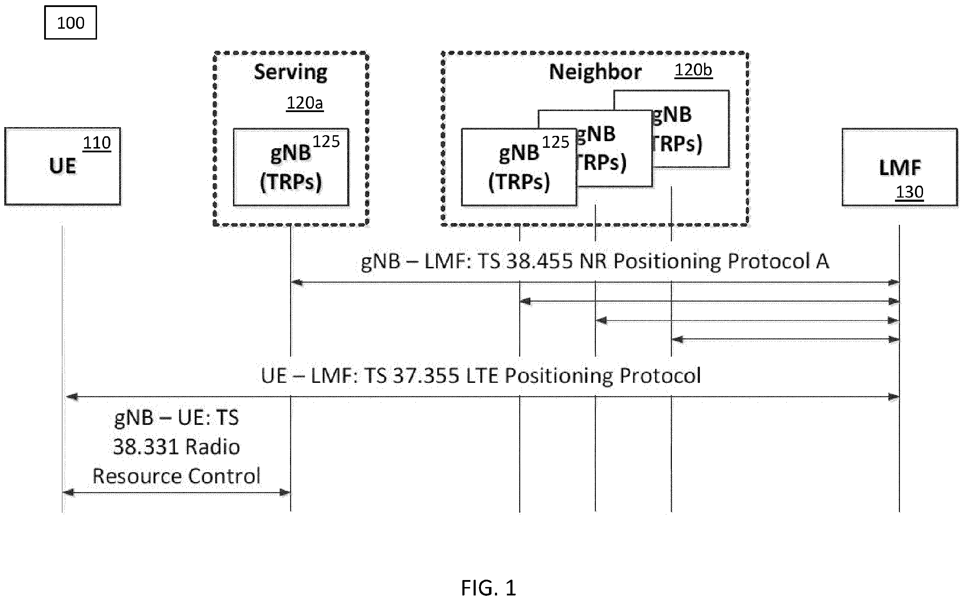

The NR positioning architecture 100 may include the four main entities shown in FIG. 1, including LTE 110, serving base station (Next Generation Node B (gNB)) 120a, single or multiple neighbor gNBs 120b, and Location Management Function (LMF) entity 130.

As shown in FIG. 1, the interactions between gNB (NG-RAN node) 120a/120b and LMF 130, LTE 110 and LMF 130, and LTE 110 and gNB 120a/120b (120) are defined by the NR Positioning Protocol A (NRPPa), Long Term Evolution (LTE) Positioning Protocol (LPP), and Radio Resource Control (RRC) protocols, respectively, references [2] - [4].

The serving 120a and neighbor gNB 120b can be equipped with a single or multiple Transmission Reception Points (TRPs) 125. Each TRP 125 may be equipped with a multi-element Phased Antenna Array (PAA) with known coordinates and orientation in space.

A LTE 110 has unknown coordinates, that need to be estimated based on the timing and angular measurements acquired with several TRPs 125. The measurements are performed using Uplink Sounding Reference Signal (UL-SRS) transmitted by a LTE and received by the multiple TRPs and Downlink-Positioning Reference Signal (DL-PRS) transmitted by the TRPs 125 and received by a UE 110.

The Positioning Reference Unit (PRU) is introduced as a special type of the LTE 110, which has known coordinates and antenna orientation in space and used for calibration purposes. Two types of calibration can be performed, including the timing errors (based on known location) and angular errors calibration (based on known antenna orientation in space).

The Location Management Function (LMF) entity 130 represents a centralized node (e.g., network server), that receives measurements and assistance data from the serving and neighbor gNBs 125 and LTE(s) 110. Based on the provided measurements and known TRP coordinates, it can compute the unknown coordinates of the LTE 110, which is referred to as a Network-based (NW-based) positioning.

In another implementation a LTE 110 can receive the TRP 125 coordinates as an assistance data from the LMF 130 and can estimate the coordinates itself, which is referred to as a LTE-based positioning.\

B. Positioning Methods

The NR positioning methods can be classified based on the types of measurements performed using downlink (DL), uplink (UL) and a combination of DL and UL methods. Table 1 provides a summary of the positioning methods for the NW-based and LTE-based positioning.

Table 1: Summary of positioning methods

|  | **NW-based** | **UE-based** |
|---|---|---|
| DL | (DL-TDOA, DL-AOD)** | (DL-TDOA, DL-AOD) |
| UL | (UL-TDOA, UL-AOA) | --* |

(continued)

| | NW-based | UE-based |
|---|---|---|
| DL+UL | Multi-RTT | --* |

\* - LTE-based UL and DL+UL methods may not be supported by the legacy versions of the 3GPP NR standard
\*\* - DL NW-based method is also known as UE-assisted positioning

For the NW-based positioning all three methods, including the DL, UL, and DL+UL are supported, however, for the UE-based positioning only DL methods are defined by the legacy version of the 5G standard (Rel-17).

The DL positioning methods include the Downlink Time Difference of Arrival (DL-TDOA) and Downlink Angle of Departure (DL-AOD) positioning methods. The first method uses timing measurements, and the second method uses angular measurements to compute the LTE coordinates.

Similar, the UL positioning methods include the Uplink Time Difference of Arrival (UL-TDOA) and Uplink Angle of Arrival (UL-AOA) positioning methods.

The DL+UL positioning supports Multiple Round Trip Time Measurements (Multi-RTT), and then uses these measurements to estimate the LTE coordinates.

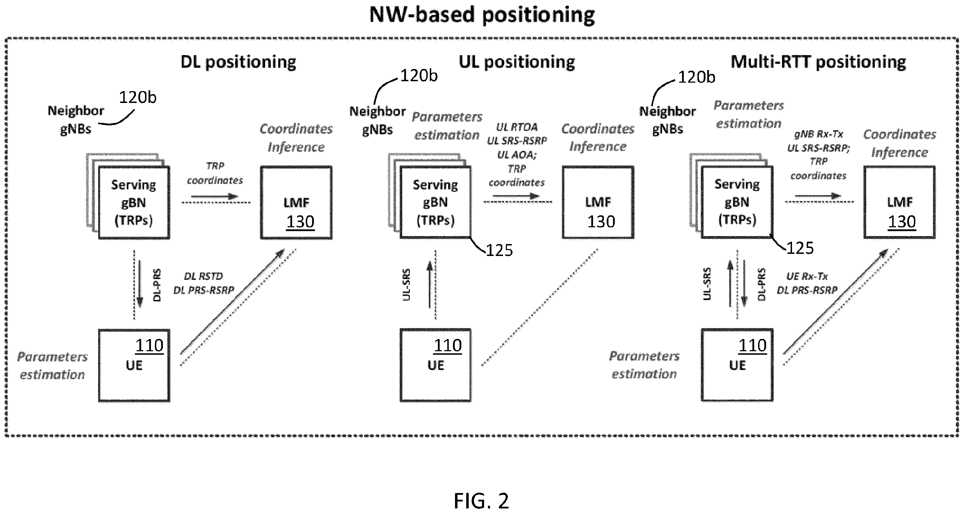

FIG. 2 shows an example of signal transmission, measurements and reporting for the NW-based positioning.

**For the DL NW-based positioning:**

- Serving and neighbour gNBs 125 transmit the DL PRS signal to the LTE 110
- LTE 110 performs measurements and reports them to the LMF 130:

    ◦ Downlink Reference Signal Time Difference (DL-RSTD)
    ◦ Downlink PRS Reference Signal Received Power (DL PRS-RSRP)

- Serving and neighbour gNBs 125 report their TRP coordinates to the LMF 1301
- LMF 130 performs LTE coordinates estimation using obtained measurements and known TRP coordinates

In case of the DL-TDOA positioning method, LTE 110 performs DL-RSTD measurements in the form:

$$T_{DL-RSTD,l} = T_{RX,l} - T_{RX,ref} \qquad (1)$$

where $T_{RX,l}$ is the receive time for the $l^{th}$ TRP 125 and $T_{RX,ref}$ is the receive time for the reference TRP (serving or neighbour).

In case of the DL-AOD positioning method, LTE 110 performs DL PRS-RSRP measurements and corresponding spatial direction information is used to extract the azimuth and zenith angles as follows:

$$\left( \varphi_{AOD,l}, \vartheta_{AOD,l} \right) \qquad (2)$$

where $\varphi_{AOD,l}$ is the azimuth angle of departure for the $l^{th}$ TRP and $\theta_{AOD,l}$ is the zenith angle of departure for the $l^{th}$ TRP as measured at the LTE.

**For the UL NW-based positioning:**

• LTE 110 transmits the UL SRS signal to the serving and neighbour gNBs 120
• Serving and neighbour gNBs 120 perform measurements and report them to the LMF 130:

    ◦ Uplink Relative Time of Arrival (UL-RTOA)
    ◦ Uplink Angle of Arrival (UL-AOA)
    ◦ Uplink SRS Reference Signal Received Power (UL SRS-RSRP)

• Serving and neighbour gNBs 120 report their TRP coordinates to the LMF 130
• LMF 130 performs LTE coordinates estimation using obtained measurements and known TRP coordinates

In case of the UL-TDOA positioning method, gNB 120 performs UL-RTOA measurements in the form:

$$T_{UL-RTOA,l} = T_{RX,l} - T_{ref}$$  (3)

where $T_{RX,l}$ is the receive time for the $l$th TRP 125 and $T_{ref}$ is the RTOA reference time (common for all TRPs).

In case of the UL-AOA positioning method, gNB 120 performs azimuth and zenith angles of arrival estimation as follows:

$$\left( \varphi_{AOA,l}, \vartheta_{AOA,l} \right)$$  (4)

where $\varphi_{AOA,l}$ is the azimuth angle of arrival for the $l$th TRP 125 and $\theta_{AOA,l}$ is the zenith angle of arrival for the $l$th TRP.

**For the Multi-RTT positioning:**

- Serving and neighbour gNBs 120 transmit the DL PRS to the LTE 110
- LTE 110 performs measurements and reports them to the LMF 130:

  ○ LTE Reception (Rx)-Transmission (Tx) time difference
  ○ DL PRS-RSRP

- LTE 110 transmits the UL SRS to the serving and neighbour gNBs 120
- Serving and neighbour gNBs 120 perform measurements and report them to the LMF 130:

  ○ gNB Rx-Tx time difference
  ○ UL SRS-RSRP

- Serving and neighbour gNBs 120 report their TRP coordinates to the LMF 130
- LMF 130 performs LTE coordinates estimation using obtained measurements and known TRP coordinates

In case of the Multi-RTT positioning method, LTE performs the LTE Rx-Tx time difference measurements in the form:

$$T_{UE\ RX-TX,l} = T_{UE-RX,l} - T_{UE-TX,l}$$  (5)

where $T_{UE-TX,l}$ is the transmit time for the $l$th TRP 125 and $T_{UE-RX,l}$ is the receive time for the $l$th TRP 125.

The gNB 120 performs gNB Rx-Tx time difference measurements in the form:

$$T_{gNB\ RX-TX,l} = T_{gNB-RX,l} - T_{gNB-TX,l}$$  (6)

where $T_{gNB-TX,l}$ is the transmit time for the $l$th TRP 125 and $T_{gNB-RX,l}$ is the receive time for the $l$th TRP 125.

Finally, the LMF can estimate the propagation time between the LTE and the $l$th TRP as follows:

$$T_l = \frac{1}{2}\left( T_{UE\ RX-TX,l} + T_{gNB\ RX-TX,l} \right)$$  (7)

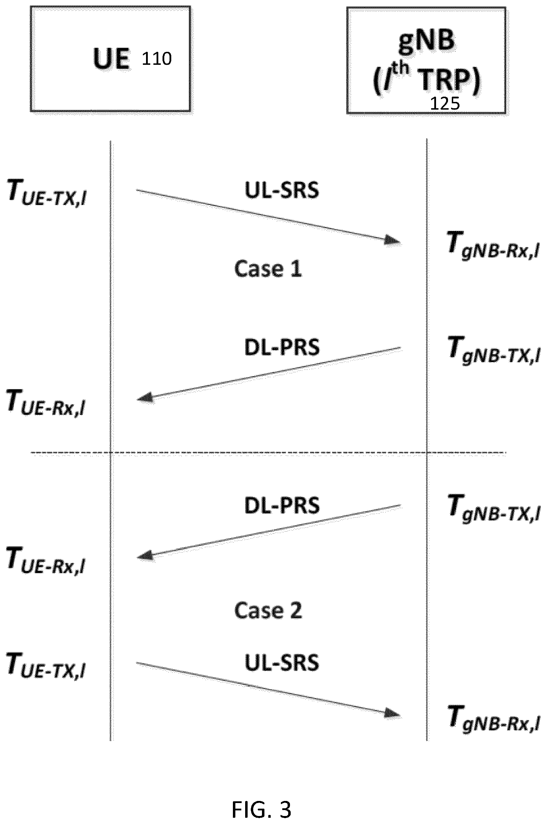

FIG. 3 illustrates the measurements and addresses two cases when the UL SRS is transmitted first and DL PRS is the second (case 1) and in opposite order (case 2).

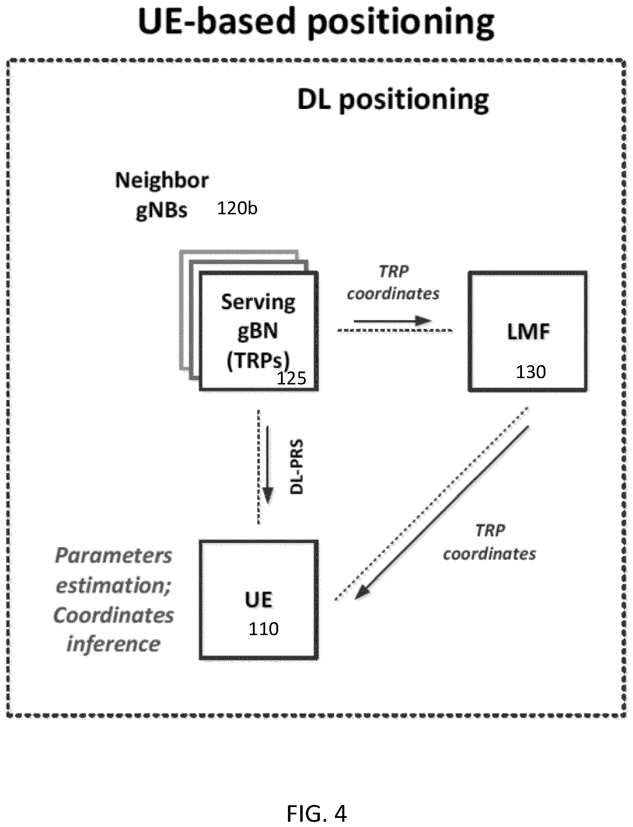

FIG. 4 shows an example of signal transmission, measurements and reporting for the LTE-based positioning.

**For the UE-based positioning:**

- Serving and neighbour gNBs 120 transmit the DL PRS signal to the LTE 110
- LTE performs measurements

  ◦ Downlink Reference Signal Time Difference (DL-RSTD)
  ◦ Downlink PRS Reference Signal Received Power (DL PRS-RSRP)

- Serving and neighbour gNBs 120 report their TRP coordinates to the LMF 130
- LMF 130 reports the TRP coordinates to the LTE 110
- LTE 110 performs its coordinates estimation using the obtained measurements and known TRP coordinates

## C. Coordinates Inference

The method for computation of the LTE coordinates is not specified in the standard, but in the typical implementation LMF/LTE solves a set of non-linear positioning equations with respect to the unknown LTE coordinates.

In case of the DL-TDOA and DL-AOD positioning methods, LMF/LTE solves the following set of the non-linear equations:

$$\begin{cases} \sqrt{\left(x-x_l\right)^2+\left(y-y_l\right)^2+\left(z-z_l\right)^2}-\sqrt{\left(x-x_{ref}\right)^2+\left(y-y_{ref}\right)^2+\left(z-z_{ref}\right)^2}=\Delta d_l \\ \dfrac{\left(y-y_l\right)}{\sqrt{\left(x-x_l\right)^2+\left(y-y_l\right)^2}}=\sin\left(\varphi_{AOD,l}\right) \\ \dfrac{\left(z-z_l\right)}{\sqrt{\left(x-x_l\right)^2+\left(y-y_l\right)^2+\left(z-z_l\right)^2}}=\cos\left(\vartheta_{AOD,l}\right) \\ l=0,1,\dots N_l-1 \end{cases} \quad (8)$$

where $(x, y, z)$ are the unknown coordinates of the LTE 110 to be estimated, $(x_l, y_l, z_l)$ are the known coordinates of the $l$th TRP 125, $\Delta d_l$ is the distance difference defined as $\Delta d_l = c \times T_{DL\text{-}RSTD,l}$, $c$ is the speed of light constant, $\varphi_{AOD,l}$ is the azimuth angle of departure, $\theta_{AOD,l}$ is the zenith angle of departure, and $N_l$ is the total number of TRPs.

In case of the UL-TDOA and UL-AOA positioning methods, LMF 130 solves the following set of the non-linear equations:

$$\begin{cases} \sqrt{\left(x-x_l\right)^2+\left(y-y_l\right)^2+\left(z-z_l\right)^2}-\sqrt{\left(x-x_{ref}\right)^2+\left(y-y_{ref}\right)^2+\left(z-z_{ref}\right)^2}=\Delta d_l \\ \dfrac{\left(y-y_l\right)}{\sqrt{\left(x-x_l\right)^2+\left(y-y_l\right)^2}}=\sin\left(\varphi_{AOA,l}\right) \\ \dfrac{\left(z-z_l\right)}{\sqrt{\left(x-x_l\right)^2+\left(y-y_l\right)^2+\left(z-z_l\right)^2}}=\cos\left(\theta_{AOA,l}\right) \\ l=0,1,\dots,N_l-1 \end{cases} \quad (9)$$

where $(x, y, z)$ are the unknown coordinates of the LTE 110 to be estimated, $(x_l, y_l, z_l)$ are the known coordinates of the $l$th TRP 125, $\Delta d_l$ is the distance difference defined as $\Delta d_l = c \times (T_{UL\text{-}RTOA,l} - T_{UL\text{-}RTOA,ref})$, $c$ is the speed of light constant, $\varphi_{AOA,l}$ is the azimuth angle of arrival, $\theta_{AOA,l}$ is the zenith angle of arrival, and $N_l$ is the total number of TRPs.

Note, that in (8) and (9) other trigonometric functions of $(\varphi_{AOD,l}, \theta_{AOD,l})$ and $(\varphi_{AOA,l}, \theta_{AOA,l})$ can be used in the positioning equations and this particular choice is considered as an example.

In case of the Multi-RTT positioning method, LMF 130 solves the following set of the non-linear equations:

$$\begin{cases} \sqrt{\left(x-x_l\right)^2 + \left(y-y_l\right)^2 + \left(z-z_l\right)^2} = d_l \\ l = 0,1,...,N_l - 1 \end{cases} \tag{10}$$

where $(x, y, z)$ are the unknown coordinates of the LTE to be estimated, $(x_l, y_l, z_l)$ are the known coordinates of the $l$th TRP 125, $d_l$ is the distance defined as $d_l = c \times T_l$, $c$ is the speed of light constant and $T_l$ is defined in (7), and $N_l$ is the total number of TRPs.

The solution of (8), (9), and (10) can be found applying Gauss-Newton iterative method.

**Example Artificial Neural Network Architecture for Positioning**

In this section we describe embodiments that include an Artificial Neural Network (ANN) architecture for the DL, UL, and DL+UL (Multi-RTT) positioning. The ANN for positioning may include Feature Extraction (FE) and Coordinate Inference (CI) networks using the flatten layer as an interface between the FE and CI networks.

A. DL Positioning Architecture

The Feature Extraction (FE) network may include $N_l$ TRP subnets (subnetworks), where the $l$th TRP subnet takes $\mathbf{v}_l(i)$ data vector as an input and produces a tuple of global features including one or a combination of following:

- the receive time $T_{RX,l}$
- azimuth and zenith angles of departure ($\varphi_{AOD,l}$, $\theta_{AOD,l}$)
- the Line of Sight / Non-Line of Sight (LOS/NLOS) indicator $u_l$.
- other output data formats are not precluded

The tuple of extracted features can be used for DL-TDOA, DL-AOD or other DL positioning methods.

The $u_l$ indicator is distributed in the range [0, 1], where $u_l = 1$ indicates a pure LOS channel and $u_l = 0$ indicates a pure NLOS channel. The absolute value of $u_l$ indicates the probability of LOS/NLOS classification decision.

The input vector $\mathbf{v}_l(i)$ can be one or a combination of the following:

- $\mathbf{v}_l(i) = \mathbf{h}_{0,l}(i)$ is the channel impulse response(s) of the first path in time domain
- $\mathbf{v}_l(i) = \mathbf{h}_l(i)$ is the channel impulse response(s) in time domain
- $\mathbf{v}_l(i) = \mathbf{H}_l(i)$ is the channel frequency response(s)
- $\mathbf{v}_l(i) = \mathbf{r}_l(i)$ is the receive waveform(s) in time domain
- $\mathbf{v}_l(i) = \mathbf{R}_l(i)$ is the receive waveform(s) in frequency domain
- other input data formats are not precluded

The global feature defines a principal component providing an independent measurement for the corresponding positioning equation in the system of non-linear equations (8).

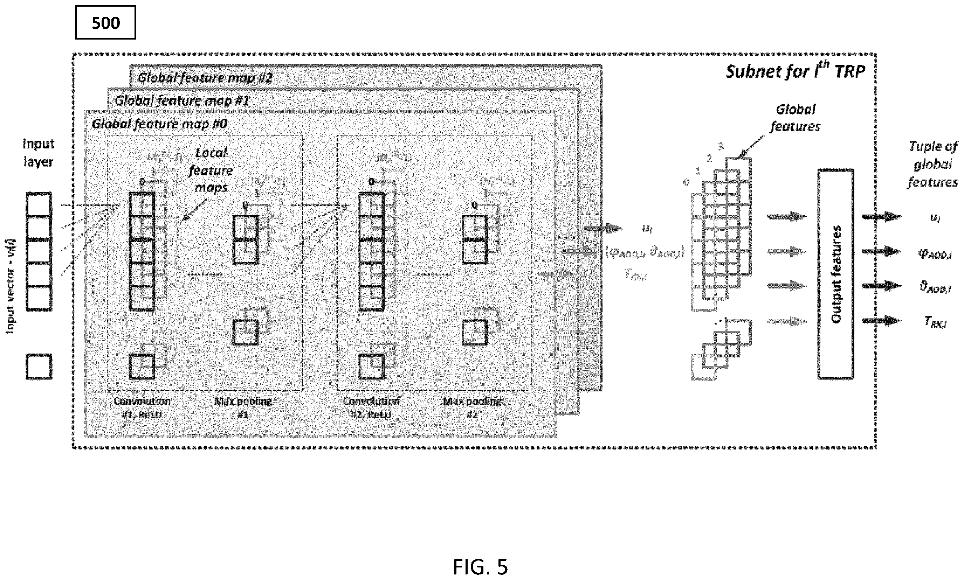

FIG. 5 shows an example of the described lth TRP subnet architecture 500 for the DL positioning method.

The TRP subnet 500 may include the number of global feature maps, where each global feature map is responsible for the global feature extraction. The global feature map is a Convolutional Neural Network (CNN) composed of the number of convolutional and max-pooling layers, possibly accompanied by the batch normalization in between. The convolutional neural network is connected to the fully-connected layers at the end for the global features extraction.

The convolutional layer may include the number of local feature maps, where each local feature map is responsible for the local feature extraction. The max-pooling layer passes through the meaningful features and discards the features of less importance based on the activation signal strength.

In FIG. 5, the TRP subnet 500 may include three global feature maps corresponding to the global features $T_{RX,l}$, ($\varphi_{AOD,l}$, $\theta_{AOD,l}$), and $u_l$ discussed above. The tuple of four variables ($T_{RX,l}$, $\varphi_{AOD,l}$, $\theta_{AOD,l}$, $u_l$) is supplied as an input to the Coordinate Inference (CI) network. Note that in another implementation the azimuth and zenith angles ($\varphi_{AOD,l}$, $\theta_{AOD,l}$) can be derived independently using two different global feature maps. In that case, the total number of global feature maps in FIG. 5 can be extended to four. In other embodiments additional global feature maps corresponding to other signal location parameters can be added (e.g., the received time and angles of departure for multipath/additional path components, etc.).

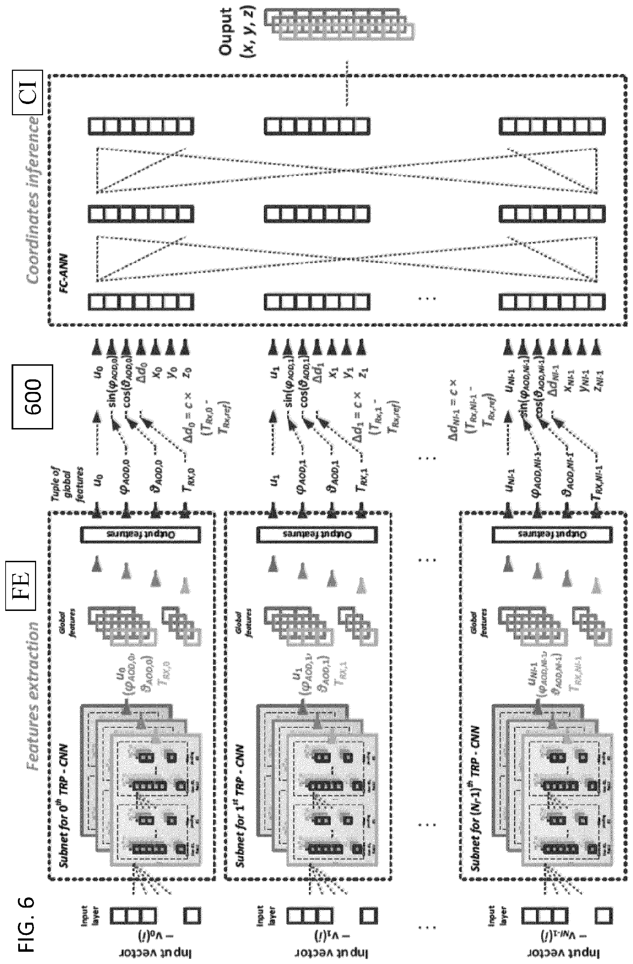

FIG. 6 shows an example artificial neural network architecture for the DL positioning method for a single gNB case.

The artificial neural network for positioning may include the Feature Extraction (FE) and Coordinate Inference (CI) networks.

The FE network may include $N_l$ TRP subnets with an architecture 500 shown in FIG. 5. The extracted $T_{RX,l}$ values are converted into the DL-RSTD values $T_{DL-RSTD,l}$ by subtracting the $T_{RX,ref}$ from all the receive timing values as defined in (1). Then the $T_{DL-RSTD,l}$ is weighted by the speed of light constant c to produce the distance difference $\Delta d_l$. The extracted $(\varphi_{AOD,l}, \theta_{AOD,l})$ values are converted to the corresponding sine and cosine functions ($\sin(\varphi_{AOD,l})$, $\cos(\theta_{AOD,l})$).

The tuple of estimated global features ($u_l$, $\Delta d_l$, $\sin(\varphi_{AOD,l})$, $\cos(\theta_{AOD,l})$) is supplemented with the ground truth global features corresponding to the known TRP coordinates ($x_l$, $y_l$, $z_l$). In total, the number of global features is equal to $N_l \times 7$ forming the input to the CI network.

The CI network can be a Fully Connected Artificial Neural Network (FC-ANN) used to solve the set of the non-linear equations (8). The output of the CI is the estimated coordinates ($x$, $y$, $z$) of the LTE.

In one embodiment, input vector $\mathbf{v}_l(i)$ can be reported by LTE to gNB or LMF so that gNB or LMF perform both feature extraction and coordinate inference. This approach may imply significant overhead in report. In another embodiment, LTE can use NN to perform global feature extraction ($T_{RX,l}$, $\varphi_{AOD,l}$, $\theta_{AOD,l}$, $u_l$) and report extracted features for each TRP to gNB or LMF that can implement coordinate inference. In another embodiment, LTE 110 can implement both feature extraction and coordinate inference network to estimate its coordinate.

B. UL Positioning Architecture

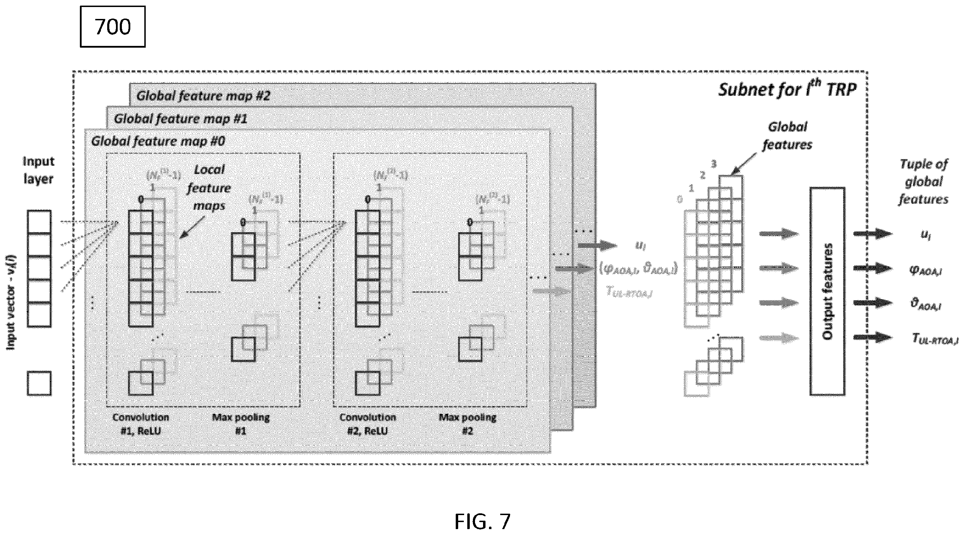

FIG. 7 shows an example $l^{th}$ TRP subnet architecture 700 for the UL positioning method.

The $l^{th}$ TRP architecture used for UL positioning method is similar to one used for the DL positioning and shown in FIG. 5.

In FIG. 7, the TRP subnet may include three global feature maps corresponding to the global features $T_{UL-RTOA,l}$, ($\varphi_{AOA,l}$, $\theta_{AOA,l}$), and $u_l$ discussed above. The tuple of four variables ($T_{UL-RTOA,l}$, $\varphi_{AOA,l}$, $\theta_{AOA,l}$, $u_l$) is supplied as an input to the Coordinate Inference (CI) network. Note that in another implementation the azimuth and zenith angles ($\varphi_{AOA,l}$, $\theta_{AOA,l}$) can be derived independently using two different global feature maps. In that case, the total number of global feature maps in FIG. 7 can be extended to four. In other embodiments additional global feature maps corresponding to other signal location parameters can be defined (e.g., the received time and angles of arrivals for multipath (additional path) components, etc.).

The tuple of extracted features can be used for UL-TDOA, UL-AOA or other UL positioning methods.

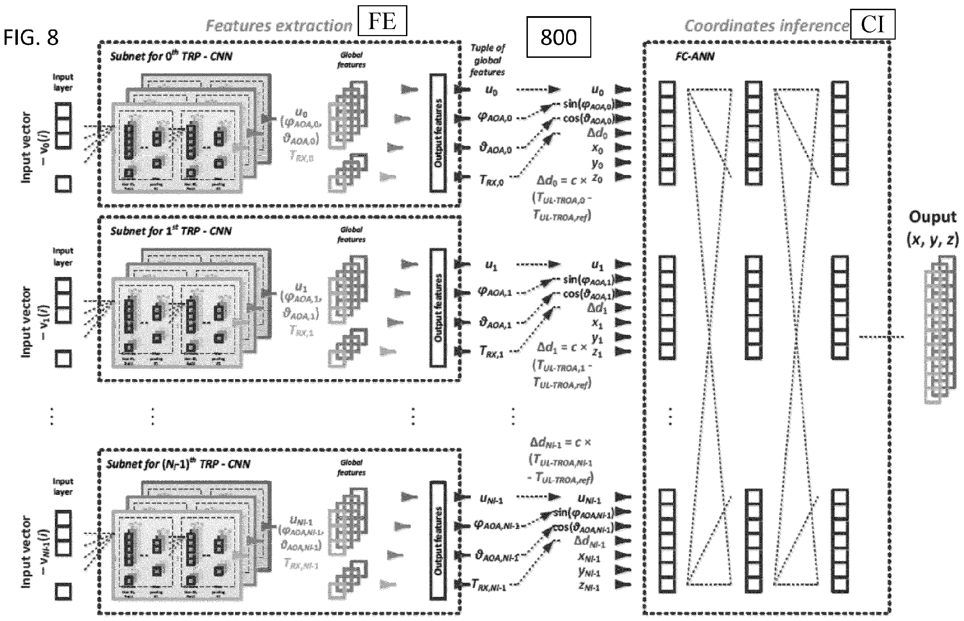

FIG. 8 shows an example ANN architecture 800 for the UL positioning method for a single gNB case.

The FE network may include $N_l$ TRP subnets with an architecture shown in FIG. 7. The extracted $T_{UL-RTOA,l}$ values are converted into the relative time difference as ($T_{UL-RTOA,l} - T_{UL-RTOA,ref}$) by subtracting the $T_{UL-RTOA,ref}$ from all UL-RTOA time values. Then the ($T_{UL-RTOA,l} - T_{UL-RTOA,ref}$) is weighted by the speed of light constant c to produce the distance difference $\Delta d_l$. The extracted ($\varphi_{AOA,l}$, $\theta_{AOA,l}$) values are converted to the corresponding sine and cosine functions ($\sin(\varphi_{AOA,l})$, $\cos(\theta_{AOA,l})$).

The tuple of estimated global features ($u_l$, $\Delta d_l$, $\sin(\varphi_{AOA,l})$, $\cos(\theta_{AOA,l})$) is supplemented with the ground truth global features corresponding to the known TRP coordinates ($x_l$, $y_l$, $z_l$). In total, the number of global features is equal to $N_l \times 7$ forming the input to the CI network.

The CI network can be a Fully Connected Artificial Neural Network (FC-ANN) used to solve the set of the non-linear equations (9). The output of the CI is the estimated coordinates ($x$, $y$, $z$) of the LTE 110.

In one embodiment, input vector $\mathbf{v}_l(i)$ can be reported by TRP 125 to gNB 120 or LMF 130 so that gNB 120 or LMF 130 perform both feature extraction and coordinate inference. In another embodiment, TRP can use NN to perform feature extraction ($T_{RX,l}$, $\varphi_{AOD,l}$, $\theta_{AOD,l}$, $u_l$) and report extracted features for each positioned LTE 110 to gNB 120 or LMF 130 that can implement coordinate inference by collecting extracted features from all TRPs 125 or gNBs 120 respectively. In another embodiment, TRPs 125 can exchange information on extracted features and perform LTE coordinate inference.

C. DL + UL (Multi-RTT) Positioning Architecture

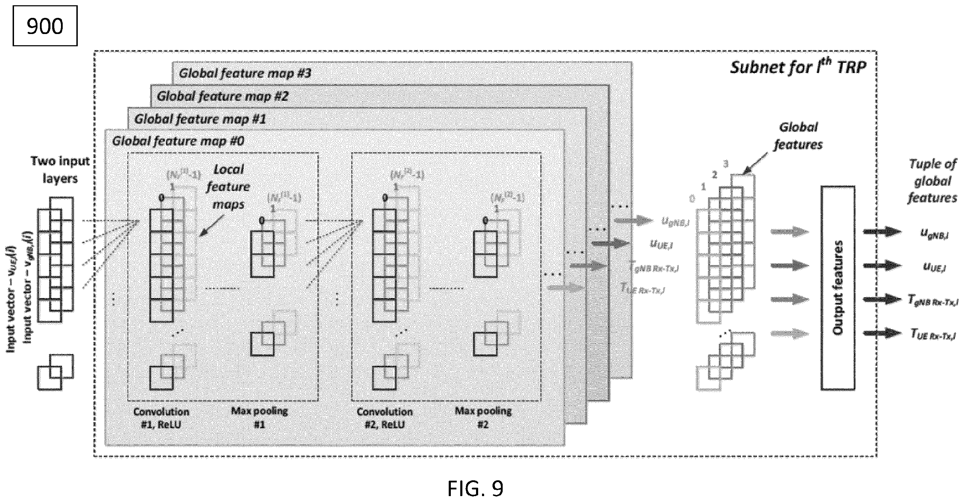

FIG. 9 shows an example $l^{th}$ TRP subnet architecture 900 for the DL+UL (Multi-RTT) positioning method.

In FIG. 9, the TRP subnet may include four global feature maps corresponding to the global features $T_{UE RX-TX,l}$, $T_{gNB RX-TX,l}$, $u_{UE,l}$, and $u_{gNB,l}$ discussed above. The tuple of four variables ($T_{UE RX-TX,l}$, $T_{gNB RX-TX,l}$, $u_{UE,l}$, $u_{gNB,l}$) is supplied to the CI network.

The TRP subnet for the Multi-RTT positioning method has two input layers. The first input layer contains the input vector $\mathbf{v}_{UE}(i)$ estimated at the LTE side and supplied to the global feature maps #0 and #2. The second input layer contains the input vector $\mathbf{v}_{gNB}(i)$ estimated at the gNB side and supplied to the global feature maps #1 and #3. Each of the input vectors can be one of the following as defined in a section above.

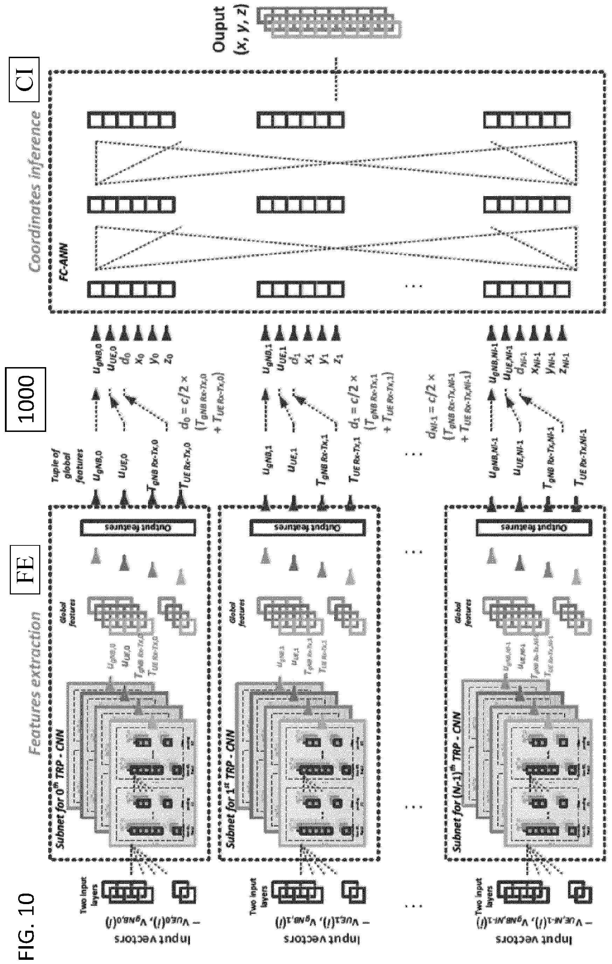

FIG. 10 shows an example artificial neural network architecture 1000 for the DL+UL (Multi-RTT) positioning method for a single gNB case.

The artificial neural network for positioning may include the Feature Extraction (FE) and Coordinate Inference (CI) networks.

The FE network may include $N_l$ TRP subnets with an architecture shown in FIG. 9. The extracted $T_{UE\,RX\text{-}TX,l}$ and $T_{gNB\,RX\text{-}TX,l}$ are converted into the propagation time values $T_l$ by summing up $T_{UE\,RX\text{-}TX,l}$ and $T_{gNB\,RX\text{-}TX,l}$ and multiplying the resulting sum by 1/2. Then the $T_l$ is weighted by the speed of light constant c to produce the distance value $d_l$.

The tuple of estimated global features ($T_{UE\,RX\text{-}TX,l}$, $T_{gNB\,RX\text{-}TX,l}$, $u_{UE,l}$, $u_{gNB,l}$) is supplemented with the ground truth global features corresponding to the known TRP coordinates ($x_l$, $y_l$, $z_l$). In total, the number of global features is equal to $N_l \times 7$ forming the input to the CI network.

The CInetwork can be a Fully Connected Artificial Neural Network (FC-ANN) used to solve the set of the non-linear equations (10). The output of the CI is the estimated coordinates ($x$, $y$, $z$) of the LTE 110.

In one embodiment, input vectors $\mathbf{v}_{UE,l}(i)$ can be reported by LTE to gNB or LMF so that gNB or LMF can perform feature extraction. TRPs can report $\mathbf{v}_{gNB,l}(i)$ to gNB 120 or LMF 130 so that gNB 120 or LMF 130 can perform feature extraction. Extracted features can be used to perform coordinate inference at gNB 120 or LMF 130. In another embodiment, gNB 120 or LMF 130 can perform both feature extraction and coordinate inference based on reported input vectors from LTE 110 and TRPs 125.

In another embodiment, LTE 110 can use NN to perform global feature extraction ($T_{RX,l}$, $\varphi_{AOD,l}$, $\theta_{AOD,l}$, $u_l$) for each TRP 125and report extracted features to gNB 129 or LMF 130 that can implement coordinate inference. TRPs 125can use NN to perform feature extraction for each LTE 110. The coordinate inference can be implemented at gNB 120 or LMF 130.

D. Generalized Artificial Neural Network Architecture for Positioning

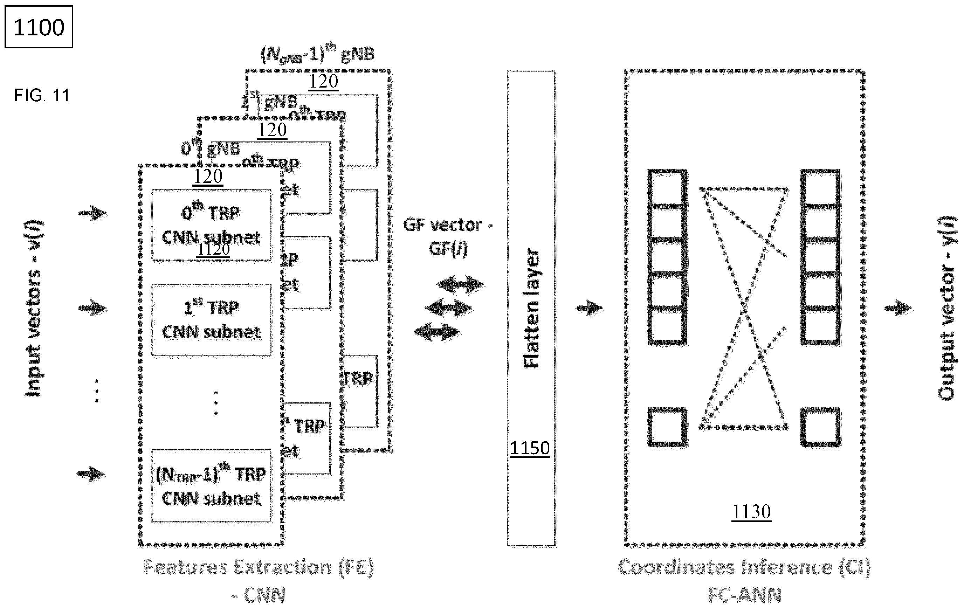

FIG. 11 shows an example generalized artificial neural network architecture 1100 for positioning in case of multiple gNBs 120.

In general case, the FE network FE may include $N_{gNB}$ gNB networks and each gNB network may include $N_l$ TRP subnets 1120. The output of the gNB network is the Global Feature (GF) vector composed of the tuple of output parameters produced by the TRP subnets as it is shown in FIG. 6 and FIG. 10.

The set of the GF vectors corresponding to the different gNB networks is supplied to the flatten layer 1150 which is an interface to the CI network 1130. It performs translation of the number of $N_{gNB}$ vectors (multi-dimensional input) into a single vector which is an input to the CI network.

The CI network processes an input vector collected from the multiple gNB networks and produces the LTE coordinates estimate at its output.

**Artificial Neural Network Architecture Types**

In this section may describe different types of ANN architectures including the distributed, NW-based, and LTE-based architectures. Embodiments may define how the ANN components shown in FIG. 11 are distributed across the entities of the positioning architecture shown in FIG. 1.

A. Distributed Architecture

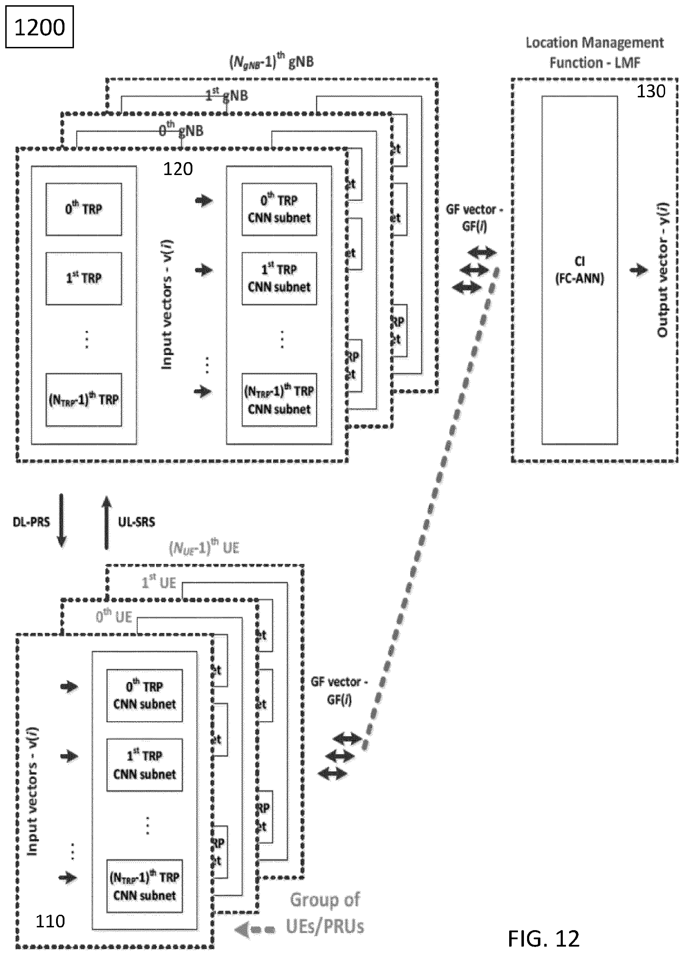

FIG. 12 shows an example distributed ANN architecture 1200 for positioning.

The training of the ANN parameters is performed in a distributed fashion and all positioning entities, including the UE/PRU 110, serving and neighbour gNBs 120, and LMF 130 are involved into the training process.

**For the distributed architecture:**

- The FE network is implemented at the LTE and TRP/gNB side and the CI network is implemented at the gNB 120 or LMF 130 entity
- Serving and neighbour gNBs 120 transmit the DL PRS signal to the LTE 110 and LTE 110 performs measurements
- LTE/PRU 110 transmits the UL Sounding Reference Signal (SRS) signal to the serving and neighbour gNBs 120 and gNBs 120 perform measurements
- The training of the UE/PRU 110 and gNB FE networks can be accomplished in two different ways:

    ◦ In the first approach:

- The FE networks of UE/PRU 110 and gNBs 120 are trained locally using their own training sets ($\mathbf{v}(i)$, $\mathbf{GF}(i)$), where $\mathbf{v}(i)$ is an input vector and $\mathbf{GF}(i)$ is a global feature vector
- LMF 130 collects vectors $\mathbf{GF}(i)$ across all the UEs 110 and gNBs 120 and performs training of the CI using training set ($\mathbf{GF}(i)$, $\mathbf{y}(i)$), where $\mathbf{GF}(i)$ is the global feature vector and $\mathbf{y}(i)$ is an output vector

○ In the second approach:

- The FE networks and CI network are trained jointly using ($\mathbf{v}(i)$, $\mathbf{y}(i)$) training set
- LTE/PRU 110 and gNB 120 may send the updated vector $\mathbf{GF}(i)$ to the LMF 130, which is an activation signal in the feedforward recursion
- LMF 130 may send the updated vector $\mathbf{GF}(i)$ to the UE/PRU and gNB 120, which is a gradient vector in the backward recursion
- The GF vectors exchange may happen multiple times upon convergence is achieved

## B. NW-based Architectures

For the NW-based architecture, the training may be performed at the network side and the LTE/PRU 110 may not perform the training.

### 1. NW-based Centralized Architecture

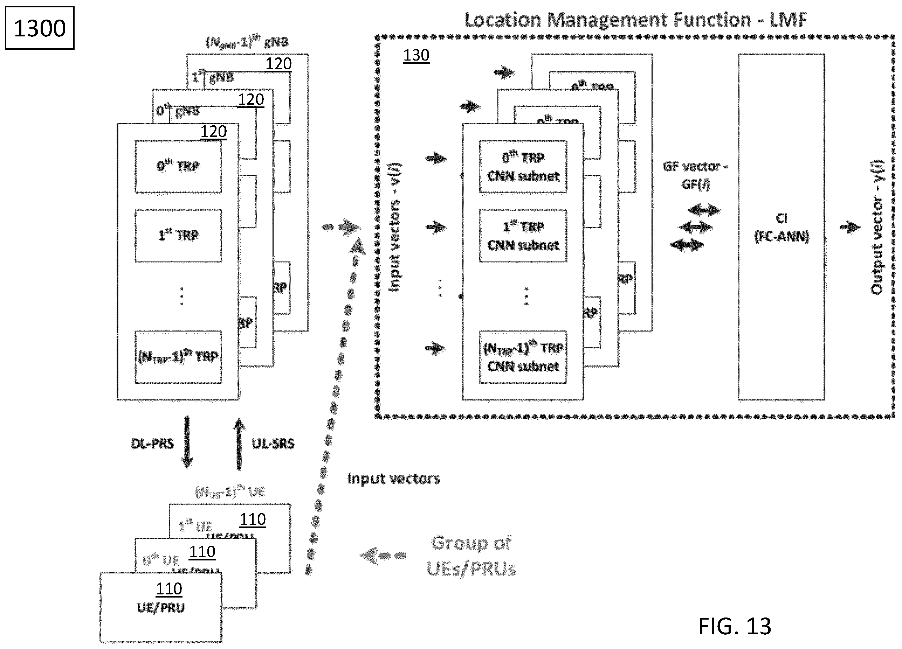

FIG. 13 shows an example NW-based centralized ANN architecture 1300 for positioning.
The training of the ANN parameters is performed in a centralized fashion where the LTE/PRU 110 and gNBs 120 perform measurements and then report input vector v(i) and the output vector y(i) to the LMF 130. Both FE and CI networks reside at the LMF server, and it performs training of the ANN network.
**For the NW-based centralized architecture:**

- Both FE and CI parts are implemented at the LMF entity
- Serving gNB, neighbour gNBs, and LTE/PRU perform measurements and report them to the LMF
- LMF performs joint training of both FE and CI network using training set (v(i), $\mathbf{y}(i)$)

### 2. NW-based Federated Architecture

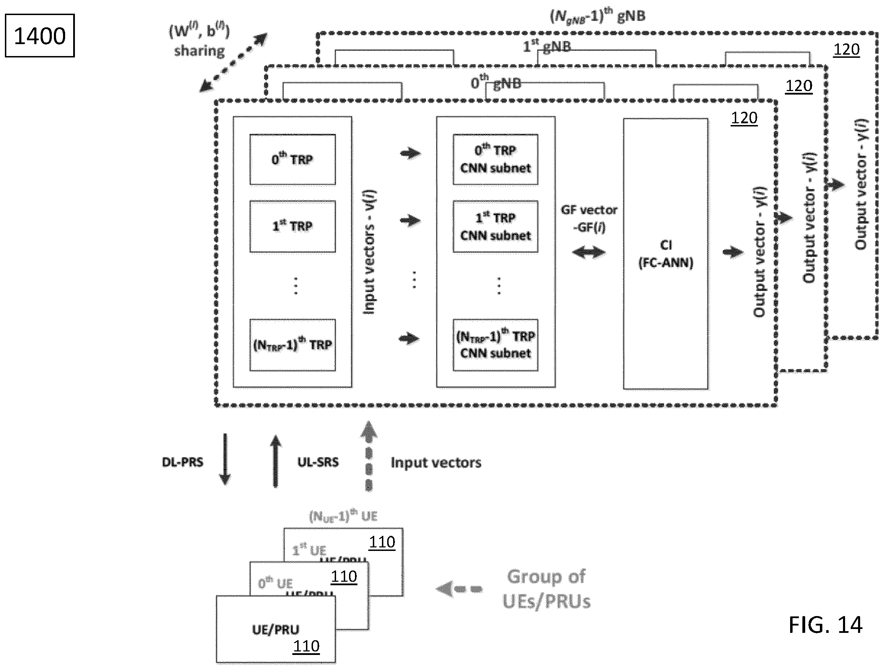

FIG. 14 shows an example of NW-based federated ANN architecture 1400 for positioning.
The training of the ANN parameters is performed in a federated fashion where each gNB 120 performs training of its own ANN network. Both FE and CI networks reside at the gNB server 120. gNBs 120 may exchange the trained set of parameters, including weights and biases ($\mathbf{W}^{(l)}$, $\mathbf{b}^{(l)}$).
Each gNB 120 may use its own measurements obtained in the UL channel or it can use the measurements reported by the LTE 110 and obtained in the DL channel.
**For the NW-based federated architecture:**

- Both FE and CI networks are implemented at the gNB entity 120
- Serving gNB 120a and neighbour gNBs 120b perform measurements and use them in the training procedure of ANN
- LTE/PRU 110 performs measurements and then report them to the serving and neighbour gNBs 120b
- gNB 120 performs joint training of both FE and CI network using training set (v(i), $\mathbf{y}(i)$)
- Serving and neighbour gNBs 120 may exchange the trained set of parameters ($\mathbf{W}^{(l)}$, $\mathbf{b}^{(l)}$

### 3. NW-based Distributed Architecture

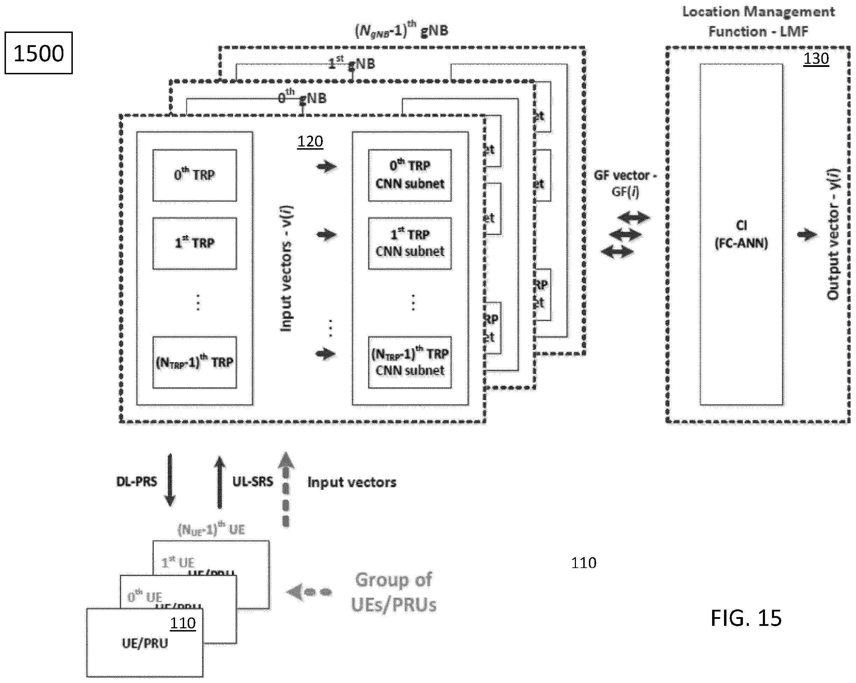

FIG. 15 shows an example NW-based distributed ANN architecture 1500 for positioning.
The training of the ANN parameters is performed in a distributed fashion where serving and neighbour gNBs 120and LMF 130 are involved into the training process.
**For the NW-based distributed architecture:**

- FE network is implemented at the gNB entity 120
- CI network is implemented at the LMF entity
- Serving gNB 120a and neighbour gNBs 120b perform measurements and use them in the training procedure of ANN
- LTE/PRU 110 performs measurements and then report them to the serving and neighbour gNBs

- The training of the gNB FE networks can be accomplished in two different ways:

  ◦ In the first approach:

    ▪ The FE networks of gNBs 120 are trained locally using their own training sets **(v(*i*), GF(*i*)),** where **v(*i*)** is an input vector and **GF(*i*)** is a global feature vector
    ▪ LMF 130 collects vectors **GF(*i*)** across all the gNBs 120 and performs training of the CI using training set (**GF**(*i*), **y**(*i*)), where **GF**(*i*) is the global feature vector and **y**(*i*) is an output vector

  ◦ In the second approach:

    ▪ The FE networks and CI network are trained jointly using (**v**(*i*), **y**(*i*)) training set
    ▪ gNB 120 may send the updated vector **GF**(*i*) to the LMF 130, which is an activation signal in the feedforward recursion
    ▪ LMF 130 may send the updated vector **GF**(*i*) to the gNB 120, which is a gradient vector in the backward recursion
    ▪ The GF vectors exchange may happen multiple times upon convergence is achieved

In the alternative implementation, the LTE may report its measurements directly to the LMF 130 and in that case the FI network which is trained by using the LTE 110 measurements can reside at the LMF entity 130.

**C. UE-based Federated Architectures**

For the LTE-based architecture, the training may be performed at the LTE/PRU 110 side, and the NW may not perform the training.

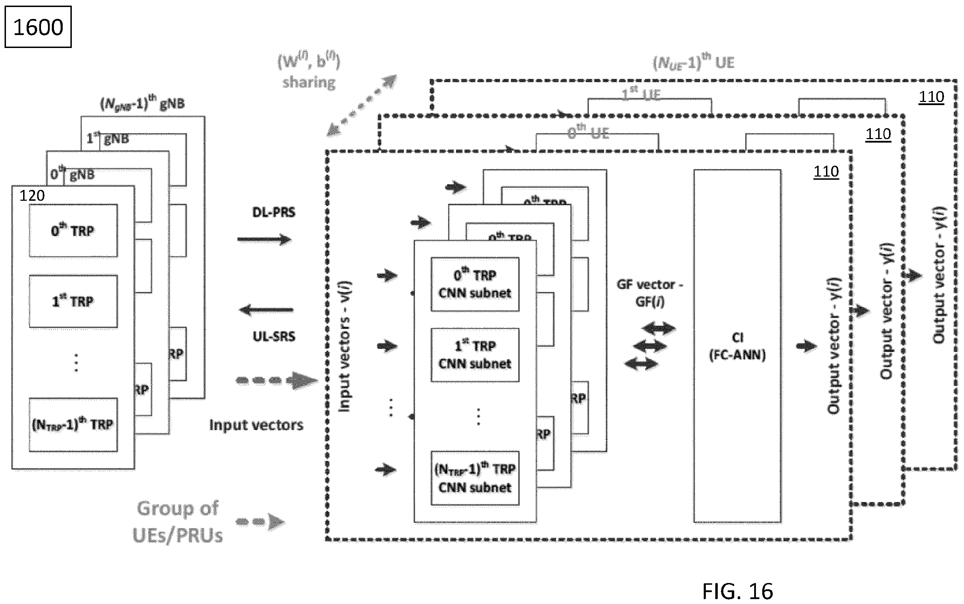

FIG. 16 shows an example LTE-based federated ANN architecture 1600 for positioning.
The training of the ANN parameters is performed in a federated fashion where each LTE/PRU 110 performs training of its own ANN network. Both FE and CI networks reside at the LTE/PRU 110. LTE/PRU 110 may exchange the trained set of parameters, including weights and biases ($\mathbf{W}^{(l)}$, $\mathbf{b}^{(l)}$).
Each LTE/PRU 110 may use its own measurements obtained in the DL channel or it can use the measurements reported by the gNB 120 or LMF 130 and obtained in the UL channel.
**For the UE-based federated architecture:**

- Both FE and CI networks are implemented at the LTE/PRU entity 110
- LTE/PRU 110 perform measurements and use them in the training procedure of ANN
- Serving and neighbour gNBs 120 may perform measurements and then report them to the LTE/PRU 110

  ◦ gNB 120 may first report the measurements to the LMF 130 and then LMF 130 may report them to the LTE/PRU 110
  ◦ gNB 120 may directly report the measurements to the UE/PRU 110

- LTE/PRU 110 performs joint training of both FE and CI network using training set (**v**(*i*), ***y***(*i*))
- LTE/PRU 110 may exchange the trained set of parameters ($\mathbf{W}^{(l)}$, $\mathbf{b}^{(l)}$)

A new Study Item (SI) on the Artificial Intelligence (AI) / Machine Learning (ML) for NR air interface has been proposed and approved with the main objectives to study the aspects of AI/MI, algorithms and models, levels of LTE and gNB collaboration, potential specification impact, etc., [5]. The Channel State Information (CSI) feedback enhancements, beam management, and positioning accuracy enhancements use cases are considered for the study.
Further embodiments herein relate to a design of the Coordinate Inference (CI) network architecture as a part of the Artificial Neural Network (ANN) for positioning. The ANN for positioning may include the Feature Extraction (FE) and the CI networks using a flatten layer as an interface between these two parts.
Embodiments herein may include one or both of two types of the CI network architecture with the feedforward and backward inference.
The CI network with a feedforward inference performs training of the weights and biases in the network using the backward recursion, while the inference happens using the feedforward recursion. The CI network solves the set of the positioning non-linear equations using distance, distance difference, and angle-based measurements obtained from the FE network. It takes the tuples of estimated parameters as an input and produces the coordinates estimate as an output. The CI network with the feedforward inference exploits a Recursive Neural network (RNN) structure with a feedback and skip connection links.

The CI network with a backward inference still performs training of the weights and biases in the network using the backward recursion. As opposed to the feedforward inference, the CI network with a backward inference uses a backward recursion for the inference as well. In that case the unknown coordinates are assigned to weights in the network and the backpropagation algorithm is used to update the coordinates iteratively. The difference from the training phase is that the inference phase uses a single realization of the input and output vectors instead of the set of realizations.

Embodiments may include one or both of the following advantages:

- Improve positioning accuracy and performance of NR (5G-Advanced) communication systems
- Enable flexible AI based positioning procedures for NR (5G-Advanced)/6G communication systems

**Design of Coordinate Inference Artificial neural network for high performance positioning**

**Iterative Gauss-Newton Solution (Legacy Solution)**

This section provides an overview of the legacy solution for the user equipment (LTE) coordinates estimation based on the distance, distance difference, and angles measurements acquired with a number Transmission Reception Points (TRPs) across single or multiple base station(s) (gNBs).

The algorithm solves a non-linear set of equations, where the number of equations correspond to the number of acquired estimates with a target LTE. The set of the non-linear equations is solved by applying a Gauss-Newton iterative method starting from the initial guess on the LTE coordinates and then updating it based on the provided distance and angular measurements. The algorithm converges using a few iterations, while the coordinates obtained at the last iteration are derived as an estimate of the LTE coordinates.

The following subsections describe the solution for the case of the distance-based, the distance difference-based, and the angle-based measurements.

**A. Distance-Based Solution**

In case of the distance-based solution, the set of the non-linear equations is written as follows:

$$\begin{cases} f_0\left(x,y,z\right)+w_0=r_0 \\ f_1\left(x,y,z\right)+w_1=r_1 \\ \vdots \\ f_{N_l-1}\left(x,y,z\right)+w_{N_l-1}=r_{N_l-1} \end{cases} \tag{1a}$$

where $r_l$ is the distance measurement between a LTE 110 and the $l^{th}$ TRP 125, $f_l(x, y, z)$ is the function of the LTE coordinates for the $l^{th}$ TRP link, and $w_l$ is the additive noise component for the $l^{th}$ TRP link. The number of equations is equal to $N_l$, which is a total number of TRPs (across all gNBs) used in the measurements.

The $f_l(x, y, z)$ function can be obtained in the form:

$$f_l\left(x,y,z\right)=\sqrt{\left(x-x_l\right)^2+\left(y-y_l\right)^2+\left(z-z_l\right)^2} \tag{2a}$$

where $(x_l, y_l, z_l)$ are the known coordinates of the $l^{th}$ TRP 125 and $(x, y, z)$ are the unknown coordinates of the LTE 110 that should be estimated.

The system of equations (1a) can be written in concise way by using matrix notations:

$$\mathbf{f}\left(x,y,z\right)+\mathbf{w}=\mathbf{r} \tag{3a}$$

where $\mathbf{f}(x, y, z)$, $\mathbf{w}$, and $\mathbf{r}$ are $N_l \times 1$ vectors introduced as follows:

$$\mathbf{f}\left(x,y,z\right)=\begin{bmatrix}f_0\left(x,y,z\right)\\f_1\left(x,y,z\right)\\\vdots\\f_{N_l-1}\left(x,y,z\right)\end{bmatrix},\quad \mathbf{w}=\begin{bmatrix}w_0\\w_1\\\vdots\\w_{N_l-1}\end{bmatrix},\quad \mathbf{r}=\begin{bmatrix}r_0\\r_1\\\vdots\\r_{N_l-1}\end{bmatrix} \tag{4a}$$

To estimate the LTE coordinates, the vector function $\mathbf{f}(x, y, z)$ is decomposed applying a Taylor series and restricting the decomposition itself by a linear term at the point $(x^{(m)}, y^{(m)}, z^{(m)})$:

$$\mathbf{f}\left(x,y,z\right)=\mathbf{f}\left(x^{(m)},y^{(m)},z^{(m)}\right)+\mathbf{A}^{(m)}\left(\mathbf{x}-\mathbf{x}^{(m)}\right), \tag{5a}$$

where $\mathbf{f}(x^{(m)}, y^{(m)}, z^{(m)})$ is a function in (4a) evaluated at the point $(x^{(m)}, y^{(m)}, z^{(m)})$, $\mathbf{x}$ is the unknown coordinates vector, $\mathbf{x}^{(m)}$ is the coordinates vector evaluated at $(x^{(m)}, y^{(m)}, z^{(m)})$, and $\mathbf{A}^{(m)}$ is a differential matrix evaluated at $(x^{(m)}, y^{(m)}, z^{(m)})$:

$$\mathbf{A}^{(m)}=\begin{bmatrix}\frac{\partial f_0^{(m)}}{\partial x} & \frac{\partial f_0^{(m)}}{\partial y} & \frac{\partial f_0^{(m)}}{\partial z}\\ \frac{\partial f_1^{(m)}}{\partial x} & \frac{\partial f_1^{(m)}}{\partial y} & \frac{\partial f_1^{(m)}}{\partial z}\\ \vdots & \vdots & \vdots \\ \frac{\partial f_{N_L-1}^{(m)}}{\partial x} & \frac{\partial f_{N_L-1}^{(m)}}{\partial y} & \frac{\partial f_{N_L-1}^{(m)}}{\partial z}\end{bmatrix},\quad \mathbf{x}=\begin{bmatrix}x\\y\\z\end{bmatrix},\quad \mathbf{x}^{(m)}=\begin{bmatrix}x^{(m)}\\y^{(m)}\\z^{(m)}\end{bmatrix} \tag{6a}$$

The $\mathbf{A}^{(m)}$ is the $N_l \times 3$ differential matrix that may include the first order derivatives of functions $f_l(x,y,z)$ and $\mathbf{x}$ is the $3 \times 1$ vector containing $x, y,$ and $z$ coordinates as its elements.

Substituting linear approximation in (5a) into the (3a), gives us:

$$\mathbf{A}^{(m)}\left(\mathbf{x}-\mathbf{x}^{(m)}\right)+\mathbf{w}=\mathbf{b}^{(m)}, \tag{7a}$$

where vector $\mathbf{b}^{(m)}$ is an error vector defining the difference between the observation vector r and its initial estimate $\mathbf{f}(x^{(m)}, y^{(m)}, z^{(m)})$:

$$\mathbf{b}^{(m)}=\mathbf{r}-\mathbf{f}\left(x^{(m)},y^{(m)},z^{(m)}\right). \tag{8a}$$

In assumption that the noise vector w components have Gaussian distribution, the linear system of equations (7a) can be resolved with respect to the difference $(\mathbf{x}\text{-}\mathbf{x}^{(m)})$ applying Minimum Variance Unbiased (MVU) estimator in the form:

$$\mathbf{x}-\mathbf{x}^{(m)}=\left(\left(\mathbf{A}^{(m)}\right)^T\mathbf{C}_w^{-1}\mathbf{A}^{(m)}\right)^{-1}\left(\mathbf{A}^{(m)}\right)^T\mathbf{C}_w^{-1}\mathbf{b}^{(m)}, \tag{9a}$$

where $\mathbf{C}_w^{-1}$ is the $N_l \times N_l$ inverse covariance matrix of the noise vector $\mathbf{w}$.

Finally, the equation (9a) can be used to define a recursive equation for the coordinates inference using the

coordinates estimate $\mathbf{x}^{(m)}$ at the $m^{\text{th}}$ iteration and then updating it to produce $\mathbf{x}^{(m+1)}$ at the $(m+1)^{\text{th}}$ iteration as follows:

$$\mathbf{x}^{(m+1)} = \mathbf{x}^{(m)} + \left( \left( \mathbf{A}^{(m)} \right)^T \mathbf{C}_w^{-1} \mathbf{A}^{(m)} \right)^{-1} \left( \mathbf{A}^{(m)} \right)^T \mathbf{C}_w^{-1} \mathbf{b}^{(m)} \qquad (10a)$$

The equation (10a) defines a Gauss-Newton iterative solution for the distance-based equations. It starts with initial guess $\mathbf{x}^{(m)}$ ($m=0$) and then updates it based on the differential matrix $\mathbf{A}^{(m)}$ computation to produce $\mathbf{x}^{(m+1)}$. The $\mathbf{x}^{(m+1)}$ at the last iteration is considered as an estimate of the LTE coordinates.

## B. Distance Difference-Based Solution

In case of the distance difference-based solution, the set of the non-linear equations can be modified as follows:

$$\begin{cases} \Delta f_0 (x, y, z) + \Delta w_0 = \Delta r_0 \\ \Delta f_1 (x, y, z) + \Delta w_1 = \Delta r_1 \\ \vdots \\ \Delta f_{N_l - 1} (x, y, z) + \Delta w_{N_l - 1} = \Delta r_{N_l - 1} \end{cases} \qquad (11a)$$

where $\Delta r_l$ is the distance difference measurement between a UE 110 and the $l^{\text{th}}$ TRP 125 and the reference TRP 125, $\Delta f_l(x,y,z)$ is the difference function of the LTE coordinates for the $l^{\text{th}}$ TRP 125 and the reference TRP 125, and $\Delta w_l$ is the difference of the additive noise components for the $l^{\text{th}}$ TRP 125 and the reference TRP 125.
The $\Delta f_l(x,y,z)$ function is introduced in the form:

$$\Delta f_l (x, y, z) = f_l (x, y, z) - f_{ref} (x, y, z) \qquad (12a)$$

where $(x_l, y_l, z_l)$ are the known coordinates of the $l^{\text{th}}$ TRP 125, $(x_{ref}, y_{ref}, z_{ref})$ are the known coordinates of the reference TRP 125, and $(x, y, z)$ are the unknown coordinates of the LTE that should be estimated.
The $\Delta r_l$ and $\Delta w_l$ are introduced as follows:

$$\Delta r_l = r_l - r_{ref}, \ \Delta w_l = w_l - w_{ref} \qquad (13a)$$

where $r_l$ is the distance measurement between a LTE and the $l^{\text{th}}$ TRP, $r_{ref}$ is the distance measurement between a LTE 110 and the reference TRP 125, $w_l$ is the additive noise component for the $l^{\text{th}}$ TRP link, and $w_{ref}$ is the additive noise component for the reference TRP link.
Similar to the distance-based solution considered above, the system of equations (11a) can be written in concise way by using matrix notations:

$$\Delta \mathbf{f} (x, y, z) + \Delta \mathbf{w} = \Delta \mathbf{r} \qquad (14a)$$

where $\Delta \mathbf{f}(x, y, z)$, $\Delta \mathbf{w}$, and $\Delta \mathbf{r}$ are introduced $N_l \times 1$ vectors as follows:

$$\Delta \mathbf{f}\left(x,y,z\right) = \begin{bmatrix} \Delta f_0\left(x,y,z\right) \\ \Delta f_1\left(x,y,z\right) \\ \vdots \\ \Delta f_{N_I-1}\left(x,y,z\right) \end{bmatrix}, \quad \Delta \mathbf{w} = \begin{bmatrix} \Delta w_0 \\ \Delta w_1 \\ \vdots \\ \Delta w_{N_I-1} \end{bmatrix}, \quad \Delta \mathbf{r} = \begin{bmatrix} \Delta r_0 \\ \Delta r_1 \\ \vdots \\ \Delta r_{N_I-1} \end{bmatrix}. \qquad (15a)$$

To estimate the LTE coordinates, the vector function $\Delta f(x, y, z)$ is decomposed applying a Taylor series and restricting the decomposition itself by a linear term at the point $(x^{(m)}, y^{(m)}, z^{(m)})$:

$$\Delta \mathbf{f}\left(x,y,z\right) = \Delta \mathbf{f}\left(x^{(m)},y^{(m)},z^{(m)}\right) + \Delta \mathbf{A}^{(m)}\left(\mathbf{x}-\mathbf{x}^{(m)}\right), \qquad (16a)$$

where $\Delta f(x^{(m)}, y^{(m)}, z^{(m)})$ is a difference function in (12a) evaluated at the point $(x^{(m)}, y^{(m)}, z^{(m)})$, x is the unknown coordinates vector, $\mathbf{x}^{(m)}$ is the coordinates vector evaluated at $(x^{(m)}, y^{(m)}, z^{(m)})$, and $\Delta \mathbf{A}^{(m)}$ is a differential difference matrix evaluated at $(x^{(m)}, y^{(m)}, z^{(m)})$:

$$\Delta \mathbf{A}^{(m)} = \begin{bmatrix} \frac{\partial f_0^{(m)}}{\partial x} & \frac{\partial f_0^{(m)}}{\partial y} & \frac{\partial f_0^{(m)}}{\partial z} \\ \frac{\partial f_1^{(m)}}{\partial x} & \frac{\partial f_1^{(m)}}{\partial y} & \frac{\partial f_1^{(m)}}{\partial z} \\ \vdots & \vdots & \vdots \\ \frac{\partial f_{N_I-1}^{(m)}}{\partial x} & \frac{\partial f_{N_I-1}^{(m)}}{\partial y} & \frac{\partial f_{N_I-1}^{(m)}}{\partial z} \end{bmatrix} - \mathbf{1} \times \begin{bmatrix} \frac{\partial f_{ref}^{(m)}}{\partial x} & \frac{\partial f_{ref}^{(m)}}{\partial y} & \frac{\partial f_{ref}^{(m)}}{\partial z} \end{bmatrix}, \quad \mathbf{x} = \begin{bmatrix} x \\ y \\ z \end{bmatrix}, \quad \mathbf{x}^{(m)} = \begin{bmatrix} x^{(m)} \\ y^{(m)} \\ z^{(m)} \end{bmatrix}. \qquad (17a)$$

where 1 is the $N_I \times 1$ all ones vector.

The $\Delta \mathbf{A}^{(m)}$ is the $N_I \times 3$ differential difference matrix that may include the first order derivatives of functions $f_i(x,y,z)$ and $f_{ref}(x,y,z)$ and x is the $3 \times 1$ vector containing x, y, and z coordinates as its elements.

Substituting linear approximation in (16a) into the (14a), gives us:

$$\Delta \mathbf{A}^{(m)}\left(\mathbf{x}-\mathbf{x}^{(m)}\right) + \Delta \mathbf{w} = \Delta \mathbf{b}^{(m)}, \qquad (18a)$$

where vector $\Delta \mathbf{b}^{(m)}$ is an error difference vector defining the difference between the observation vector $\Delta \mathbf{r}$ and its initial estimate $\Delta f(x^{(m)}, y^{(m)}, z^{(m)})$:

$$\Delta \mathbf{b}^{(m)} = \Delta \mathbf{r} - \Delta \mathbf{f}\left(x^{(m)},y^{(m)},z^{(m)}\right). \qquad (19a)$$

In assumption that the noise vector $\Delta \mathbf{w}$ components are distributed using Gaussian distribution, the linear system of equations (18a) can be resolved with respect to the difference $(\mathbf{x}\text{-}\mathbf{x}^{(m)})$ applying Minimum Variance Unbiased (MVCT) estimator in the form:

$$\mathbf{x} - \mathbf{x}^{(m)} = \left(\left(\Delta \mathbf{A}^{(m)}\right)^T \mathbf{C}_{\Delta w}^{-1} \Delta \mathbf{A}^{(m)}\right)^{-1} \left(\Delta \mathbf{A}^{(m)}\right)^T \mathbf{C}_{\Delta w}^{-1} \Delta \mathbf{b}^{(m)}. \qquad (20)$$

where $\mathbf{C}_{\Delta w}^{-1}$ is the $N_I \times N_I$ inverse covariance matrix of the noise vector $\Delta \mathbf{w}$.

Finally, the equation (20a) can be used to define a recursive equation for the coordinates inference using the coordinates estimate $\mathbf{x}^{(m)}$ at the $m^{th}$ iteration and then updating it to produce $\mathbf{x}^{(m+1)}$ at the $(m+1)^{th}$ iteration as follows:

$$\mathbf{x}^{(m+1)} = \mathbf{x}^{(m)} + \left( \left( \Delta\mathbf{A}^{(m)} \right)^T \mathbf{C}_{\Delta w}^{-1} \Delta\mathbf{A}^{(m)} \right)^{-1} \left( \Delta\mathbf{A}^{(m)} \right)^T \mathbf{C}_{\Delta w}^{-1} \Delta\mathbf{b}^{(m)} \tag{21a}$$

The equation (21a) defines a Gauss-Newton iterative solution for the distance difference-based equations.

**C. Angle-Based Solution**

In case of the angle-based solution, the set of the non-linear equations is written as follows:

$$\begin{cases} f_0\left(x,y,z\right) + w_0 = \alpha_0 \\ f_1\left(x,y,z\right) + w_1 = \alpha_1 \\ \quad\vdots \\ f_{2N_l-1}\left(x,y,z\right) + w_{2N_l-1} = \alpha_{2N_l-1} \end{cases} \tag{22a}$$

where $\alpha_l$ is the angle-based measurement between a LTE 110 and the $l^{th}$ TRP 125, $f_l(x,y,z)$ is the function of the LTE coordinates for the $l^{th}$ TRP link, and $w_l$ is the additive noise component for the $l^{th}$ TRP link.

In contrast to the distance-based system of equations considered in (1a), the total number of equations is equal to $2 \times N_l$, since a LTE 110 obtains two measurements with each TRP 125, including the azimuth and zenith angles.

For the even-numbered equations ($2l^{th}$), the $f_{2l}(x,y,z)$ function corresponds to the sine function of the azimuth angle and is defined as follows:

$$f_{2l}\left(x,y,z\right) = \frac{\left(y - y_l\right)}{\sqrt{\left(x - x_l\right)^2 + \left(y - y_l\right)^2}}, \tag{23a}$$

where $(x_l, y_l, z_l)$ are the known coordinates of the $l^{th}$ TRP 125 and $(x, y, z)$ are the unknown coordinates of the LTE 110 that should be estimated.

For the odd-numbered equations $((2l+1)^{th})$, the $f_{2l+1}(x,y,z)$ function corresponds to the cosine function of the zenith angle and is defined as follows:

$$f_{2l+1}\left(x,y,z\right) = \frac{\left(y - y_l\right)}{\sqrt{\left(x - x_l\right)^2 + \left(y - y_l\right)^2 + \left(z - z_l\right)^2}}. \tag{24a}$$

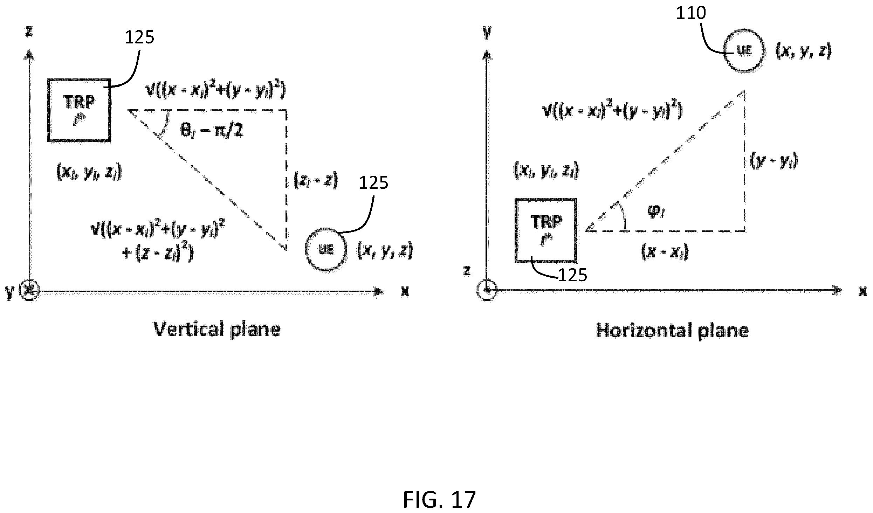

The functions $f_{2l}(x,y,z)$ and $f_{2l+1}(x,y,z)$ can be derived by using simple geometrical representation as shown in FIG. 17.

The $\alpha_{2l}$ and $\alpha_{2l+1}$ coefficients in (22a) represent the measured sine and cosine functions of the azimuth and zenith angles for the $l^{th}$ TRP, respectively:

$$\alpha_{2l} = \sin\left(\varphi_l\right), \quad \alpha_{2l+1} = \cos\left(\theta_l\right), \tag{25a}$$

where $\varphi_l$ is the azimuth angle and $\theta_l$ is the zenith angle for the $l^{th}$ TRP 125. The system of coordinates in FIG. 17 is introduced with respect to the $l^{th}$ TRP 125, since its antenna orientation in space has a known direction.

The azimuth angle $\varphi_l$ is measured in the horizontal plane counted from the x-axis and the zenith angles $\theta_l$ is measured in the vertical plane counted from the z-axis. The $\varphi_l$ and $\theta_l$ can be angles of arrival or angles of departure with respect to the $l^{th}$ TRP 125.

Similar to the distance-based solution considered above, the system of equations (11a) can be written in concise way by using matrix notations:

$$\mathbf{f}\left(x, y, z\right) + \mathbf{w} = \alpha \tag{26a}$$

where $\mathbf{f}(x, y, z)$, $\mathbf{w}$, and $\alpha$ are introduced $2N_l \times 1$ vectors as follows:

$$\mathbf{f}\left(x, y, z\right) = \begin{bmatrix} f_0\left(x, y, z\right) \\ f_1\left(x, y, z\right) \\ \vdots \\ f_{2N_l-1}\left(x, y, z\right) \end{bmatrix}, \quad \mathbf{w} = \begin{bmatrix} w_0 \\ w_1 \\ \vdots \\ w_{2N_l-1} \end{bmatrix}, \quad \alpha = \begin{bmatrix} \alpha_0 \\ \alpha_1 \\ \vdots \\ \alpha_{2N_l-1} \end{bmatrix} \tag{27a}$$

To estimate the LTE coordinates, the vector function $\mathbf{f}(x, y, z)$ is decomposed applying a Taylor series and restricting the decomposition itself by a linear term at the point $(x^{(m)}, y^{(m)}, z^{(m)})$:

$$\mathbf{f}\left(x, y, z\right) = \mathbf{f}\left(x^{(m)}, y^{(m)}, z^{(m)}\right) + \mathbf{A}^{(m)}\left(\mathbf{x} - \mathbf{x}^{(m)}\right) \tag{28a}$$

where $\mathbf{f}(x^{(m)}, y^{(m)}, z^{(m)})$ is a function in (23a) and (24a) evaluated at the point $(x^{(m)}, y^{(m)}, z^{(m)})$, $\mathbf{x}$ is the unknown coordinates vector, $\mathbf{x}^{(m)}$ is the coordinates vector evaluated at $(x^{(m)}, y^{(m)}, z^{(m)})$, and $\mathbf{A}^{(m)}$ is a differential matrix evaluated at $(x^{(m)}, y^{(m)}, z^{(m)})$:

$$\mathbf{A}^{(m)} = \begin{bmatrix} \dfrac{\partial f_0^{(m)}}{\partial x} & \dfrac{\partial f_0^{(m)}}{\partial y} & \dfrac{\partial f_0^{(m)}}{\partial z} \\ \dfrac{\partial f_1^{(m)}}{\partial x} & \dfrac{\partial f_1^{(m)}}{\partial y} & \dfrac{\partial f_1^{(m)}}{\partial z} \\ \vdots & \vdots & \vdots \\ \dfrac{\partial f_{2N_l-1}^{(m)}}{\partial x} & \dfrac{\partial f_{2N_l-1}^{(m)}}{\partial y} & \dfrac{\partial f_{2N_l-1}^{(m)}}{\partial z} \end{bmatrix}, \quad \mathbf{x} = \begin{bmatrix} x \\ y \\ z \end{bmatrix}, \quad \mathbf{x}^{(m)} = \begin{bmatrix} x^{(m)} \\ y^{(m)} \\ z^{(m)} \end{bmatrix} \tag{29}$$

The $\mathbf{A}^{(m)}$ is the $2N_l \times 3$ differential matrix that may include the first order derivatives of functions $f_l(x, y, z)$ and $\mathbf{x}$ is the $3 \times 1$ vector containing $x, y,$ and $z$ coordinates as its elements.
Substituting linear approximation in (28a) into the (26a), gives us:

$$\mathbf{A}^{(m)}\left(\mathbf{x} - \mathbf{x}^{(m)}\right) + \mathbf{w} = \mathbf{b}^{(m)} \tag{30a}$$

where vector $\mathbf{b}^{(m)}$ is an error vector defining the difference between the observation vector $\alpha$ and its initial estimate $\mathbf{f}(x^{(m)}, y^{(m)}, z^{(m)})$:

$$\mathbf{b}^{(m)} = \alpha - \mathbf{f}\left(x^{(m)}, y^{(m)}, z^{(m)}\right) \tag{31a}$$

In assumption that the noise vector $\mathbf{w}$ components are distributed using Gaussian distribution, the linear system of equations (30a) can be resolved with respect to the difference $(\mathbf{x}\text{-}\mathbf{x}^{(m)})$ applying Minimum Variance Unbiased (MVCT) estimator in the form:

$$\mathbf{x} - \mathbf{x}^{(m)} = \left( \left( \mathbf{A}^{(m)} \right)^T \mathbf{C}_w^{-1} \mathbf{A}^{(m)} \right)^{-1} \left( \mathbf{A}^{(m)} \right)^T \mathbf{C}_w^{-1} \mathbf{b}^{(m)} \tag{32a}$$

where $\mathbf{C}_w^{-1}$ is the $2N_l \times 2N_l$ inverse covariance matrix of the noise vector $\mathbf{w}$.

Finally, the equation (32a) can be used to define a recursive equation for the coordinates inference using the coordinates estimate $\mathbf{x}^{(m)}$ at the $m^{th}$ iteration and then updating it to produce $\mathbf{x}^{(m+1)}$ at the $(m+1)^{th}$ iteration as follows:

$$\mathbf{x}^{(m+1)} = \mathbf{x}^{(m)} + \left( \left( \mathbf{A}^{(m)} \right)^T \mathbf{C}_w^{-1} \mathbf{A}^{(m)} \right)^{-1} \left( \mathbf{A}^{(m)} \right)^T \mathbf{C}_w^{-1} \mathbf{b}^{(m)} \tag{33a}$$

The equation (33a) defines a Gauss-Newton iterative solution for the distance angle-based equations.

## D. Hybrid Positioning

The equations for the distance-based, distance difference-based, and the angle-based solutions can be combined in the same system of equations.

This forms a hybrid approach for positioning that utilizes a diverse set of measurements, including distances and angles. The hybrid positioning approach enables to improve the estimation of accuracy of the LTE coordinates preserving the same number of TRPs equal to $N_l$.

## Example Coordinate Inference Network Architecture with Feedforward Inference

This section describes an example of a Coordinate Inference (CI) network architecture with a feedforward inference.

First, this section provides a review of an example general architecture 1700 and how the CI network is connected to the Feature Extraction (FE) network. Then, an example CI network detail architecture for the distance-based, distance difference-based, and the angle-based solutions is described.

## A. General Architecture

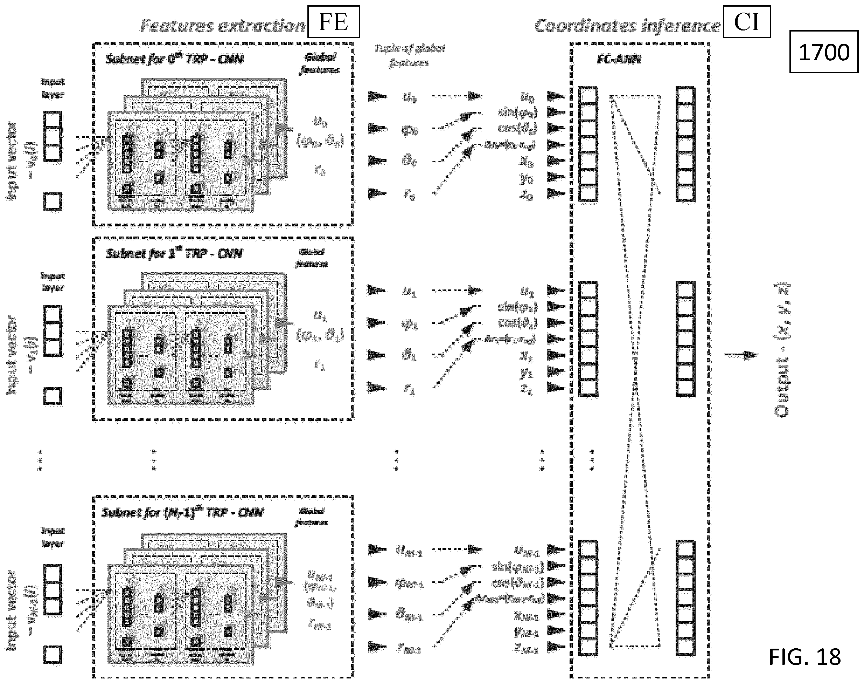

An example CI network architecture with a feedforward inference and its connection to the FE network is shown in FIG. 18.

The FE network may include $N_l$ subnets for each of the TRPs. The subnet for the $l^{th}$ TRP performs global features extraction from the $l^{th}$ input vector $\mathbf{v}_l(i)$.

The input vector $\mathbf{v}_l(i)$ can be one or a combination of the following:

- $\mathbf{v}_l(i) = \mathbf{h}_{0,l}(i)$ is the channel impulse response(s) of the first path in time domain
- $\mathbf{v}_l(i) = \mathbf{h}_l(i)$ is the channel impulse response(s) in time domain
- $\mathbf{v}_l(i) = \mathbf{H}_l(i)$ is the channel frequency response(s) in frequency domain
- $\mathbf{v}_l(i) = \mathbf{r}_l(i)$ is the receive waveform(s) in time domain
- $\mathbf{v}_l(i) = \mathbf{R}_l(i)$ is the receive waveform(s) in frequency domain
- other input data formats are not precluded

The TRP subnet produces a tuple of global features at its output including one or a combination of following:

- the receive time $T_l$ or distance $r_l$ ($r_l = T_l \times c$) or distance difference $\Delta r_l = r_l - r_{ref}$ ($r_{ref} = T_{ref} \times c$)

  ∘ where c is a speed of light constant

- azimuth and zenith angles of departure ($\varphi_l, \theta_l$), that could be Uplink Angle of Arrival (UL-AOA) or Downlink Angle of Departure (DL-AOD)
- the LOS/NLOS indicator $u_l$
- ($x_l, y_l, z_l$) coordinates of the $l^{th}$ TRP
- other output data formats are not precluded

The $u_l$ indicator is distributed in the range [0, 1], where $u_l$ = 1 indicates a pure line of sight (LOS) channel and $u_l$ = 0 indicates a pure NLOS channel. The absolute value of $u_l$ indicates the reliability of LOS/NLOS classification decision.

The tuples of output global features from each of the TRPs are combined into a single vector and are supplied to the CI network. In general case, how the tuples of parameters are permuted across the different TRPs is defined by the flatten layer (matching the FE and CI networks). In our example (see FIG. 18), they are continuously mapped to the input of the CI network.

The CI network may take the set of estimated global features as its input and produces the estimate of the LTE coordinates (*x, y, z*) as its output.

The CI network with a feedforward recursion has the following main properties:

- the training of the weights **W and** biases **b** is performed by using a backward recursion for the set of input and output vectors
- the coordinates inference is performed by a feedforward recursion for a single realization of the input vector
- it updates the signal for the trained set of the weights **W** and biases **b**
- the output activation signal represents three coordinates (*x, y, z*)

In the next sections, we describe an example CI network architecture for the distance-based, the distance difference-based, and the angle-based solutions.

**B. Distance-Based CI Network**

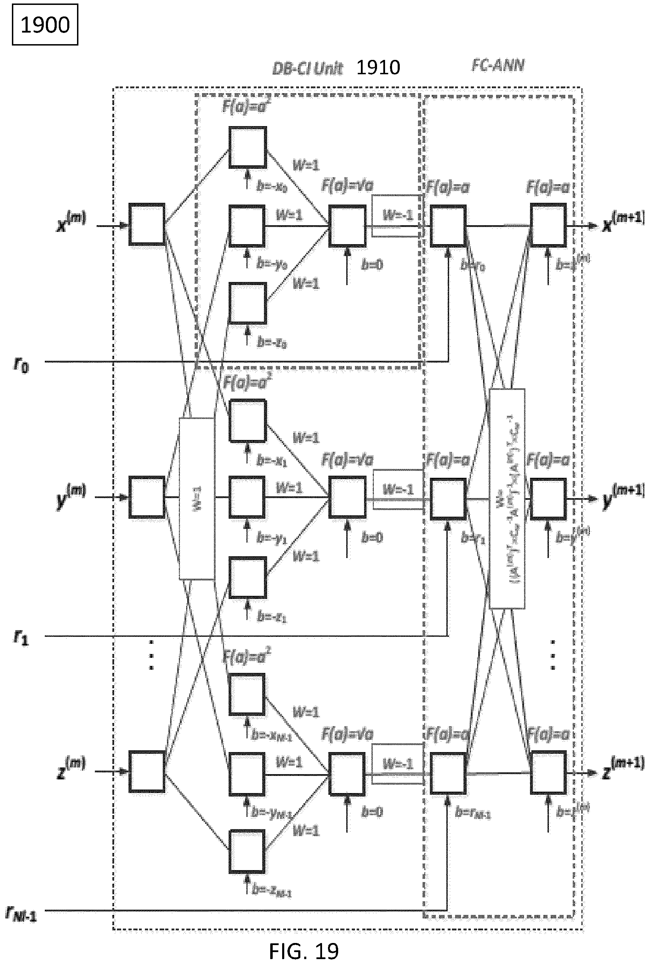

FIG. 19 shows an example architecture 1900 for the $m^{th}$ layer of the distance-based CI network. The $m^{th}$ layer architecture implements the recursive equation derived for the distance-based solution in (10a).

The $m^{th}$ layer of the distance-based CI network takes ($x^{(m)}$, $y^{(m)}$, $z^{(m)}$) coordinates and the $N_l \times 1$ vector **r** of the distance measurements as its input and produces updated coordinates ($x^{(m+1)}$, $y^{(m+1)}$, $z^{(m+1)}$) as its output.

The $m^{th}$ layer has the following detail structure:

- It takes ($x^{(m)}$, $y^{(m)}$, $z^{(m)}$) as an input 3 × 1 sublayer
- The values from the input sublayer are multiplied by the unit weights (W = 1) and transferred to the first $3N_l \times 1$ computational sublayer

    ○ It has the quadratic activation function $F(a) = a^2$
    ○ It has the bias equal to the TRP coordinates $-x_l$, $-y_l$, or $-z_l$
    ○ Finally, it computes the squared distances $(x-x_l)^2 + (y-y_l)^2 + (z-z_l)^2$ for the $l^{th}$ TRP

- The computed squared distances are multiplied by the unit weights (W = 1) and supplied to the second $N_l \times 1$ computational sublayer

    ○ It has the square root activation function $F(a) = \sqrt{a}$
    ○ It has the zero bias
    ○ Finally, it computes the distances $\sqrt{(x-x_l)^2 + (y-y_l)^2 + (z-z_l)^2}$ for the $l^{th}$ TRP

- The computed distances are multiplied by the negative unit weights (W = -1) and transferred to the third $N_l \times 1$ computational sublayer

    ○ It has a linear activation signal $F(a) = a$
    ○ It has the bias equal to the input vector **r**
    ○ Finally, it computes the error vector $\mathbf{b}^{(m)} = \mathbf{r} - f_l(x^{(m)}, y^{(m)}, z^{(m)})$, which is a difference between the observation vector **r** and its estimate $f_l(\mathbf{x}^{(m)}, y^{(m)}, z^{(m)})$

- The computed components of vector $\mathbf{b}^{(m)}$ are multiplied by the weight matrix **W** of size $3 \times N_l$ to produce the coordinates update $\mathbf{W} \times \mathbf{b}^{(m)}$ and supplied to the output 3 × 1 sublayer

    ○ It has the linear activation function $F(a) = a$
    ○ It has the bias equal to the $x^{(m)}$, $y^{(m)}$, or $z^{(m)}$ coordinate taken from the input vector
    ○ Finally, it produces the updated coordinates ($x^{(m+1)}$, $y^{(m+1)}$, $z^{(m+1)}$)

Structurally, the CI network can be partitioned into the Distance Based Coordinate Inference (DB-CI) units shown in FIG. 19. Each DB-CI unit 1910 computes the distance for the each of the TRPs.

The outputs from the DB-CI units 1910 are supplied to a Fully Connected Artificial Neural Network (FC-ANN) shown in FIG. 19 with the weights computed using the differential matrix $\mathbf{A}^{(m)}$ and inverse covariance matrix $\mathbf{C}_w^{-1}$.

The inverse covariance matrix $\mathbf{C}_w^{-1}$ and eventually the strength of the connections (weights W) is formed based on the LOS/NLOS indicator values. Two approaches with the hard and soft decision are possible:

- In a hard decision approach, the elements of the $\mathbf{C}_w^{-1}$ could be equal to 0 or 1, based on the $u_l$ = 0 or 1 value
- In a soft decision approach, the elements of the $\mathbf{C}_w^{-1}$ could be in the range $[-\infty, +\infty]$, computed based on the $u_l$ value distributed in the range [0, 1]

The weights update in the FC-ANN happens in the feedforward recursion, since $\mathbf{A}^{(m)}$ and $\mathbf{C}_w^{-1}$ depend on the input vector $\mathbf{x}^{(m)}$. The bias update in the output layer simply equals to the input vector $\mathbf{x}^{(m)}$. This is unusual to a regular FC-ANN operation, when the weights and biases update implemented by the backward recursion (instead of the feedforward recursion) in the back propagation algorithm.

Based on the provided architecture, the $m^{\text{th}}$ layer of the distance-based CI network performs computations corresponding to a single iteration in the iterative Gauss-Newton algorithm considered earlier.

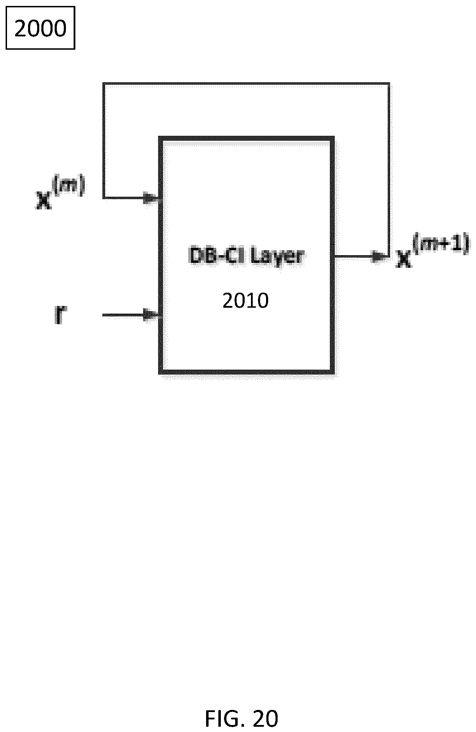

To complete several iterations, one needs to supply the output $\mathbf{x}^{(m+1)}$ back to the input $\mathbf{x}^{(m)}$, which results in the recursive structure 2000 shown in FIG. 20. Note that the input distance measurements vector r is kept unchanged for all iterations happed in the network.

Therefore, the Recursive Neural Network (RNN) for the distance-based solution may include a single layer with a recursive feedback link. In other implementation, the structure 2000 shown in FIG. 20 can be unrolled by using multiple DB-CI layers 2010.

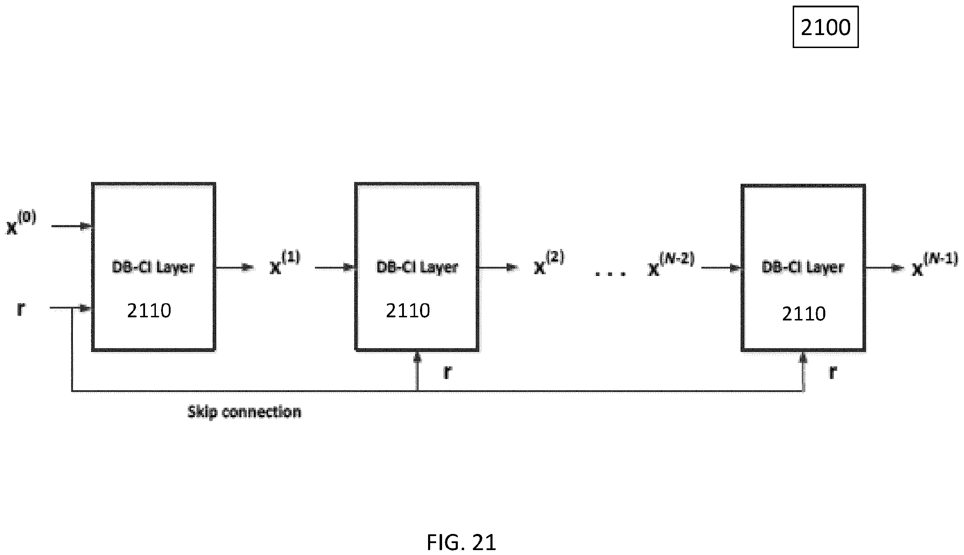

FIG. 21 shows an example unrolled distance-based CI architecture 2100 with a skip connection link.

The number $N$ of layers 2110 in such a structure defines the number of iterations to be completed in the RNN network. The vector $\mathbf{r}$ is delivered to each DB-CI layer using a skip connection link without any update of the original observation of vector $\mathbf{r}$.

### C. Distance Difference-Based CI Network

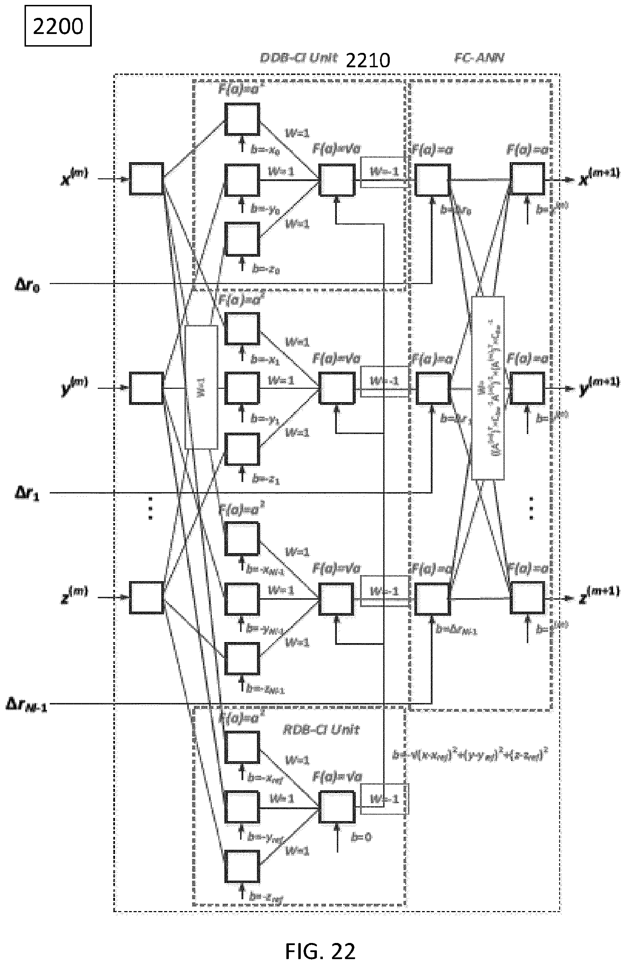

FIG. 22 shows an example architecture 2200 for the $m^{\text{th}}$ layer of the distance difference-based CI network. The $m^{\text{th}}$ layer architecture implements the recursive equation derived for the distance difference-based solution in (21a).

The $m^{\text{th}}$ layer of the distance-based CI network takes $(x^{(m)}, y^{(m)}, z^{(m)})$ coordinates and the $N_l \times 1$ vector $\Delta\mathbf{r}$ of the distance difference measurements as its input and produces updated coordinates $(x^{(m+1)}, y^{(m+1)}, z^{(m+1)})$ as its output.

The main difference from the distance-based architecture shown in FIG. 19 is that it has an additional Reference Distance Based Coordinate Inference (RDB-CI) network 2200 shown in FIG. 22. It computes the common bias which is supplied to all Distance Difference Based Coordinate Inference (DDB-CI) units 2210 shown in FIG. 22.

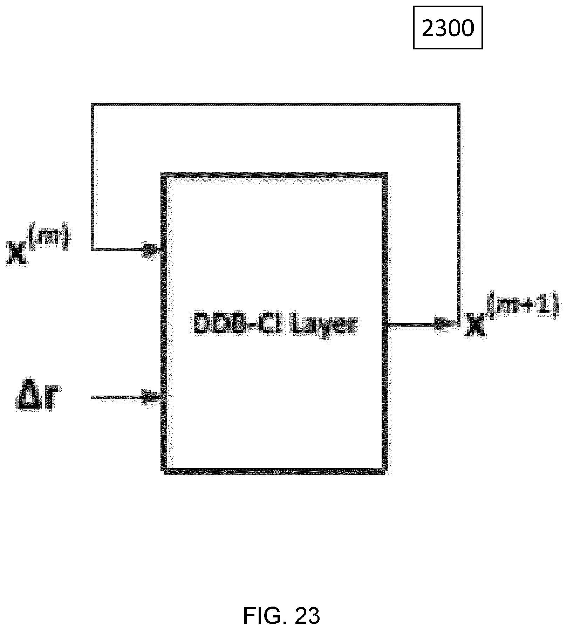

FIG. 23 shows an example recursive distance difference-based CI network 2300.

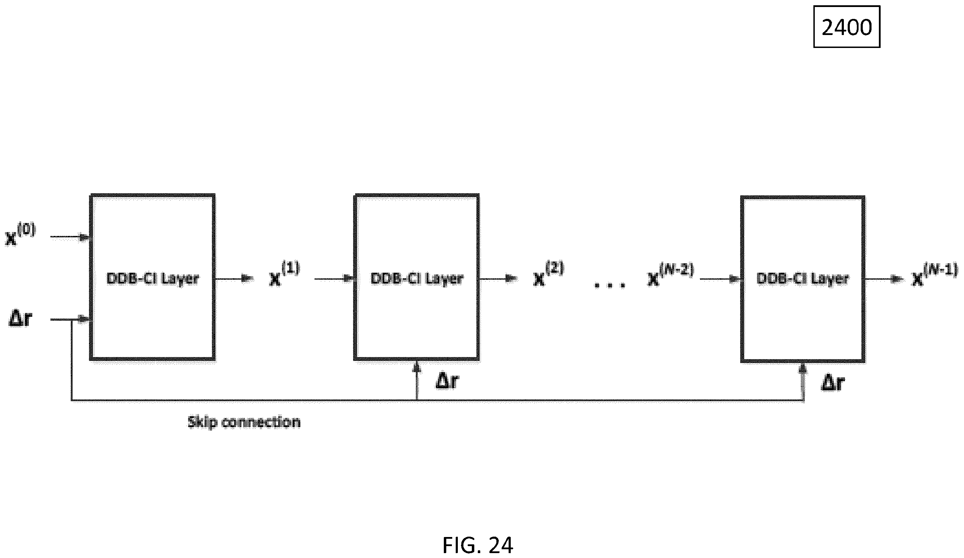

FIG. 24 shows an example unrolled version 2400 with the number of DDB-CI layers equal to N, which corresponds to the number of iterations in the RNN recursive.

Similar to the distance-based solution, the distance difference vector $\Delta\mathbf{r}$ is supplied to all layers using a skip connection link without any update of the original vector $\Delta$r.

### D. Angle-Based CI Network

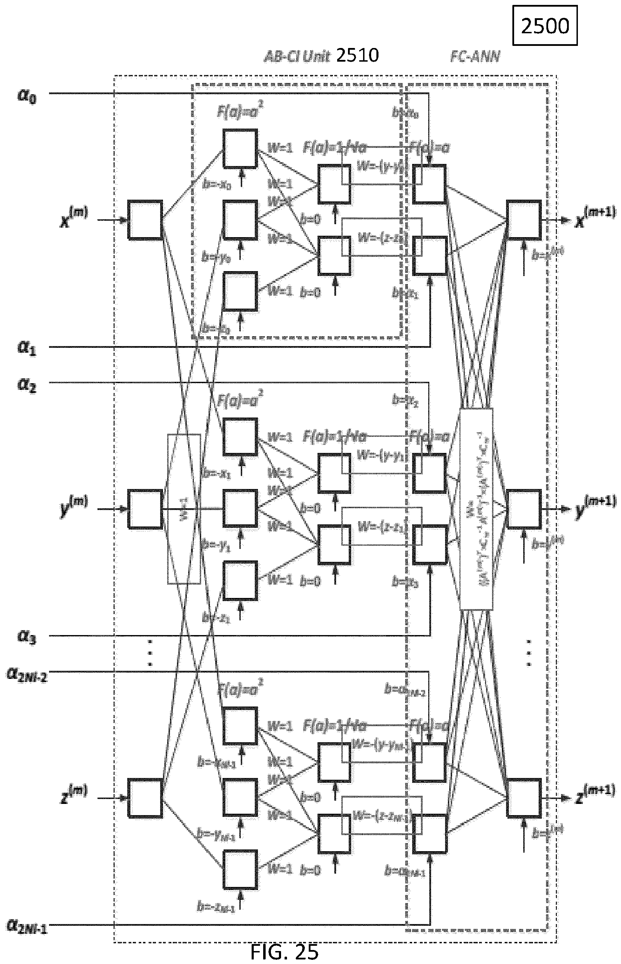

FIG. 25 shows an example architecture 2500 for the $m^{\text{th}}$ layer of the angle-based CI network. The $m^{\text{th}}$ layer architecture implements the recursive equation derived for the distance-based solution in (33a).

The $m^{\text{th}}$ layer of the angle-based CI network takes $(x^{(m)}, y^{(m)}, z^{(m)})$ coordinates and the $2N_l \times 1$ vector $\alpha$ of the angle-based measurements as its input and produces updated coordinates $(x^{(m+1)}, y^{(m+1)}, z^{(m+1)})$ as its output.

The $m^{\text{th}}$ layer has the following detail structure:

- It takes $(x^{(m)}, y^{(m)}, z^{(m)})$ as an input $3 \times 1$ sublayer
- The values from the input sublayer are multiplied by the unit weights (W = 1) and transferred to the first $3N_l \times 1$ computational sublayer

  - It has the quadratic activation function $F(a) = a^2$
  - It has the bias equal to the TRP coordinates $-x_l$, $-y_l$, or $-z_l$
  - Finally, it computes the squared distances $(x-x_l)^2 + (y-y_l)^2$ and $(x-x_l)^2 + (y-y_l)^2 + (z-z_l)^2$ for the $l^{\text{th}}$ TRP

- The computed squared distances are multiplied by the unit weights (W = 1) and supplied to the second $2N_l \times 1$ computational sublayer

  - It has the inverse square root activation function $F(a) = 1/\sqrt{a}$
  - It has the zero bias
  - Finally, it computes the inverse values of distances $1/\sqrt{(x-x_l)^2 + (y-y_l)^2}$ and $1/\sqrt{(x-x_l)^2 + (y-y_l)^2 + (z-z_l)^2}$ for the $l^{th}$ TRP

- The computed inverse distances are multiplied by the weights $-(y - y_l)$ and $-(z-z_l)$, respectively, and transferred to the third $2N_l \times 1$ computational sublayer

  - It has a linear activation function $F(a) = a$
  - It has the bias equal to the input vector $\alpha$
  - Finally, it computes the error vector $\mathbf{b}^{(m)} = \alpha - \mathbf{f}(x^{(m)}, y^{(m)}, z^{(m)})$, which is a difference between the observation vector $\alpha$ and its estimate $\mathbf{f}(x^{(m)}, y^{(m)}, z^{(m)})$

- The computed components of vector $\mathbf{b}^{(m)}$ are multiplied by the weight matrix $\mathbf{W}$ of size $3 \times 2N_l$ to produce the coordinates update $\mathbf{W} \times \mathbf{b}^{(m)}$ and supplied to the output $3 \times 1$ sublayer

  - It has the linear activation function $F(a) = a$
  - It has the bias equal to the $x^{(m)}$, $y^{(m)}$, or $z^{(m)}$ coordinate taken from the input vector
  - Finally, it produces the updated coordinates $(x^{(m+1)}, y^{(m+1)}, z^{(m+1)})$

Structurally, the CI network can be partitioned into the Angle Based Coordinate Inference (AB-CI) units 2510 shown in blue in FIG. 25. Each AB-CI unit computes the angles for the each of the TRPs.

The outputs from the AB-CI units 2510 are supplied to a Fully Connected Artificial Neural Network (FC-ANN) shown in FIG. 25 with the weights computed using the differential matrix $\mathbf{A}^{(m)}$ and inverse covariance matrix $\mathbf{C}_w^{-1}$.

The weights update in the FC-ANN happens in the feedforward recursion, since $\mathbf{A}^{(m)}$ and $\mathbf{C}_w^{-1}$ depend on the input vector $\mathbf{x}^{(m)}$. The bias update in the output layer simply equals to the input vector $\mathbf{x}^{(m)}$. This is unusual to a regular FC-ANN operation, when the weights and biases update implemented by the backward recursion (instead of the feedforward recursion) in the back propagation algorithm.

Based on the provided architecture, the $m^{th}$ layer of the angle-based CI network performs computations corresponding to a single iteration in the iterative Gauss-Newton algorithm considered earlier.

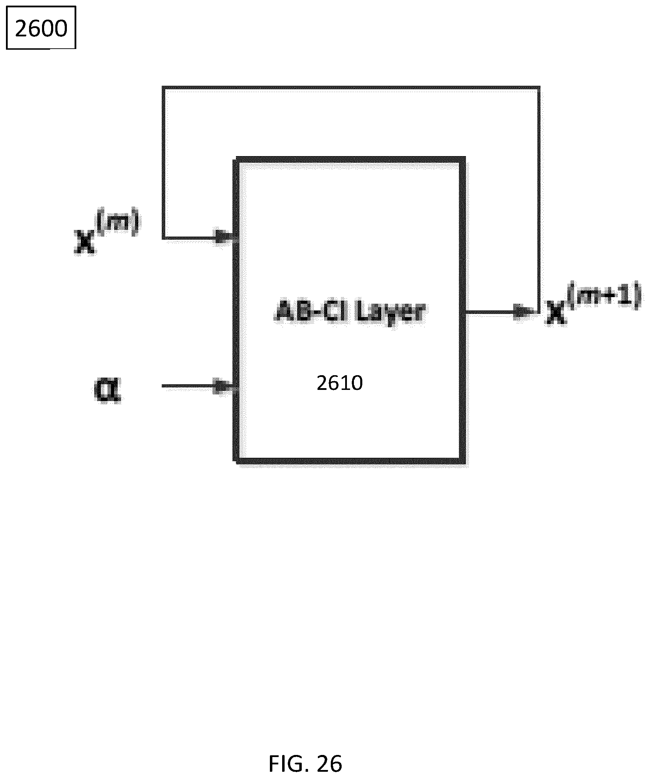

To complete several iterations, one needs to supply the output $\mathbf{x}^{(m+1)}$ back to the input $\mathbf{x}^{(m)}$, which results in the recursive structure 2600 shown in FIG. 26. Note that the input angle-based measurements vector $\alpha$ is kept unchanged for all iterations happed in the network.

Therefore, the Recursive Neural Network (RNN) for the angle-based solution may include a single layer 2610 with a recursive feedback link. In other implementation, the example structure shown in FIG. 26 can be unrolled by using multiple DB-CI layers 2610.

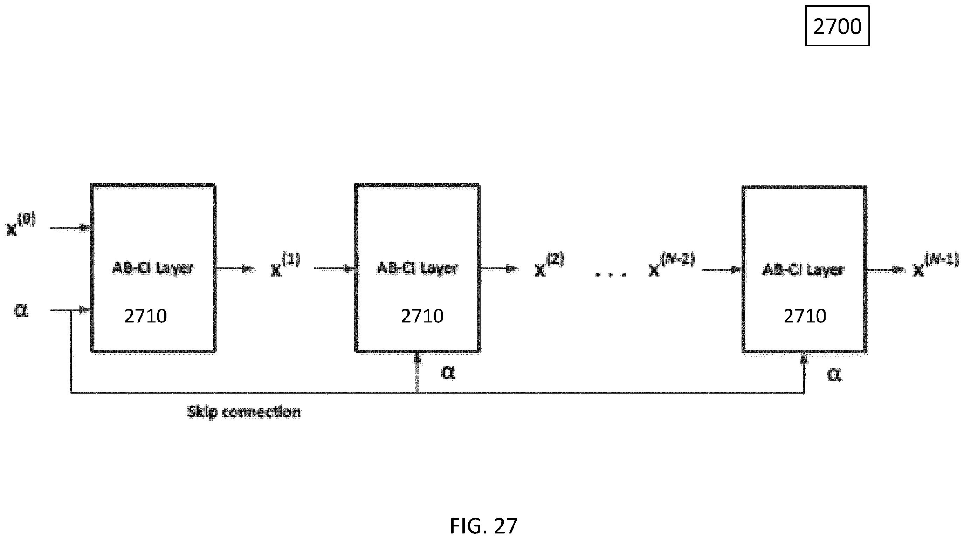

FIG. 27 shows an example unrolled angle-based CI architecture 2700 with a skip connection link.

The number N of layers 2710 in such a structure defines the number of iterations to be completed in the RNN network. The vector $\alpha$ is delivered to each AB-CI layer 2710 using a skip connection link without any update of the original observation of vector $\alpha$.

**Example Coordinate Inference Network Architecture with Backward Inference**

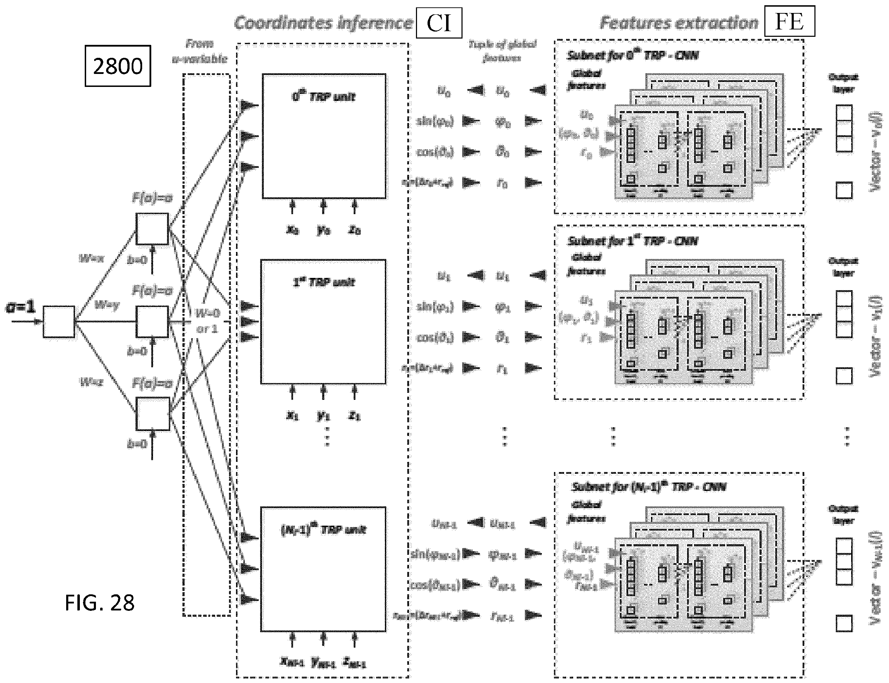

An example CI network architecture 2800 with a backward inference and its connection to the FE network is shown in FIG. 28.

As opposed to the architecture shown in FIG. 18 the CI and FE networks are connected in a different order. The CI network follows first and it produces an input to the FE network.

The CI network takes a unit amplitude ($a$ = 1) activation signal as its input and produces a tuple of global features at its output. The LTE coordinates ($x, y, z$) define the weights for the branches connecting the input and the first computational layer.

- The first $3 \times 1$ computational layer holds the coordinates ($x, y, z$) and then transfer them to the $N_l$ TRP units

  - It has a linear activation function $F(a) = a$
  - It has a zero bias

◦ Finally, it supplies the *(x, y, z)* coordinates to the $N_l$ TRP units 125

▪ $(x_l, y_l, z_l)$ coordinates of the $l^{th}$ TRP 125 are supplied to each of the TRP units

• The $l^{th}$ TRP unit produces a tuple of global features at its output including one or a combination of following:

◦ the receive time $T_l$ or distance $r_l$ ($r_l = T_l \times c$) or distance difference $\Delta r_l = r_l - r_{ref}$ ($r_{ref} = T_{ref} \times c$)

▪ where c is a speed of light constant

◦ azimuth and zenith angles of departure ($\varphi_l$, $\theta_l$), that could be Uplink Angle of Arrival (UL-AOA) or Downlink Angle of Departure (DL-AOD)
◦ other input data formats are not precluded

• The $l^{th}$ TRP unit receives the LOS/NLOS indicator $u_l$ from the FE network

◦ The LOS/NLOS indicator defines the strength of the connections between the first computational layer and the TRP units

▪ In a hard decision approach, the weights could be equal to W = 0 or 1, based on the $u_l$ = 0 or 1 value
▪ In a soft decision approach, the weights could change in the range [-∞, +∞], computed based on the $u_l$ value distributed in the range [0, 1]

The CI network with a backward recursion has the following main properties:

• the training of the weights **W** and biases **b** is still performed by using a backward recursion for the set of input and output vectors

◦ During the training phase the weights in the input layer corresponding to the coordinates *(x, y, z)* are frozen ($x = x(i)$, $y = y(i)$, $z = z(i)$) and the rest of the weights in the network are trained

• the coordinates inference is performed by a backward recursion for a single realization of the output vector $\mathbf{v}_l(i)$
• it updates the weights in the input layer corresponding to the coordinates *(x, y, z)* using backpropagation algorithm

◦ During the backward inference phase, the weights in the input layer corresponding to the coordinates *(x, y, z)* are trained and the rest of the weights in the network are frozen (based on the preceding training phase outcome)

The FE network may include $N_l$ subnets for each of the TRPs and it is a bidirectional network. The subnet for the $l^{th}$ TRP 125 in a feedforward direction takes the tuple of global features as its input and produces the vector $\mathbf{v}_l(i)$ as its output.
The subnet for the $l^{th}$ TRP 125 in a backward direction takes the $\mathbf{v}_l(i)$ vector as its input and produces a tuple of global features as its output.
The vector $\mathbf{v}_l(i)$ can be one or a combination of the following:

• $\mathbf{v}_l(i) = \mathbf{h}_{0,l}(i)$ is the channel impulse response(s) of the first path in time domain
• $\mathbf{v}_l(i) = \mathbf{h}_l(i)$ is the channel impulse response(s) in time domain
• $\mathbf{v}_l(i) = \mathbf{H}_l(i)$ is the channel frequency response(s)
• $\mathbf{v}_l(i) = \mathbf{r}_l(i)$ is the receive waveform(s) in time domain
• $\mathbf{v}_l(i) = \mathbf{R}_l(i)$ is the receive waveform(s) in frequency domain
• other input data formats are not precluded

The tuple of global features in a feedforward direction can be one or a combination of the following:

• the receive time $T_l$ or distance $r_l$ ($r_l = T_l \times c$) or distance difference $\Delta r_l = r_l - r_{ref}$ ($r_{ref} = T_{ref} \times c$)

◦ where c is a speed of light constant

• azimuth and zenith angles of departure ($\varphi_l$, $\theta_l$), that could be Uplink Angle of Arrival (UL-AOA) or Downlink Angle of Departure (DL-AOD)

- other data formats are not precluded

The tuple of global features in a backward direction can be one or a combination of the following:

- the LOS/NLOS indicator $u_l$
- other data formats are not precluded

In the next sections, we describe an example of a CI network architecture for the distance-based, the distance difference-based, and the angle-based solutions.

## A. Distance-Based CI Network

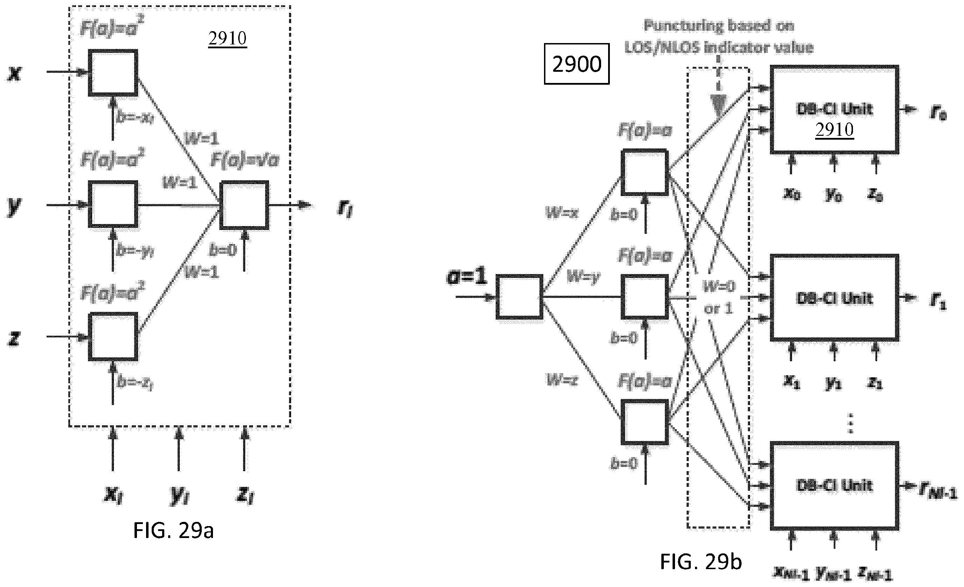

FIGS. 29a-b shows an example architecture of the distance-based CI network.

FIG. 29a introduces an example Distance Based Coordinate Inference (DB-CI) unit structure 2910 and FIG. 29b provides an example complete structure 2900 of the distance-based CI network using definition of the DB-CI unit 2910.

The DB-CI unit 2910 has the following detail structure:

- It takes *(x, y, z)* as the input to the first $3 \times 1$ computational sublayer

  ○ It has the quadratic activation function $F(a) = a^2$
  ○ It has the bias equal to $-x_l$, $-y_l$, or $-z_l$
  ○ Finally, it computes the squared values $(x-x_l)^2$, $(y-y_l)^2$, and $(z-z_l)^2$

- The computed squared values are multiplied by the unit weights (W = 1) and supplied to the second $1 \times 1$ computational sublayer

  ○ It has the square root activation function $F(a) = \sqrt{a}$
  ○ It has a zero bias
  ○ Finally, it computes the distances $r_l = \sqrt{(x-x_l)^2 + (y-y_l)^2 + (z-z_l)^2}$ for the $l^{th}$ TRP

## B. Distance Difference-Based CI Network

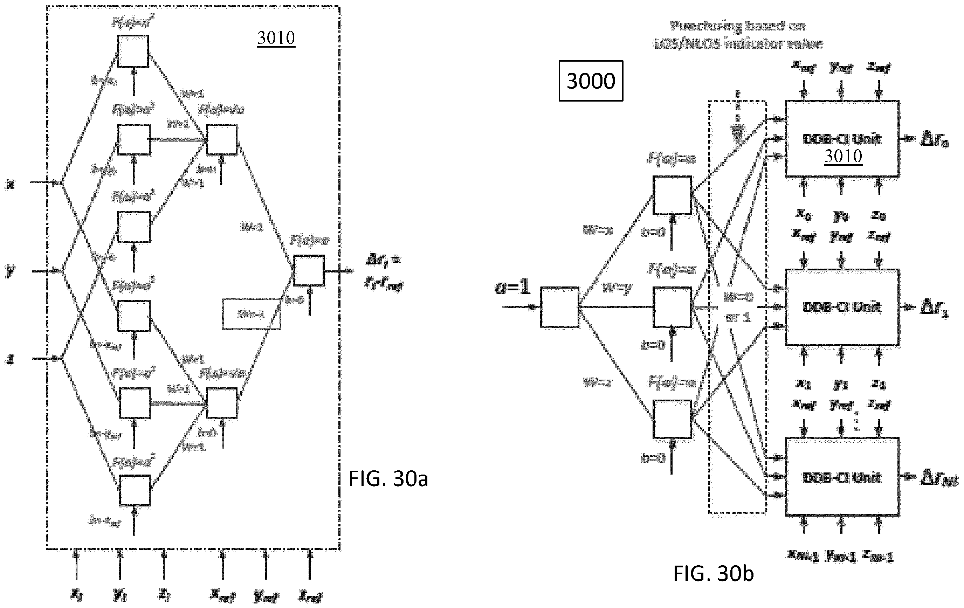

FIGS. 30a-b shows an example architecture of the distance difference-based CI network 3000.

FIG. 30a introduces an example Distance Difference Based Coordinate Inference (DDB-CI) unit structure 3010 and FIG. 30b provides an example complete structure of the distance difference-based CI network 3000 using definition of the DDB-CI unit.

The DDB-CI unit 3010 has the following detail structure:

- It takes *(x, y, z)* as the input to the first $6 \times 1$ computational sublayer

  ○ It has the quadratic activation function $F(a) = a^2$
  ○ It has the bias equal to $-x_l$, $-y_l$, $-z_l$, $-x_{ref}$, $-y_{ref}$, $-z_{ref}$
  ○ Finally, it computes the squared values $(x-x_l)^2$, $(y-y_l)^2$, $(z-z_l)^2$, $(x-x_{ref})^2$, $(y-y_{ref})^2$, and $(z-z_{ref})^2$

- The computed squared values are multiplied by the unit weights (W = 1) and supplied to the second $2 \times 1$ computational sublayer

  ○ It has the square root activation function $F(a) = \sqrt{a}$
  ○ It has a zero bias
  ○ Finally, it computes the distances $\sqrt{(x-x_l)^2 + (y-y_l)^2 + (z-z_l)^2}$ for the $l^{th}$ TRP and $\sqrt{(x-x_{ref})^2 + (y-y_{ref})^2 + (z-z_{ref})^2}$ for the reference TRP

- The computed distance is multiplied by the unit weight (W = 1) in case of the $l^{th}$ TRP and by the negative one (W = -1) for the reference TRP and transferred to the third computational sublayer

  ○ It has a linear activation function $F(a) = a$
  ○ It has a zero bias

○ Finally, it computes the distance difference $Ar_l = r_l - r_{ref}$

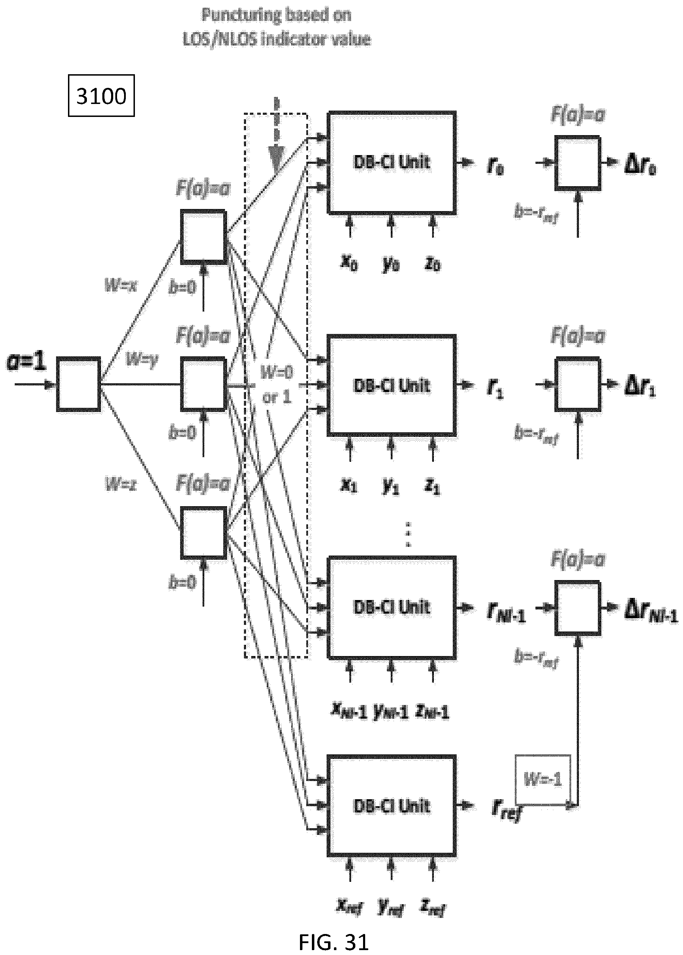

In other implementation the distance difference-based CI network may reuse the structure of DB-CI unit and introduce an additional reference DB-CI unit as shown, for example, in FIG. 31. The distance $r_{ref}$ obtained from the reference DB-CI unit is subtracted from all other obtained distances $r_l$.

In the alternative distance difference-based CI network architecture 3100 the additional $N_l \times 1$ computational layer is added:

- It has a linear activation function $F(a) = a$
- It has the common bias equal to $-r_{ref}$
- Finally, it computes the distance difference $Ar_l = r_l - r_{ref}$

**C. Angle-Based CI Network**

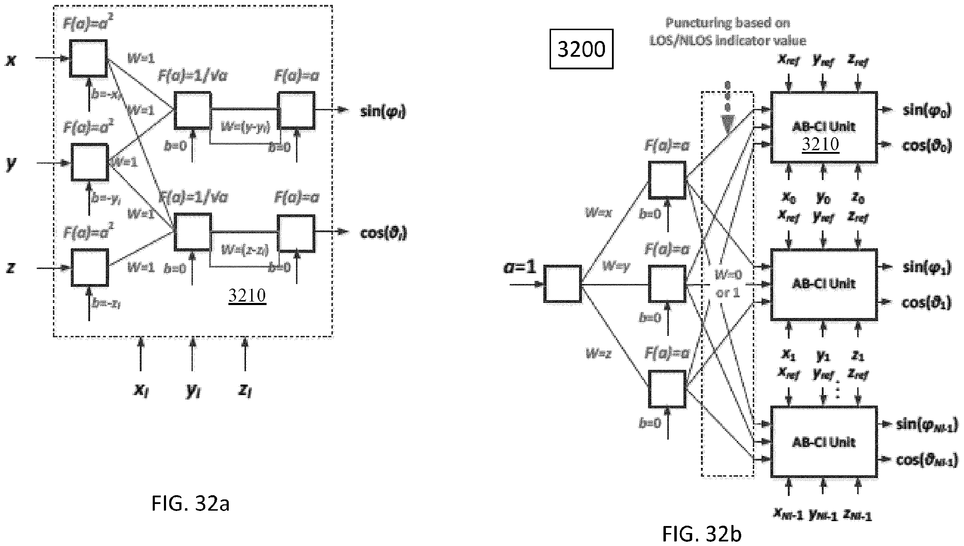

FIG. 32a-b shows an example architecture of the distance-based CI network 3200.

FIG. 32a introduces an example Angle Based Coordinate Inference (AB-CI) unit structure 3210 and FIG. 32b provides an example complete structure of the angle-based CI network 3200 using definition of the AB-CI unit.

The AB-CI unit has the following detail structure:

- It takes *(x, y, z)* as the input to the first $3 \times 1$ computational sublayer

  ○ It has the quadratic activation function $F(a) = a^2$
  ○ It has the bias equal to $-x_l$, $-y_l$, or $-z_l$
  ○ Finally, it computes the squared values $(x-x_l)^2$, $(y-y_l)^2$, and $(z-z_l)^2$

- The computed squared values are multiplied by the unit weights (W = 1) and supplied to the second $2 \times 1$ computational sublayer

  ○ It has the inverse square root activation function $F(a) = 1/\sqrt{a}$
  ○ It has a zero bias
  ○ Finally, it computes the inverse distances $1/\sqrt{(x-x_l)^2 + (y-y_l)^2}$ and $1/\sqrt{(x-x_l)^2 + (y-y_l)^2 + (z-z_l)^2}$ for the $l^{th}$ TRP

- The computed inverse distances are multiplied by the weights $(y-y_l)$ and $(z-z_l)$, respectively and transfer them to the third computational sublayer

  ○ It has a linear activation function
  ○ It has a zero bias
  ○ Finally, it produces the sine function of the azimuth angle $\sin(\varphi_l)$ and cosine function of the zenith angle $\cos(\theta_l)$ for the $l^{th}$ TRP

Note, that alternatively the AB-CI unit may use any of the trigonometric functions and the implementation is not limited to the specific choice considered in FIGS 32a-b.

The derived trigonometric functions may be converted to the azimuth angle $\varphi_l$ and the zenith angle $\theta_l$ for the $l^{th}$ TRP and then supplied to the FE network.

**Systems and Implementations**

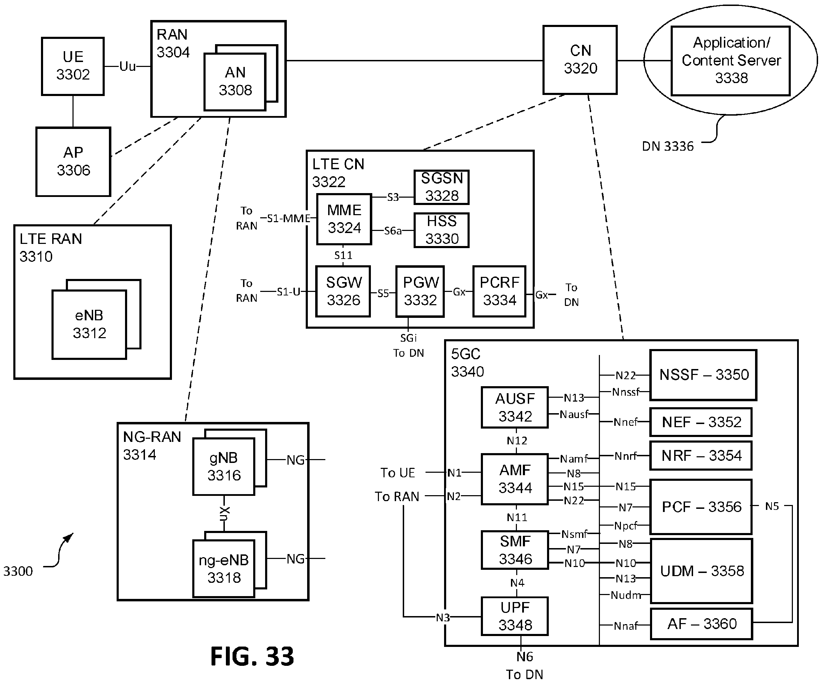

FIGS. 33-35 illustrate various systems, devices, and components that may implement aspects of disclosed embodiments.

FIG. 33 illustrates a network 3300 in accordance with various embodiments. The network 3300 may operate in a manner consistent with 3GPP technical specifications for LTE or 5G/NR systems. However, the example embodiments are not limited in this regard and the described embodiments may apply to other networks that benefit from the principles described herein, such as future 3GPP systems, or the like.

The network 3300 may include a LTE 3302, which may include any mobile or non-mobile computing device designed to communicate with a RAN 3304 via an over-the-air connection. The LTE 3302 may be communicatively coupled with the RAN 3304 by a Uu interface. The LTE 3302 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, Machine-to-Machine (M2M) or Device-to-Device (D2D) device, Intenet-of-Things (IoT) device, etc.

In some embodiments, the network 3300 may include a plurality of LTEs coupled directly with one another via a sidelink interface. The LTEs may be M2M/D2D devices that communicate using physical sidelink channels such as, but not limited to, Physical Sidelink Broadcast Channel (PSBCH), Physical Sidelink Dwonlink Channel (PSDCH), Physical Sidelink Shared Channel (PSSCH), Physical Sidelink Control Channel (PSCCH), Physical Sidelink Feedback Channel (PSFCH), etc.

In some embodiments, the LTE 3302 may additionally communicate with an Access Point (AP) 3306 via an ovefr-the-air connection. The AP 3306 may manage a WLAN connection, which may serve to offload some/all network traffic from the RAN 3304. The connection between the LTE 3302 and the AP 3306 may be consistent with any IEEE 802.11 protocol, wherein the AP 3306 could be a wireless fidelity (Wi-Fi®) router. In some embodiments, the UE 3302, RAN 3304, and AP 3306 may utilize cellular-WLAN aggregation (for example, LTE-WLAN aggregation/LTE/WLAN Radio Level Integration with IPSec (LWA/LWIP)). Cellular-WLAN aggregation may involve the LTE 3302 being configured by the RAN 3304 to utilize both cellular radio resources and WLAN resources.

The RAN 3304 may include one or more access nodes, for example, AN 3308. AN 3308 may terminate air-interface protocols for the LTE 3302 by providing access stratum protocols including RRC, Packet Data Convergence Protocol (PDCP), Radio Link Control (RLC), Medium Access Control (MAC), and Layer 1 (L1) (physical layer) protocols. In this manner, the AN 3308 may enable data/voice connectivity between CN 3320 and the LTE 3302. In some embodiments, the AN 3308 may be implemented in a discrete device or as one or more software entities running on server computers as part of, for example, a virtual network, which may be referred to as a Cloud Radio Access Network (CRAN) or virtual baseband unit pool. The AN 3308 be referred to as a base station (BS), gNB, RAN node, eNB, ng-eNB, NodeB, Road Side Unit (RSU), TRxP, TRP, etc. The AN 3308 may be a macrocell base station or a low power base station for providing femtocells, picocells or other like cells having smaller coverage areas, smaller user capacity, or higher bandwidth compared to macrocells.

In embodiments in which the RAN 3304 includes a plurality of ANs, they may be coupled with one another via an X2 interface (if the RAN 3304 is an LTE RAN) or an Xn interface (if the RAN 3304 is a 5G RAN). The X2/Xn interfaces, which may be separated into control/user plane interfaces in some embodiments, may allow the ANs to communicate information related to handovers, data/context transfers, mobility, load management, interference coordination, etc.

The ANs of the RAN 3304 may each manage one or more cells, cell groups, component carriers, etc. to provide the LTE 3302 with an air interface for network access. The LTE 3302 may be simultaneously connected with a plurality of cells provided by the same or different ANs of the RAN 3304. For example, the LTE 3302 and RAN 3304 may use carrier aggregation to allow the LTE 3302 to connect with a plurality of component carriers, each corresponding to a Primary Cell (Pcell) or Secondary Cell (Scell). In dual connectivity scenarios, a first AN may be a master node that provides an Master Cell Group (MCG) and a second AN may be secondary node that provides a Secondary Cell Group (SCG). The first/second ANs may be any combination of eNB, gNB, ng-eNB, etc.

The RAN 3304 may provide the air interface over a licensed spectrum or an unlicensed spectrum. To operate in the unlicensed spectrum, the nodes may use Licensed Assisted Access (LAA), enhanced LAA (eLAA), and/or further enhanced LAA (feLAA) mechanisms based on Carrier Aggregation (CA) technology with PCells/Scells. Prior to accessing the unlicensed spectrum, the nodes may perform medium/carrier-sensing operations based on, for example, a listen-before-talk (LBT) protocol.

In Vehicle-to-everything (V2X) scenarios the LTE 3302 or AN 3308 may be or act as a RSU, which may refer to any transportation infrastructure entity used for V2X communications. An Road Side Unit (RSU) may be implemented in or by a suitable AN or a stationary (or relatively stationary) LTE. An RSU implemented in or by: a LTE may be referred to as a "LTE-type RSU"; an evolved Node B (Enb) may be referred to as an "eNB-type RSU"; a gNB may be referred to as a "gNB-type RSU"; and the like. In one example, an RSU is a computing device coupled with radio frequency circuitry located on a roadside that provides connectivity support to passing vehicle LTEs. The RSU may also include internal data storage circuitry to store intersection map geometry, traffic statistics, media, as well as applications/software to sense and control ongoing vehicular and pedestrian traffic. The RSU may provide very low latency communications required for high speed events, such as crash avoidance, traffic warnings, and the like. Additionally or alternatively, the RSU may provide other cellular/wireless local area network (WLAN) communications services. The components of the RSU may be packaged in a weatherproof enclosure suitable for outdoor installation, and may include a network interface controller to provide a wired connection (e.g., Ethernet) to a traffic signal controller or a backhaul network.

In some embodiments, the RAN 3304 may be an LTE RAN 3310 with eNBs, for example, eNB 3312. The LTE RAN 3310 may provide an LTE air interface with the following characteristics: Subcarrier Spacing (SCS) of 15 kHz; Control Plane Orthogonal Frequency Divisional Multiplexing (CP-OFDM) waveform for DL and Single Carrier Frequency Division Multiple Access (SC-FDMA) waveform for UL; turbo codes for data and Tail Biting Convolution Code (TBCC) for control; etc. The LTE air interface may rely on CSI Reference Signal (CSI-RS) for CSI acquisition and beam management; Physical Downlink Shared Channel/Physical Downlink Control Channel (PDSCH/PDCCH) Demodulation Reference Signal (DMRS) for PDSCH/PDCCH demodulation; and CRS for cell search and initial acquisition, channel quality measurements, and channel estimation for coherent demodulation/detection at the LTE. The LTE air interface may operating on sub-6 GHz bands.

In some embodiments, the RAN 3304 may be an NG-RAN 3314 with gNBs, for example, gNB 3316, or ng-eNBs, for example, ng-eNB 3318. The gNB 3316 may connect with 5G-enabled UEs using a 5G NR interface. The gNB 3316 may connect with a 5G core through a Next Generation (NG) interface, which may include an N2 interface or an N3 interface. The ng-eNB 3318 may also connect with the 5G core through an NG interface, but may connect with a LTE via an LTE air interface. The gNB 3316 and the ng-eNB 3318 may connect with each other over an Xn interface.

In some embodiments, the NG interface may be split into two parts, an NG user plane (NG-U) interface, which carries traffic data between the nodes of the NG-RAN 3314 and a UPF 3348 (e.g., N3 interface), and an NG control plane (NG-C) interface, which is a signaling interface between the nodes of the NG-RAN 3314 and an Access and Mobility Management Function (AMF) 3344 (e.g., N2 interface).

The NG-RAN 3314 may provide a 5G-NR air interface with the following characteristics: variable SCS; CP-OFDM for DL, CP-OFDM and discrete Fourier transform spread orthogonal frequency-division multiplexing (DFT-s-OFDM) for UL; polar, repetition, simplex, and Reed-Muller codes for control and LDPC for data. The 5G-NR air interface may rely on CSI-RS, PDSCH/PDCCH DMRS similar to the LTE air interface. The 5G-NR air interface may not use a CRS, but may use Physical Broadcast Channel (PBCH) DMRS for PBCH demodulation; Phase Tracking Reference Signal (PTRS) for phase tracking for PDSCH; and tracking reference signal for time tracking. The 5G-NR air interface may operating on FR1 bands that include sub-6 GHz bands or FR2 bands that include bands from 24.25 GHz to 52.6 GHz. The 5G-NR air interface may include an Synchronization Signal Block (SSB) that is an area of a downlink resource grid that includes Primary Synchronziation Signal (PSS)/Secondary Synchronization Signal (SSS)/PBCH.

In some embodiments, the 5G-NR air interface may utilize BWPs for various purposes. For example, bandwidth part (BWP) can be used for dynamic adaptation of the SCS. For example, the UE 3302 can be configured with multiple BWPs where each BWP configuration has a different SCS. When a BWP change is indicated to the LTE 3302, the SCS of the transmission is changed as well. Another use case example of BWP is related to power saving. In particular, multiple BWPs can be configured for the LTE 3302 with different amount of frequency resources (for example, physical resource blocks (PRBs)) to support data transmission under different traffic loading scenarios. A BWP containing a smaller number of PRBs can be used for data transmission with small traffic load while allowing power saving at the LTE 3302 and in some cases at the gNB 3316. A BWP containing a larger number of PRBs can be used for scenarios with higher traffic load.

The RAN 3304 is communicatively coupled to CN 3320 that includes network elements to provide various functions to support data and telecommunications services to customers/subscribers (for example, users of LTE 3302). The components of the CN 3320 may be implemented in one physical node or separate physical nodes. In some embodiments, NFV may be utilized to virtualize any or all of the functions provided by the network elements of the CN 3320 onto physical compute/storage resources in servers, switches, etc. A logical instantiation of the CN 3320 may be referred to as a network slice, and a logical instantiation of a portion of the CN 3320 may be referred to as a network sub-slice.

In some embodiments, the CN 3320 may be an LTE CN 3322, which may also be referred to as an Evolved Packet Core (EPC). The LTE CN 3322 may include Mobility Management Entity (MME) 3324, Serving Gateway (SGW) 3326, Serving GPRS Support Node (SGSN) 3328, Home Subscriber Server (HSS) 3330, PGW 3332, and Policy Control and Charging Rules Function (PCRF) 3334 coupled with one another over interfaces (or "reference points") as shown. Functions of the elements of the LTE CN 3322 may be briefly introduced as follows.

The MME 3324 may implement mobility management functions to track a current location of the LTE 3302 to facilitate paging, bearer activation/deactivation, handovers, gateway selection, authentication, etc.

The SGW 3326 may terminate an S1 interface toward the RAN and route data packets between the RAN and the LTE CN 3322. The SGW 3326 may be a local mobility anchor point for inter-RAN node handovers and also may provide an anchor for inter-3GPP mobility. Other responsibilities may include lawful intercept, charging, and some policy enforcement.

The SGSN 3328 may track a location of the LTE 3302 and perform security functions and access control. In addition, the SGSN 3328 may perform inter-EPC node signaling for mobility between different Radio Access Technologies (RAT) networks; Public Data Network (PDN) and Serving Gateway (S-GW) selection as specified by MME 3324; MME selection for handovers; etc. The S3 reference point between the MME 3324 and the SGSN 3328 may enable user and bearer information exchange for inter-3GPP access network mobility in idle/active states.

The HSS 3330 may include a database for network users, including subscription-related information to support the network entities' handling of communication sessions. The HSS 3330 can provide support for routing/roaming, authentication, authorization, naming/addressing resolution, location dependencies, etc. An S6a reference point between the HSS 3330 and the MME 3324 may enable transfer of subscription and authentication data for authenticating/authorizing user access to the LTE CN 3320.

The PGW 3332 may terminate an SGi interface toward a data network (DN) 3336 that may include an application/content server 3338. The PGW 3332 may route data packets between the LTE CN 3322 and the data network 3336. The PGW 3332 may be coupled with the SGW 3326 by an S5 reference point to facilitate user plane tunneling and tunnel management. The PGW 3332 may further include a node for policy enforcement and charging data collection (for example, Policy and Charging Enforcement Function (PCEF)). Additionally, the SGi reference point between the PGW 3332 and the data network 3336 may be an operator external public, a private PDN, or an intra-operator packet data network, for example, for provision of IP Multimedia Subsystem (IMS) services. The PGW 3332 may be coupled with a PCRF 3334 via a Gx reference point.

The PCRF 3334 is the policy and charging control element of the LTE CN 3322. The PCRF 3334 may be communicatively coupled to the app/content server 3338 to determine appropriate QoS and charging parameters for service flows. The PCRF 3334 may provision associated rules into a PCEF (via Gx reference point) with appropriate Traffic Flow Template (TFT) and Quality of Service (QoS) Class of Identifier (QCI).

In some embodiments, the CN 3320 may be a 5G Core network (5GC) 3340. The 5GC 3340 may include an Authentication Service Provider (AUSF) 3342, AMF 3344, Session Management Function (SMF) 3346, UPF 3348, Network Slice Selection Function (NSSF) 3350, Network Exposure Function (NEF) 3352, NF Repsitory Function (NRF) 3354, Policy Control Function (PCF) 3356, Unified Data Management (UDM) 3358, and Application Function (AF) 3360 coupled with one another over interfaces (or "reference points") as shown. Functions of the elements of the 5GC 3340 may be briefly introduced as follows.

The AUSF 3342 may store data for authentication of LTE 3302 and handle authentication-related functionality. The AUSF 3342 may facilitate a common authentication framework for various access types. In addition to communicating with other elements of the 5GC 3340 over reference points as shown, the AUSF 3342 may exhibit an Nausf service-based interface.

The AMF 3344 may allow other functions of the 5GC 3340 to communicate with the UE 3302 and the Radio Access Network (RAN) 3304 and to subscribe to notifications about mobility events with respect to the LTE 3302. The AMF 3344 may be responsible for registration management (for example, for registering LTE 3302), connection management, reachability management, mobility management, lawful interception of AMF-related events, and access authentication and authorization. The AMF 3344 may provide transport for Session Management (SM) messages between the UE 3302 and the SMF 3346, and act as a transparent proxy for routing SM messages. AMF 3344 may also provide transport for Short Message Service (SMS) messages between LTE 3302 and an SMS function (SMSF). AMF 3344 may interact with the AUSF 3342 and the LTE 3302 to perform various security anchor and context management functions. Furthermore, AMF 3344 may be a termination point of a Radio Access Network Control Plane (RAN CP) interface, which may include or be an N2 reference point between the RAN 3304 and the AMF 3344; and the AMF 3344 may be a termination point of NAS (N1) signaling, and perform Non-Access Stratum (NAS) ciphering and integrity protection. AMF 3344 may also support NAS signaling with the LTE 3302 over an N3 Interworking Function (IWF) interface.

The SMF 3346 may be responsible for SM (for example, session establishment, tunnel management between User Plane Function (UPF) 3348 and Access Network (AN) 3308); LTE IP address allocation and management (including optional authorization); selection and control of User Plane (UP) function; configuring traffic steering at UPF 3348 to route traffic to proper destination; termination of interfaces toward policy control functions; controlling part of policy enforcement, charging, and QoS; lawful intercept (for SM events and interface to Layer Indication (LI) system); termination of SM parts of NAS messages; downlink data notification; initiating AN specific SM information, sent via AMF 3344 over N2 to AN 3308; and determining Session and Service Continuity (SSC) mode of a session. SM may refer to management of a PDU session, and a PDU session or "session" may refer to a PDU connectivity service that provides or enables the exchange of PDUs between the LTE 3302 and the data network 3336.

The UPF 3348 may act as an anchor point for intra-RAT and inter-RAT mobility, an external PDU session point of interconnect to data network 3336, and a branching point to support multi-homed PDU session. The UPF 3348 may also perform packet routing and forwarding, perform packet inspection, enforce the user plane part of policy rules, lawfully intercept packets (UP collection), perform traffic usage reporting, perform QoS handling for a user plane (e.g., packet filtering, gating, LTL/DL rate enforcement), perform uplink traffic verification (e.g., SDF-to-QoS flow mapping), transport level packet marking in the uplink and downlink, and perform downlink packet buffering and downlink data notification triggering. UPF 3348 may include an uplink classifier to support routing traffic flows to a data network.

The NSSF 3250 may select a set of network slice instances serving the LTE 3302. The NSSF 3350 may also determine allowed Network Slice Selection Assistance Information (NSSAI) and the mapping to the subscribed Single NSSAIs (S-NSSAIs), if needed. The NSSF 3350 may also determine the AMF set to be used to serve the LTE 3302, or a list of candidate AMFs based on a suitable configuration and possibly by querying the NRF 3354. The selection of a set of network slice instances for the LTE 3302 may be triggered by the AMF 3344 with which the LTE 3302 is registered by interacting with the NSSF 3350, which may lead to a change of AMF. The NSSF 3350 may interact with the AMF 3344 via an N22 reference point; and may communicate with another NSSF in a visited network via an N31 reference point (not shown). Additionally, the NSSF 3350 may exhibit an Nnssf service-based interface.

The NEF 3352 may securely expose services and capabilities provided by 3GPP network functions for third party, internal exposure/re-exposure, AFs (e.g., AF 3360), edge computing or fog computing systems, etc. In such embodiments, the NEF 3352 may authenticate, authorize, or throttle the AFs. NEF 3352 may also translate information exchanged with the AF 3360 and information exchanged with internal network functions. For example, the NEF 3352 may translate between an AF-Service-Identifier and an internal 5GC information. NEF 3352 may also receive information from other Network Functions (NFs) based on exposed capabilities of other NFs. This information may be stored at the NEF 3352 as structured data, or at a data storage NF using standardized interfaces. The stored information can then be re-exposed by the NEF 3352 to other NFs and AFs, or used for other purposes such as analytics. Additionally, the NEF 3352 may exhibit an Nnef service-based interface.

The NRF 3354 may support service discovery functions, receive NF discovery requests from NF instances, and provide the information of the discovered NF instances to the NF instances. NRF 3354 also maintains information of available NF instances and their supported services. As used herein, the terms "instantiate," "instantiation," and the like may refer to the creation of an instance, and an "instance" may refer to a concrete occurrence of an object, which may occur, for example, during execution of program code. Additionally, the NRF 3354 may exhibit the Nnrf service-based interface.

The PCF 3356 may provide policy rules to control plane functions to enforce them, and may also support unified policy framework to govern network behavior. The PCF 3356 may also implement a front end to access subscription information relevant for policy decisions in a UDR of the UDM 3358. In addition to communicating with functions over reference points as shown, the PCF 3356 exhibit an Npcf service-based interface.

The UDM 3358 may handle subscription-related information to support the network entities' handling of communication sessions, and may store subscription data of LTE 3302. For example, subscription data may be communicated via an N8 reference point between the UDM 3358 and the AMF 3344. The UDM 3358 may include two parts, an application front end and a UDR. The UDR may store subscription data and policy data for the UDM 3358 and the PCF 3356, and/or structured data for exposure and application data (including Packet Flow Descriptions (PFDs) for application detection, application request information for multiple LTEs 3302) for the NEF 3352. The Nudr service-based interface may be exhibited by the UDR 221 to allow the UDM 3358, PCF 3356, and NEF 3352 to access a particular set of the stored data, as well as to read, update (e.g., add, modify), delete, and subscribe to notification of relevant data changes in the UDR. The UDM may include a UDM-FE, which is in charge of processing credentials, location management, subscription management and so on. Several different front ends may serve the same user in different transactions. The UDM-FE accesses subscription information stored in the UDR and performs authentication credential processing, user identification handling, access authorization, registration/mobility management, and subscription management. In addition to communicating with other NFs over reference points as shown, the UDM 3358 may exhibit the Nudm service-based interface.

The AF 3360 may provide application influence on traffic routing, provide access to NEF, and interact with the policy framework for policy control.

In some embodiments, the 5GC 3340 may enable edge computing by selecting operator/3rd party services to be geographically close to a point that the LTE 3302 is attached to the network. This may reduce latency and load on the network. To provide edge-computing implementations, the 5GC 3340 may select a UPF 3348 close to the LTE 3202 and execute traffic steering from the UPF 3348 to data network 3336 via the N6 interface. This may be based on the UE subscription data, UE location, and information provided by the AF 3360. In this way, the AF 3360 may influence UPF (re)selection and traffic routing. Based on operator deployment, when AF 3360 is considered to be a trusted entity, the network operator may permit AF 3360 to interact directly with relevant NFs. Additionally, the AF 3360 may exhibit an Naf service-based interface.

The data network 3336 may represent various network operator services, Internet access, or third party services that may be provided by one or more servers including, for example, application/content server 3338.

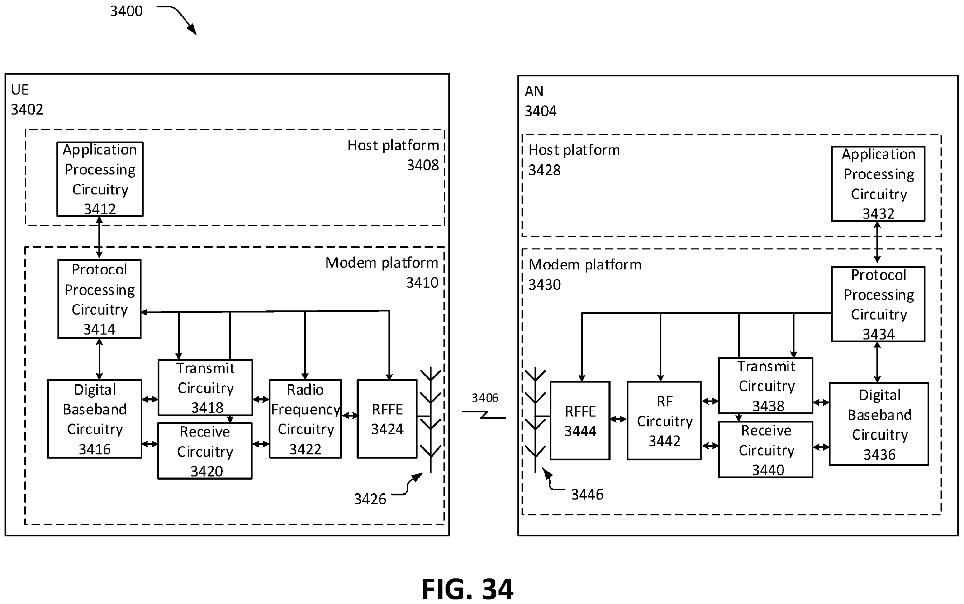

FIG. 34 schematically illustrates a wireless network 3400 in accordance with various embodiments. The wireless network 3400 may include a LTE 3402 in wireless communication with an AN 3404. The LTE 3402 and AN 3404 may be similar to, and substantially interchangeable with, like-named components described elsewhere herein.

The LTE 3402 may be communicatively coupled with the AN 3404 via connection 3406. The connection 3406 is illustrated as an air interface to enable communicative coupling, and can be consistent with cellular communications protocols such as an LTE protocol or a 5G NR protocol operating at mmWave or sub-6GHz frequencies.

The LTE 3402 may include a host platform 3408 coupled with a modem platform 3410. The host platform 3408 may include application processing circuitry 3412, which may be coupled with protocol processing circuitry 3414 of the modem platform 3410. The application processing circuitry 3412 may run various applications for the LTE 3402 that source/sink application data. The application processing circuitry 3412 may further implement one or more layer operations to transmit/receive application data to/from a data network. These layer operations may include transport (for example User Datagram Protocol (UDP)) and Internet (for example, IP) operations

The protocol processing circuitry 3414 may implement one or more of layer operations to facilitate transmission or reception of data over the connection 3406. The layer operations implemented by the protocol processing circuitry 3414 may include, for example, MAC, RLC, PDCP, RRC and NAS operations.

The modem platform 3410 may further include digital baseband circuitry 3416 that may implement one or more layer operations that are "below" layer operations performed by the protocol processing circuitry 3414 in a network protocol stack. These operations may include, for example, Physical Layer (PHY) operations including one or more of Hybrid Automatic Repeat Request-Acknowledgement (HARQ-ACK) functions, scrambling/descrambling, encoding/decoding, layer mapping/de-mapping, modulation symbol mapping, received symbol/bit metric determination, multi-antenna port precoding/decoding, which may include one or more of space-time, space-frequency or spatial coding, reference signal generation/detection, preamble sequence generation and/or decoding, synchronization sequence generation/detection, control channel signal blind decoding, and other related functions.

The modem platform 3410 may further include transmit circuitry 3418, receive circuitry 3420, Radio Requency (RF) circuitry 3422, and RF front end (RFFE) 3424, which may include or connect to one or more antenna panels 3426. Briefly, the transmit circuitry 3418 may include a digital-to-analog converter, mixer, intermediate frequency (IF) components, etc.; the receive circuitry 3420 may include an analog-to-digital converter, mixer, IF components, etc.; the RF circuitry 3422 may include a low-noise amplifier, a power amplifier, power tracking components, etc.; RFFE 3424 may include filters (for example, surface/bulk acoustic wave filters), switches, antenna tuners, beamforming components (for example, phase-array antenna components), etc. The selection and arrangement of the components of the transmit circuitry 3418, receive circuitry 3420, RF circuitry 3422, RFFE 3424, and antenna panels 3426 (referred generically as "transmit/receive components") may be specific to details of a specific implementation such as, for example, whether communication is Time Division Multiplexing (TDM) or Frequency Division Multiplexing (FDM), in mmWave or sub-6 gHz frequencies, etc. In some embodiments, the transmit/receive components may be arranged in multiple parallel transmit/receive chains, may be disposed in the same or different chips/modules, etc.

In some embodiments, the protocol processing circuitry 3414 may include one or more instances of control circuitry (not shown) to provide control functions for the transmit/receive components.

A LTE reception may be established by and via the antenna panels 3426, RFFE 3424, RF circuitry 3422, receive circuitry 3420, digital baseband circuitry 3416, and protocol processing circuitry 3414. In some embodiments, the antenna panels 3426 may receive a transmission from the AN 3404 by receive-beamforming signals received by a plurality of antennas/antenna elements of the one or more antenna panels 3426.

A LTE transmission may be established by and via the protocol processing circuitry 3414, digital baseband circuitry 3416, transmit circuitry 3418, RF circuitry 3422, RFFE 3424, and antenna panels 3426. In some embodiments, the transmit components of the LTE 3404 may apply a spatial filter to the data to be transmitted to form a transmit beam emitted by the antenna elements of the antenna panels 3426.

Similar to the LTE 3402, the AN 3404 may include a host platform 3428 coupled with a modem platform 3430. The host platform 3428 may include application processing circuitry 3432 coupled with protocol processing circuitry 3434 of the modem platform 3430. The modem platform may further include digital baseband circuitry 3436, transmit circuitry 3438, receive circuitry 3440, RF circuitry 3442, RFFE circuitry 3444, and antenna panels 3446. The components of the AN 3404 may be similar to and substantially interchangeable with like-named components of the UE 3402. In addition to performing data transmission/reception as described above, the components of the AN 3408 may perform various logical functions that include, for example, Radio Network Controller (RNC) functions such as radio bearer management, uplink and downlink dynamic radio resource management, and data packet scheduling.

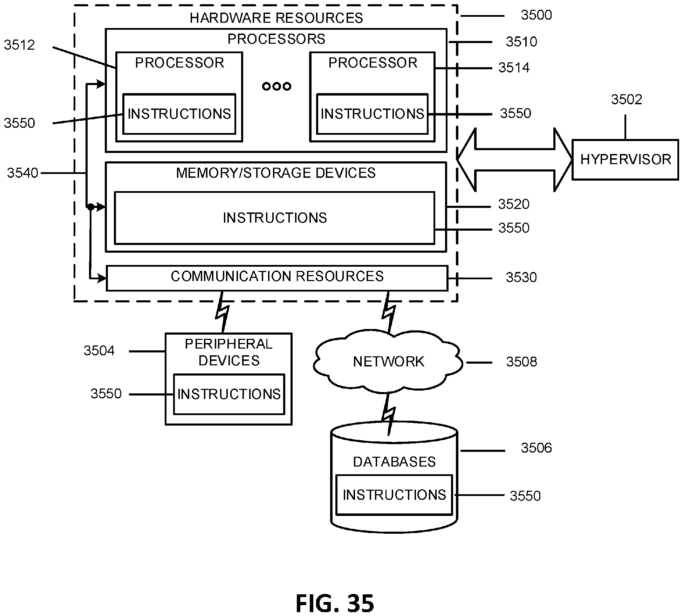

FIG. 35 is a block diagram illustrating components, according to some example embodiments, able to read instructions from a machine-readable or computer-readable medium (e.g., a non-transitory machine-readable storage medium) and perform any one or more of the methodologies discussed herein. Specifically, FIG. 35 shows a diagrammatic representation of hardware resources 3500 including one or more processors (or processor cores) 3510, one or more memory/storage devices 3520, and one or more communication resources 3530, each of which may be communicatively coupled via a bus 3540 or other interface circuitry. For embodiments where node virtualization (e.g., Network Functions Virtualization (NFV)) is utilized, a hypervisor 3502 may be executed to provide an execution environment for one or more network slices/sub-slices to utilize the hardware resources 3500.

The processors 3510 may include, for example, a processor 3512 and a processor 3514. The processors 3510 may be, for example, a central processing unit (CPU), a reduced instruction set computing (RISC) processor, a complex instruction set computing (CISC) processor, a graphics processing unit (GPU), a Digital Signal Proessor (DSP) such as a baseband processor, an Application Specific Integrated Circuit (ASIC), an Field Programmable Gate Array (FPGA), a radio-frequency integrated circuit (RFIC), another processor (including those discussed herein), or any suitable combination thereof.

The memory/storage devices 3520 may include main memory, disk storage, or any suitable combination thereof. The memory/storage devices 3520 may include, but are not limited to, any type of volatile, non-volatile, or semi-volatile memory such as dynamic random access memory (DRAM), static random access memory (SRAM), erasable programmable read-only memory (EPROM), electrically erasable programmable read-only memory (EEPROM), Flash memory, solid-state storage, etc.

The communication resources 3530 may include interconnection or network interface controllers, components, or other suitable devices to communicate with one or more peripheral devices 3504 or one or more databases 3506 or other network elements via a network 3508. For example, the communication resources 3530 may include wired communication components (e.g., for coupling via USB, Ethernet, etc.), cellular communication components, NFC components, Bluetooth® (or Bluetooth® Low Energy) components, Wi-Fi® components, and other communication components.

Instructions 3550 may comprise software, a program, an application, an applet, an app, or other executable code for causing at least any of the processors 3510 to perform any one or more of the methodologies discussed herein. The instructions 3550 may reside, completely or partially, within at least one of the processors 3510 (e.g., within the processor's cache memory), the memory/storage devices 3520, or any suitable combination thereof. Furthermore, any portion of the instructions 3550 may be transferred to the hardware resources 3500 from any combination of the peripheral devices 3504 or the databases 3506. Accordingly, the memory of processors 3510, the memory/storage devices 3520, the peripheral devices 3504, and the databases 3506 are examples of computer-readable and machine-readable media.

In some embodiments, the electronic device(s), network(s), system(s), chip(s) or component(s), or portions or implementations thereof, of FIGS. 33-35, or some other figure herein, may be configured to perform one or more processes, techniques, or methods as described herein, or portions thereof.

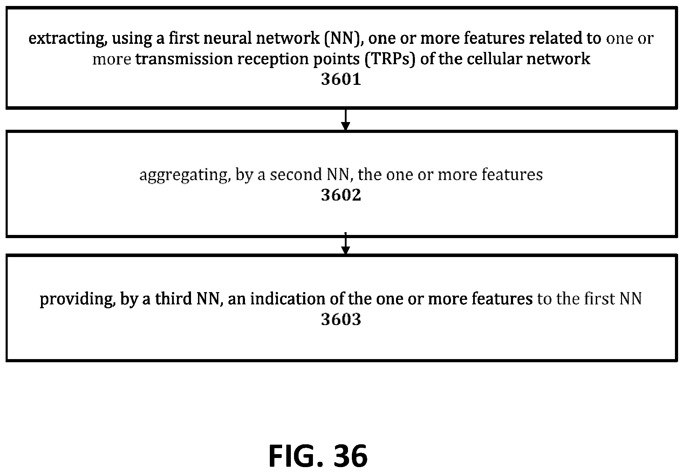

One such process is depicted in FIG. 36. The process may relate to a method related to user positioning in a cellular network. The process may include: extracting, at 3601 using a first neural network (NN), one or more features related to one or more transmission reception points (TRPs) of the cellular network; aggregating, at 3602 by a second NN, the one or more features; and providing, at 3603 by a third NN, an indication of the one or more features to the first NN.

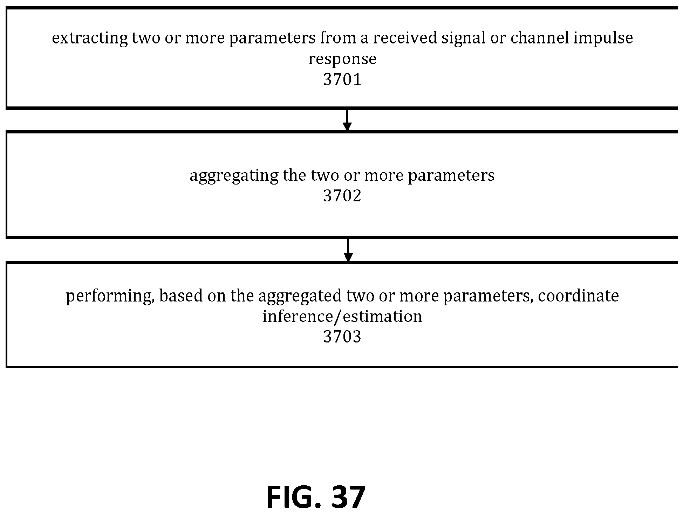

Another such process is depicted in FIG. 37. The process may be performed by one or more neural networks (NNs), and/or one or more elements of a single NN. The process may include extracting, at 3701, two or more parameters from a received signal or channel impulse response; aggregating, at 3702, the two or more parameters; and performing, at 3703 based on the aggregated two or more parameters, coordinate inference/estimation.

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a LTE, base station, network element, etc. as described above in connection with one or more of the preceding figures may be configured to operate in accordance with one or more of the examples set forth below in the example section.

## EXAMPLES

Example 1 may include the method of precise user positioning in cellular networks utilizing artificial neural networks and comprising

a. Neural networks for Feature Extraction Network (FE-NN) that extract important parameters (principal components) from the received signal or channel impulse response that can be used for estimation of user positioning
b. Neural networks for Coordinate Inference Network (CI-NN) that aggregate extracted features from FE-NN and apply outputs of FE-NN as inputs for FC-ANN for coordinate inference/estimation
c. Neural network comprising FE-NN and CI-NN
d. Procedures for training FE-NN and CI-NN networks to enable feature extraction and coordinate inference for user positioning

Example 2 may include the method of example 1, and/or some other example herein, wherein FE-NN resides at the UE, TRP, gNB, LMF or any new network entity defined and applied for positioning or sensing purposes and comprises

a. Processing of DL positioning reference signals (receive waveforms) or channel impulse response (transfer function) by LTE using them as an input to FE-NN that extract features/parameters for further coordinate inference
b. Processing of UL positioning reference signals (receive waveforms) or channel impulse response (transfer function) by TRP/gNB using them as an input to FE-NN that extract features/parameters for further coordinate inference
c. Processing of DL and/or UL positioning reference signals (receive waveforms) or channel impulse response by gNB/LMF (or any new network entity) (if reported by UE or TRPs/gNBs) using them as an input to FE-NN that extract features/parameters for further coordinate inference

Example 3 may include the method of example 1, and/or some other example herein, wherein FE-NN generates at the output features comprising by

    a. Estimate of received timing associated with the first arrival path or additional paths
    b. Estimate of azimuth and zenith angles of arrival or departure associated with the first arrival path or additional paths
    c. Estimate of LOS/NLOS indicator
    d. Estimate of any signal/channel location parameters that can be utilized for user positioning

Example 4 may include the method of example 1, and/or some other example herein, wherein CI-NN resides in LTE, TRP, gNB, LMF or any new network entity defined and applied for positioning or sensing purposes and comprises

    a. Processing of features extracted by FE-NNs residing at the LTE and known coordinates of nodes (which reference signals were received/processed to extract features) to infer by CI-NN coordinates of the positioned user
    b. Processing of features extracted by FE-NNs residing in TRP/gNB and known coordinates of nodes (which reference signals were received/processed to extract features) to infer by CI-NN coordinates of the positioned user
    c. Processing of features extracted by FE-NNs residing at the LTE and TRP/gNB and known coordinates of nodes (which reference signals were received/processed to extract features) to infer by CI-NN coordinates of the positioned user

Example 5 may include the method of example 1, and/or some other example herein, wherein FE-NN and CI-NN have predefined standardized interfaces and protocols that can configure specific inputs and outputs and procedures to exchange information between two neural networks even if those reside at the different network entities (LTE, TRP, gNB, LMF or any other network entity)

    a. Using Global Feature (GF) vectors as a standardized interface between the FE-NN and CI-NN networks
    b. Using Global Feature (GF) vectors composed of the set of principal components extracted by the FE-NN and then supplied to the CI-NN
    c. The number of GF vectors and their mapping interface between the FE-NN and CI-NN
    d. The number of global features in each GF vector

Example 6 may include the method of example 1, and/or some other example herein, wherein procedures for training FE-NN and CI-NN networks to enable feature extraction and coordinate inference for user positioning comprise

    a. Procedures for distributed architecture
    b. NW-based procedures for centralized architecture
    c. NW-based procedures for federated architecture
    d. NW-based procedures for distributed architecture
    e. LTE-based procedures for federated architecture

Example 7 may include the method of example 1, and/or some other example herein, wherein the FE-NN and CI-NN are trained separately using disjoint training sets and exchange the data based on the outcome of the local training
Example 8 may include the method of example 1, and/or some other example herein, where in the j oint FE-NN and CI-NN network is trained as a one network using the common training set.
Example 9 may include a method comprising: extracting two or more parameters from a received signal or channel impulse response; aggregating the two or more parameters; and performing, based on the aggregated two or more parameters, coordinate inference/estimation.
Example 10 may include the method of example 9, and/or some other example herein, wherein the extracting is performed by a feature extraction neural network (FE-NN).
Example 11 may include the method of any of examples 9-10, and/or some other example herein, wherein the received signal or channel impulse response is related to estimation of user positioning.
Example 12 may include the method of any of examples 9-11, and/or some other example herein, wherein the aggregation is performed by a coordinate inference neural network (CI-NN).
Example 13 may include the method of any of examples 9-12, and/or some other example herein, wherein the extracting and aggregation are performed by a same neural network.
Example 14 may include the method of any of examples 9-13, and/or some other example herein, wherein the coordinate inference/estimation is performed by a fully connected artificial neural network (FC-ANN)
Example 15 may include the method of any of examples 9-14, and/or some other example herein, wherein the coordinate inference/estimation is related to a position or location of a user equipment (UE).

Example Z01 may include an apparatus comprising means to perform one or more elements of a method described in or related to any of examples 1-15, or any other method or process described herein.

Example Z02 may include one or more non-transitory computer-readable media comprising instructions to cause an electronic device, upon execution of the instructions by one or more processors of the electronic device, to perform one or more elements of a method described in or related to any of examples 1-15, or any other method or process described herein.

Example Z03 may include an apparatus comprising logic, modules, or circuitry to perform one or more elements of a method described in or related to any of examples 1-15, or any other method or process described herein.

Example Z04 may include a method, technique, or process as described in or related to any of examples 1-15, or portions or parts thereof.

Example Z05 may include an apparatus comprising: one or more processors and one or more computer-readable media comprising instructions that, when executed by the one or more processors, cause the one or more processors to perform the method, techniques, or process as described in or related to any of examples 1-15, or portions thereof.

Example Z06 may include a signal as described in or related to any of examples 1-15, or portions or parts thereof.

Example Z07 may include a datagram, packet, frame, segment, protocol data unit (PDU), or message as described in or related to any of examples 1-15, or portions or parts thereof, or otherwise described in the present disclosure.

Example Z08 may include a signal encoded with data as described in or related to any of examples 1-15, or portions or parts thereof, or otherwise described in the present disclosure.

Example Z09 may include a signal encoded with a datagram, packet, frame, segment, protocol data unit (PDU), or message as described in or related to any of examples 1-15, or portions or parts thereof, or otherwise described in the present disclosure.

Example Z10 may include an electromagnetic signal carrying computer-readable instructions, wherein execution of the computer-readable instructions by one or more processors is to cause the one or more processors to perform the method, techniques, or process as described in or related to any of examples 1-15, or portions thereof.

Example Z11 may include a computer program comprising instructions, wherein execution of the program by a processing element is to cause the processing element to carry out the method, techniques, or process as described in or related to any of examples 1-15, or portions thereof.

Example Z12 may include a signal in a wireless network as shown and described herein.

Example Z13 may include a method of communicating in a wireless network as shown and described herein.

Example Z14 may include a system for providing wireless communication as shown and described herein.

Example Z15 may include a device for providing wireless communication as shown and described herein.

Example 1A may include the method for precise user positioning in the cellular networks utilizing artificial neural networks and comprising:

    e. Coordinate Inference Network (CI-NN) with feedforward inference, that aggregate the extracted features from the Feature Extraction Network (FE-NN)
    f. CI-NN with backward inference, that provide the extracted features to the FE-NN
    g. Procedures for training FE-NN and CI-NN networks to enable feature extraction and coordinate inference for user positioning

Example 2A may include the method of example 1A or some other example herein, wherein the CI-NN utilizes the feedforward inference architecture comprising

    a. The training of the weights and biases by using a backward recursion for the set of the input and output vectors
    b. The coordinates inference by using a feedforward recursion for a single realization of the input vector
    c. Updating the activation signal for the trained set of the weights and biases
    d. Updating the activation signal at the output layer corresponding to the coordinates

Example 3A may include the method of example 1A or some other example herein, wherein the CI-NN utilizes the backward inference architecture comprising

    a. The training of the weights and biases performed by using a backward recursion for the set of the input and output vectors

        i. During the training phase the weights in the input layer corresponding to the coordinates are frozen and the rest of the weights in the network are trained

b. The coordinates inference by using a backward recursion for a single realization of the output vector
c. Updating the weights in the input layer corresponding to the coordinates by using a backpropagation algorithm

ii. During backward inference phase the weights in the input layer corresponding to the coordinates are trained and the rest of the weights in the network are frozen (based on the preceding training phase outcome)

Example 4A may include the method of examples 1A and 2A or some other example herein, wherein the CI-NN utilizes the fully connected Recursive Neural Network (RNN) architecture with a feedback link

a. The extracted features are supplied to the CI-NN and not updated during the recursion
b. The updated coordinates at the output are then supplied to the input to perform a single iteration in the RNN
c. The weights in a fully connected architecture represent the gradients of the function of the coordinates, which are updated from one iteration to another
d. The weights in a fully connected architecture are adapted based on the LOS/NLOS classification soft or hard decision

Example 5A may include the method of examples 1A, 2A, and 4A or some other example herein, wherein the CI-NN is implemented as

a. The distance-based CI-NN
b. The distance difference-based CI-NN
c. The angle-based CI-NN

Example 6A may include the method of examples 1A and 3A or some other example herein, wherein the CI-NN utilizes fully connected network architecture

a. The weights in the input layer correspond to the coordinates and updated based on the backpropagation recursion
b. The weights in the second layer in a fully connected architecture are adapted based on the LOS/NLOS classification soft and hard decision

Example 7A may include the method of example 1A, 3A, and 6A, or some other example herein, wherein the CI-NN is implemented as

a. The distance-based CI-NN
b. The distance difference-based CI-NN
c. The angle-based CI-NN

Example 8A includes a method related to user positioning in a cellular network, wherein the method comprises: extracting, using a first neural network (NN), one or more features related to one or more transmission reception points (TRPs) of the cellular network; aggregating, by a second NN, the one or more features; and providing, by a third NN, an indication of the one or more features to the first NN.
Example 9A includes the method of example 8A, and/or some other example herein, wherein the first NN is a feature extraction NN (FE-NN).
Example 10A includes the method of any of examples 8A-9A, and/or some other example herein, wherein the second NN is a coordinate inference network (CI-NN) with feedforward inference.
Example 11A includes the method of any of examples 8A-10A, and/or some other example herein, wherein the third NN is a coordinate inference network (CI-NN) with backward inference.
Example 12A includes the method of any of examples 8A-11A, and/or some other example herein, wherein two or more of the first, second, and third NNs are elements of a same NN.
Example Z01A may include an apparatus comprising means to perform one or more elements of a method described in or related to any of examples 1A-12A, or any other method or process described herein.
Example Z02A may include one or more non-transitory computer-readable media comprising instructions to cause an electronic device, upon execution of the instructions by one or more processors of the electronic device, to perform one or more elements of a method described in or related to any of examples 1A-12A, or any other method or process described herein.
Example Z03A may include an apparatus comprising logic, modules, or circuitry to perform one or more elements of a method described in or related to any of examples 1A-12A, or any other method or process described herein.
Example Z04A may include a method, technique, or process as described in or related to any of examples 1A-12A, or portions or parts thereof.

Example Z05A may include an apparatus comprising: one or more processors and one or more computer-readable media comprising instructions that, when executed by the one or more processors, cause the one or more processors to perform the method, techniques, or process as described in or related to any of examples 1A-12A, or portions thereof.

Example Z06A may include a signal as described in or related to any of examples 1A-12A, or portions or parts thereof.

Example Z07A may include a datagram, packet, frame, segment, protocol data unit (PDU), or message as described in or related to any of examples 1A-12A, or portions or parts thereof, or otherwise described in the present disclosure.

Example Z08A may include a signal encoded with data as described in or related to any of examples 1A-12A, or portions or parts thereof, or otherwise described in the present disclosure.

Example Z09A may include a signal encoded with a datagram, packet, frame, segment, protocol data unit (PDU), or message as described in or related to any of examples 1A-12A, or portions or parts thereof, or otherwise described in the present disclosure.

Example Z10A may include an electromagnetic signal carrying computer-readable instructions, wherein execution of the computer-readable instructions by one or more processors is to cause the one or more processors to perform the method, techniques, or process as described in or related to any of examples 1A-12A, or portions thereof.

Example Z11A may include a computer program comprising instructions, wherein execution of the program by a processing element is to cause the processing element to carry out the method, techniques, or process as described in or related to any of examples 1A-12A, or portions thereof.

Example Z12A may include a signal in a wireless network as shown and described herein.

Example Z13A may include a method of communicating in a wireless network as shown and described herein.

Example Z14A may include a system for providing wireless communication as shown and described herein.

Example Z15A may include a device for providing wireless communication as shown and described herein.

Example 1B is an apparatus for a New Radio (NR) User Equipment (UE), the apparatus including: a radio frequency (RF) circuitry; one or more processors coupled the RF circuitry and configured to obtain an input vector and implement a feature extraction network to extract a plurality of wireless network parameters using the input vector; and provide the plurality of extracted wireless network parameter to a coordinate inference network.

Example 2B is the subject matter of apparatus of Example 1B, wherein to implement the feature extraction network can include to: implement, for each of one or transmission reception points (TRPs) associated with one or more gNBs in communication with the NR LTE, a plurality of convolutional neural networks, wherein each convolutional neural network configured to extract and output at least one of the plurality of wireless network parameters.

Example 3B the subject matter of Example 2B, wherein each convolutional neural network can use as input a portion of the input vector associated with the TRP associated with the convolutional neural network, the convolutional neural network including: one or more convolution layers, one or more max-pooling layers, and one or more flattening layers.

Example 4B is the subject matter of any of Examples 1B to 3B, wherein the one or more processors can be configured to receive one or more downlink signals and configured to obtain the input vector from the one or more downlink reference signals.

Example 5B is the subject matter of any of Examples 1B to 4B, wherein the input vector can include one or more of the following parameters: one or more channel impulse responses, one or more channel frequency response, one or more receive waveforms in time domain, and/or one or more receive waveforms in frequency domain.

Example 6B is the subject matter of any of Examples 1B to 5B, wherein the plurality of extracted wireless network parameters can include: a receive time value, azimuth and zenith angles of departure, and/or a line-of-sight/non-line-of-sight indication.

Example 7B is the subject matter of any of Examples 1B to 6B, wherein the feature extraction network can be trained separately from the coordinated inference network using a local training set.

Example 8B is the subject matter of any of Examples 1B to 6B, and wherein the feature extraction network and the coordinate inference network can be trained together as one network by using a common training set.

Example 9B is the subject matter of any of Examples 1B to 8B, wherein the one or more processors can be further configured to implement the coordinate inference network, including the one or more processors to: process the extracted wireless network parameters to determine one or more additional wireless network parameters, and perform a coordinate inference estimation using the extracted wireless network parameters and the one or more additional wireless network parameters to determine the coordinates for a user position associated with the wireless device.

Example 10B is the subject matter of Example 9B, wherein to perform the coordinate inference estimation can include to implement a neural network using the extracted wireless network parameters and the aggregated wireless network parameters as input to determine the coordinates for a user position.

Example 11B is the subject matter of any of Examples 1B to 8B, wherein the coordinated inference network can be located at a gNodeB, and wherein to provide the extracted wireless network parameters to the coordinated inference network includes to provide the extracted wireless network parameters to the gNodeB.

Examples 12B is the subject matter of any of Examples 1B to 8B, wherein the coordinated inference network can be located at a location management function (LMF), and wherein to provide the extracted wireless network parameters to the LMF can include to provide the LMF or a device operably coupled to the LMF.

Example 13B is the subject matter of any of Examples 1B to 12B, wherein the wireless communication device can be the LTE, a NR evolved Node B (gNodeB), or a location management function (LMF).

Example 1C is an apparatus for wireless communication, the apparatus including: an radio frequency (RF) interface; one or more processors coupled the RF interface and configured to determine a position in a cellular network comprising to:

obtain a plurality of wireless network parameters; implement a coordinate inference neural network using the plurality of wireless network parameters as input to determine position coordinates of the New Radio User Equipment (NR LTE).

Example 2C is the subject matter of Example 1C, wherein the coordinate inference neural network may use a feedforward inference to determine the position coordinates, and wherein weights and biases of the coordinate inference neural network are trained using a backward recursion.

Example 3C is the subject matter of Example 2C, wherein the coordinate inference neural network may include a recursive neural network (RNN) configured to iteratively output coordinates, wherein an input for each iteration comprises output coordinates of any previous iteration and the wireless network parameters, and wherein weights of the RNN represent gradients of a position function and are updated for from one iteration to another.

Example 4C is the subject matter of Example 3C, wherein the coordinate inference neural network may be a distance based and the network wireless parameters used as input comprise distance measurements between the LTE and a plurality of transmission reception points (TRPs).

Example 5C is the subject matter of Example 3C, wherein the coordinate inference neural network may be a distance difference based and the network wireless parameters used as input comprise a distance difference function between a distance between the UE and a TRP and a distance between the UE and a reference TRP.

Example 6C is the subect matter of Example 3C, wherein the coordinate inference neural network may be an angle based and the network wireless parameters used as input comprise angle measurements between the LTE and a plurality of transmission reception points (TRPs).

Example 7C is the subject matter of any of Examples 2C to 6C, wherein the coordinate inference neural network may further include: a fully connected artificial neural network (FC-ANN) configured to output the position coordinates by applying weights to coordinates output by the RNN wherein the weights are determined from a differential matrix evaluated at the intermediate coordinates and an inverse covariance matrix, wherein the weights of the FC-ANN are updated during feedforward recursion.

Example 8C is the subject matter of Example 1C, wherein the one or more processors may be configured to implement the coordinate inference neural network with backward inference, and wherein weights and biases of the coordinate inference neural network is trained using a backward recursion.

Example 9C is the subject matter of Example 8C, wherein during a training phase of the coordinate inference neural network weights in an input layer of the coordinate inference neural network and the rest of the weights in the coordinate network inference network can be trained, and wherein the weights in the input layer of the coordinate inference neural network are updated using a backpropagation algorithm.

Example 10C is the subject matter of Example 9C, wherein during a backward inference to determine the position coordinates for the LTE, the weights in the input layer corresponding the coordinates can be trained and the rest of the weights are frozen to values of the training phase.

Example 11C is the subject matter of any of Examples 8C to 10C wherein for the backward inference the neural network may be configured to determine position coordinates of the LTE using from output layer including obtained wireless network parameters.

Example 12C is the subject matter of any of Examples 1C to 11C, the wherein the wireless network parameters may include a receive time value between the LTE and one or more TRPs, azimuth and zenith angles of departure and/or arrival ($\varphi l, \theta l$), a line-of-sight/non-line-of-sight (LOS/NLOS) indicator, and/or one or more set of coordinates corresponding to one or more transmission reception points TRPs.

Exampel 13C may inlcude the subject matter of any of Examples 1C to 12C, wherein the one or more processors configured to determine the position coordinates comprises to implement a feature extraction network comprising to: extract the network wireless network parameters and provide as input to the coordinate inference neural network.

Example 1D may include an apparatus comprising: one or more processors and one or more computer-readable media comprising instructions that, when executed by the one or more processors, cause the one or more processors to perform a method, techniques, or process as described in or related to any of examples or portions thereof.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

**Abbreviations**

Unless used differently herein, terms, definitions, and abbreviations may be consistent with terms, definitions, and abbreviations defined in 3GPP TR 21.905 v16.0.0 (2019-06). For the purposes of the present document, the following abbreviations may apply to the examples and embodiments discussed herein.

**Terminolo2v**

For the purposes of the present document, the following terms and definitions are applicable to the examples and embodiments discussed herein.

The term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, and/or transferring digital data. Processing circuitry may include one or more processing cores to execute instructions and one or more memory structures to store program and data information. The term "processor circuitry" may refer to one or more application processors, one or more baseband processors, a physical central processing unit (CPU), a single-core processor, a dual-core processor, a triple-core processor, a quad-core processor, and/or any other device capable of executing or otherwise operating computer-executable instructions, such as program code, software modules, and/or functional processes. Processing circuitry may include more hardware accelerators, which may be microprocessors, programmable processing devices, or the like. The one or more hardware accelerators may include, for example, computer vision (CV) and/or deep learning (DL) accelerators. The terms "application circuitry" and/or "baseband circuitry" may be considered synonymous to, and may be referred to as, "processor circuitry."

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, and/or the like.

The term "user equipment" or "LTE" as used herein refers to a device with radio communication capabilities and may describe a remote user of network resources in a communications network. The term "user equipment" or "LTE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "LTE" may include any type of wireless/wired device or any computing device including a wireless communications interface.

The term "network element" as used herein refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, RAN device, RAN node, gateway, server, virtualized VNF, NFVI, and/or the like.

The term "computer system" as used herein refers to any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource.

The term "resource" as used herein refers to a physical or virtual device, a physical or virtual component within a computing environment, and/or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" as used herein refers to a connection between two devices through a RAT for the purpose of transmitting and receiving information.

The terms "instantiate," "instantiation," and the like as used herein refers to the creation of an instance. An "instance" also refers to a concrete occurrence of an object, which may occur, for example, during execution of program code.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

The term "information element" refers to a structural element containing one or more fields. The term "field" refers to individual contents of an information element, or a data element that contains content.

The term "SMTC" refers to an SSB-based measurement timing configuration configured by *SSB-MeasurementTimingConfiguration.*

The term "SSB" refers to an SS/PBCH block.

The term "a "Primary Cell" refers to the MCG cell, operating on the primary frequency, in which the UE either performs the initial connection establishment procedure or initiates the connection re-establishment procedure.

The term "Primary SCG Cell" refers to the SCG cell in which the UE performs random access when performing the Reconfiguration with Sync procedure for DC operation.

The term "Secondary Cell" refers to a cell providing additional radio resources on top of a Special Cell for a UE configured with CA.

The term "Secondary Cell Group" refers to the subset of serving cells comprising the PSCell and zero or more secondary cells for a LTE configured with DC.

The term "Serving Cell" refers to the primary cell for a LTE in RRC_CONNECTED not configured with CA/DC there is only one serving cell comprising of the primary cell.

The term "serving cell" or "serving cells" refers to the set of cells comprising the Special Cell(s) and all secondary cells for a UE in RRC_CONNECTED configured with CA/.

The term "Special Cell" refers to the PCell of the MCG or the PSCell of the SCG for DC operation; otherwise, the term "Special Cell" refers to the Pcell.

All acronyms defined in the above description additionally hold in all claims included herein.

**Claims**

1. An apparatus for a wireless communicator device, the apparatus comprising:

radio frequency (RF) circuitry;
one or more processors coupled the RF circuitry and configured to

obtain an input vector and implement a feature extraction network to extract a plurality of wireless network parameters using the input vector;
provide the plurality of extracted wireless network parameter to a coordinate inference network to determine position coordinates of a New Radio (NR) User Equipment (LTE),

wherein to implement the feature extraction network comprises to:
implement, for each of one or transmission reception points (TRPs) associated with one or more gNBs in communication with the NR UE, a plurality of convolutional neural networks, wherein each convolutional neural network configured to extract and output at least one of the plurality of wireless network parameters.

2. The apparatus of claim 1,
wherein each convolutional neural network uses as input a portion of the input vector associated with the TRP associated with the convolutional neural network, the convolutional neural network comprising:

one or more convolution layers,
one or more max-pooling layers, and
one or more flattening layers.

3. The apparatus of any of claims 1 to 2,
wherein the one or more processors are configured to receive one or more downlink signals and configured to obtain the input vector from the one or more downlink reference signals.

4. The apparatus of any of claims 1 to 3,
wherein the input vector comprises one or more of the following parameters:

one or more channel impulse responses,
one or more channel frequency response,
one or more receive waveforms in time domain, and/or
one or more receive waveforms in frequency domain.

5. The apparatus of any of claims 1 to 4, wherein the plurality of extracted wireless network parameters comprises:

a receive time value,
azimuth and zenith angles of departure, and/or
a line-of-sight/non-line-of-sight indication.

6. The apparatus of any of claims 1 to 5,

wherein the feature extraction network is trained separately from the coordinated inference network using a local training set, or.
wherein the feature extraction network and the coordinate inference network are trained together as one network by using a common training set.

7. The apparatus of any of claims 1 to 6,
wherein the one or more processors are further configured to implement the coordinate inference network, comprising the one or more processors to:

process the extracted wireless network parameters to determine one or more additional wireless network parameters, and
perform a coordinate inference estimation using the extracted wireless network parameters and the one or more additional wireless network parameters to determine the position coordinates associated with the wireless device.

8. The apparatus of any of claims 1 to 7,

wherein the coordinated inference network is located at a gNodeB, and
wherein to provide the extracted wireless network parameters to the coordinated inference network comprises to provide the extracted wireless network parameters to the gNodeB.

9. The apparatus of any of claims 1 to 7,

wherein the coordinated inference network is located at a location management function (LMF), and
wherein to provide the extracted wireless network parameters to the LMF comprises to provide the LMF or a device operably coupled to the LMF.

10. An apparatus for wireless communication, the apparatus comprising:

an radio frequency (RF) interface;
one or more processors coupled the RF interface and configured to determine a position in a cellular network comprising to:

obtain a plurality of wireless network parameters;
implement a coordinate inference neural network using the plurality of wireless network parameters as input to determine position coordinates of the New Radio User Equipment (NR UE).

11. The apparatus of claim 10,

wherein the coordinate inference neural network uses a feedforward inference to determine the position coordinates,
wherein weights and biases of the coordinate inference neural network are trained using a backward recursion,
wherein the coordinate inference neural network comprises a recursive neural network (RNN) configured to iteratively output coordinates, wherein an input for each iteration comprises output coordinates of any previous iteration and the wireless network parameters, and
wherein weights of the RNN represent gradients of a position function and are updated for from one iteration to another.

12. The apparatus of claim 11,

wherein the coordinate inference neural network is distance based and the network wireless parameters used as input comprise distance measurements between the LTE and a plurality of transmission reception points (TRPs), or
wherein the coordinate inference neural network is a distance difference based and the network wireless parameters used as input comprise a distance difference function between a distance between the LTE and a TRP and a distance between the LTE and a reference TRP, or
wherein the coordinate inference neural network is angle based and the network wireless parameters used as input comprise angle measurements between the LTE and a plurality of transmission reception points (TRPs).

13. The apparatus of any of claims 11 to 12,
wherein the coordinate inference neural network further comprises:
a fully connected artificial neural network (FC-ANN) configured to output the position coordinates by applying weights to coordinates output by the RNN wherein the weights are determined from a differential matrix evaluated at the intermediate coordinates and an inverse covariance matrix, wherein the weights of the FC-ANN are updated during feedforward recursion.

14. The apparatus of claim 10,

wherein the one or more processors are configured to implement the coordinate inference neural network with backward inference, and
wherein weights and biases of the coordinate inference neural network is trained using a backward recursion.

15. The apparatus of claim 14,

wherein during a training phase of the coordinate inference neural network weights in an input layer of the coordinate inference neural network and the rest of the weights in the coordinate network inference network are trained, and

wherein the weights in the input layer of the coordinate inference neural network are updated using a backpropagation algorithm.

100

Serving
120a

gNB $^{125}$
(TRPs)

Neighbor    120b

gNB
(TRPs)

gNB $^{125}$
(TRPs)

UE $^{110}$

LMF
130

gNB – LMF: TS 38.455 NR Positioning Protocol A

UE – LMF: TS 37.355 LTE Positioning Protocol

gNB – UE: TS
38.331 Radio
Resource Control

FIG. 1

# NW-based positioning

FIG. 2

EP 4 231 041 A2

FIG. 3

# UE-based positioning

## DL positioning

Neighbor gNBs 120b

*TRP coordinates*

Serving gBN (TRPs) 125

LMF 130

DL-PRS

*Parameters estimation; Coordinates inference*

UE 110

*TRP coordinates*

FIG. 4

FIG. 5

FIG. 6

FIG. 7

FIG. 8

FIG. 9

FIG. 10

FE   1000   CI

Features extraction

Coordinates inference

EP 4 231 041 A2

51

Output vector - y(i)

Coordinates Inference (CI)
FC-ANN

1130

Flatten layer

1150

GF vector -
GF(i)

$(N_{gNB}-1)^{th}$ gNB

120

$1^{st}$ gNB

120

$0^{th}$ gNB

120

$(N_{TRP}-1)^{th}$ TRP

$0^{th}$ TRP

TRP

Features Extraction (FE)
- CNN

$0^{th}$ TRP
CNN subnet

120

$1^{st}$ TRP
CNN subnet

$(N_{TRP}-1)^{th}$ TRP
CNN subnet

1100

FIG. 11

Input vectors - v(i)

1200

$(N_{gNB}\text{-}1)^{th}$ gNB

$1^{st}$ gNB

$0^{th}$ gNB

120

Location Management
Function - LMF

130

| $0^{th}$ TRP |
| --- |

| $1^{st}$ TRP |
| --- |

$\vdots$

| $(N_{TRP}\text{-}1)^{th}$ TRP |
| --- |

Input vectors - v(i)

| $0^{th}$ TRP CNN subnet |
| --- |

| $1^{st}$ TRP CNN subnet |
| --- |

$\vdots$

| $(N_{TRP}\text{-}1)^{th}$ TRP CNN subnet |
| --- |

GF vector - GF(i)

CI
(FC-ANN)

Output vector - y(i)

DL-PRS     UL-SRS

$(N_{UE}\text{-}1)^{th}$ UE

$1^{st}$ UE

$0^{th}$ UE

Input vectors - v(i)

| $0^{th}$ TRP CNN subnet |
| --- |

| $1^{st}$ TRP CNN subnet |
| --- |

$\vdots$

| $(N_{TRP}\text{-}1)^{th}$ TRP CNN subnet |
| --- |

110

GF vector - GF(i)

Group of
UEs/PRUs

FIG. 12

FIG. 13

FIG. 14

FIG. 15

FIG. 16

FIG. 17

EP 4 231 041 A2

FIG. 18

FIG. 19

2000

$\mathbf{x}^{(m)}$

DB-CI Layer

2010

r

$\mathbf{x}^{(m+1)}$

FIG. 20

2100

$x^{(0)}$ → DB-CI Layer 2110 → $x^{(1)}$ → DB-CI Layer 2110 → $x^{(2)}$ . . . $x^{(N-2)}$ → DB-CI Layer 2110 → $x^{(N-1)}$

r

r

r

Skip connection

FIG. 21

FIG. 22

2300

$\mathbf{x}^{(m)}$

$\mathbf{x}^{(m+1)}$

DDB-CI Layer

$\Delta \mathbf{r}$

FIG. 23

2400

$X^{(0)}$ →

$\Delta r$ →

[ DDB-CI Layer ] → $X^{(1)}$ → [ DDB-CI Layer ] → $X^{(2)}$ . . . $X^{(N-2)}$ → [ DDB-CI Layer ] → $X^{(N-1)}$

$\Delta r$

$\Delta r$

Skip connection

FIG. 24

FIG. 25

2600

$x^{(m)}$

AB-CI Layer

2610

$\alpha$

$x^{(m+1)}$

FIG. 26

2700

FIG. 27

2800

FIG. 28

FIG. 29a

FIG. 29b

EP 4 231 041 A2

FIG. 30b

FIG. 30a

FIG. 31

FIG. 32b

FIG. 32a

**FIG. 33**

3400

**UE 3402**

**Host platform 3408**

Application Processing Circuitry 3412

**Modem platform 3410**

Protocol Processing Circuitry 3414

Digital Baseband Circuitry 3416

Transmit Circuitry 3418

Receive Circuitry 3420

Radio Frequency Circuitry 3422

RFFE 3424

3426

3406

**AN 3404**

**Host platform 3428**

Application Processing Circuitry 3432

**Modem platform 3430**

Protocol Processing Circuitry 3434

Digital Baseband Circuitry 3436

Transmit Circuitry 3438

Receive Circuitry 3440

RF Circuitry 3442

RFFE 3444

3446

**FIG. 34**

**FIG. 35**

extracting, using a first neural network (NN), one or more features related to one or more transmission reception points (TRPs) of the cellular network
**3601**

aggregating, by a second NN, the one or more features
**3602**

providing, by a third NN, an indication of the one or more features to the first NN
**3603**

# FIG. 36

extracting two or more parameters from a received signal or channel impulse
response
3701

aggregating the two or more parameters
3702

performing, based on the aggregated two or more parameters, coordinate
inference/estimation
3703

# FIG. 37

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63311325

- US 63311728

**Non-patent literature cited in the description**

- NR Positioning Protocol A (NRPPa). *3GPP TS 38.455,* September 2020
- LTE Positioning Protocol (LPP). *3GPP TS 37.355,* July 2020

- Radio Resource Control (RRC) protocol specification. *3GPP TS 38.331,* March 2021